# EUROPÄISCHE PATENTSCHRIFT

(11) **EP 3 932 124 B1**
(45) Veröffentlichungstag und Bekanntmachung des Hinweises auf die Patenterteilung: **18.09.2024**
(21) Anmeldenummer: 20707255.4
(22) Anmeldetag: 26.02.2020
(51) Int. Cl.: H04W 56/00, H04B 1/713, H04Q 9/00, H04W 4/80

(54) **VERFAHREN UM TEILNEHMER IN SENSORNETZWERKE ZU KOORDINIEREN**
METHOD FOR COORDINATING USERS IN SENSOR NETWORKS
PROCÉDÉ DE COORDINATION D'UTILISATEURS DANS DES RÉSEAUX DES CAPTEURS

(30) Priorität: 28.02.2019 DE 102019202756
(43) Veröffentlichungstag der Anmeldung: 05.01.2022
(73) Patentinhaber: Fraunhofer-Gesellschaft zur Förderung der angewandten Forschung e.V., 80686 München (DE); Diehl Metering GmbH, 91522 Ansbach (DE)
(72) Erfinder: KILIAN, Gerd, 91058 Erlangen (DE); BERNHARD, Josef, 91058 Erlangen (DE); KAUPPERT, Thomas, 90455 Nürnberg (DE); PETKOV, Hristo, 90425 Nürnberg (DE); GOTTSCHALK, Klaus, 90610 Winkelhaid (DE); WECHSLER, Johannes, 91058 Erlangen (DE); KNEISSL, Jakob, 91058 Erlangen (DE); SOLLER, Dominik, 91058 Erlangen (DE); ERETH, Stefan, 91058 Erlangen (DE)
(74) Vertreter: Zimmermann, Tankred Klaus
(86) Internationale Anmeldenummer: PCT/EP2020/054979
(87) Internationale Veröffentlichungsnummer: WO 2020/173976

(56) Entgegenhaltungen:
- DE-A1- 102016 220 883
- DE-A1- 102017 206 258
- US-A1- 2007 281 658
- US-A1- 2013 028 103

## Beschreibung

Ausführungsbeispiele der vorliegenden Erfindung beziehen sich auf ein drahtloses Kommunikationssystem mit einer Vielzahl von unkoordiniert sendenden Teilnehmern, und im speziellen, auf die Übertragung einer Multicast-Nachricht (Punkt-zu-Mehrpunkt-Nachricht) in einem solchen Kommunikationssystem. Manche Ausführungsbeispiele beziehen sich auf ein Verfahren um Teilnehmer in Sensornetzwerke zu koordinieren.

In typischen Funknetzten (oder drahtlosen Kommunikationssystemen), wie z.B. GSM (GSM = Global System for Mobile Communications), gibt es eine koordinierende Instanz, welche den Teilnehmern des Funknetzes bei Bedarf Funkressourcen zur Verfügung stellt, die ausschließlich dem jeweiligen Teilnehmer zur Verfügung stehen.

Dadurch kann sichergestellt werden, dass jeder Teilnehmer seine Daten in einer exklusiv für ihn reservierten Funkressource übertragen kann. Dadurch werden Interferenzen zwischen den Teilnehmern eines Funknetzes vermieden und damit der Durchsatz maximiert.

Die Koordination der Teilnehmer zu Funkressourcen geschieht in solchen Funknetzen in der Regel durch sog. Baken (engl. beacon), auf welchen die Teilnehmer des Funknetzes hören. Durch die Signalisierung der Funkressourcen in diesen Baken ist es erforderlich, dass alle Teilnehmer diese empfangen und auswerten, um anschließend Daten empfangen oder senden zu können. Der Stromverbrauch eines Teilnehmers, welcher nur selten auf den Kanal zugreift, ist somit sehr hoch.

Ein anderer Ansatz ist dagegen ein nicht-koordiniertes Funknetz, indem die Teilnehmer ihre Daten konkurrenzbasiert (engl. contension based) an den Empfänger übertragen. Somit muss nicht dauerhaft eine Bake empfangen werden, welche signalisiert, wann welcher Teilnehmer auf welcher Frequenz senden darf. Dadurch reduziert sich der Stromverbrauch der Teilnehmer, da diese nur bei Bedarf aktiviert werden müssen.

Dieses Verfahren hat jedoch den Nachteil, dass es zu Interferenzen zwischen den Teilnehmern des Funknetzes kommen kann. Dieser Nachteil kann jedoch durch den Einsatz von "Telegram Splitting Multiple Access" (TSMA) [4] vermindert werden, wodurch sich ähnliche Durchsätze wie bei einem koordinierten System erzielen lassen.

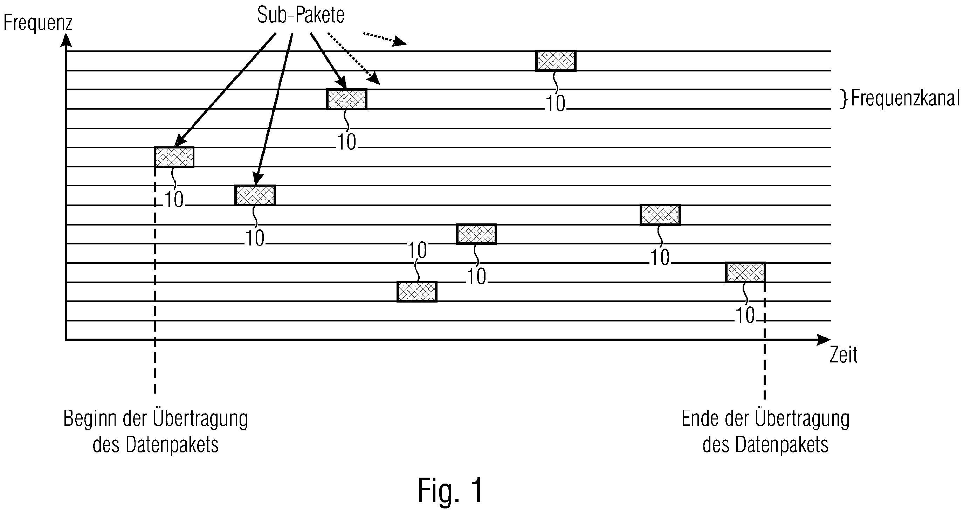

Bei "Telegram Splitting Multiple Access" (TSMA) wird die Übertragung einer Nachricht (Datenpaket) in eine Mehrzahl kurzer Sub-Datenpakete (Bursts) unterteilt, zwischen denen sich jeweils unterschiedlich lange, übertragungsfreie Zeitintervalle befinden. Die Sub-Datenpakete sind dabei nach einem Pseudo-Zufallsprinzip sowohl über die Zeit wie auch über die zur Verfügung stehenden Frequenzkanäle verteilt, wie dies in Fig. 1 beispielhaft gezeigt ist.

Im Detail zeigt Fig. 1 in einem Diagramm eine Belegung eines Frequenzbands eines TSMA-basierten Kommunikationssystems bei der Übertragung eines auf eine Mehrzahl von Sub-Datenpaketen 10 aufgeteilten Datenpakets, wobei die Mehrzahl von Sub-Datenpaketen in der Zeit und Frequenz verteilt sind. Dabei beschreibt in Fig. 1 die Ordinate die Frequenz (Frequenzkanäle) und die Abszisse die Zeit. Mit anderen Worten, Fig. 1 zeigt das Prinzip der Datenübertragung nach dem TSMA-Verfahren.

Es wurde in [1] gezeigt, dass mit dem TSMA-Verfahren eine größere Kapazität in der Datenübertragung erzielt werden kann als bei Übertragung eines Datenpakets in einem zusammenhängenden Block, d.h. ohne Aufteilung in Sub-Datenpakete 10. Um eine möglichst große Systemkapazität zu erhalten, sollten möglichst viele unterschiedliche Zeit- und/oder Frequenzsprungmuster (engl. hopping pattern) eingesetzt werden [3]. Die Gesamtzahl der verwendeten Zeit- und/oder Frequenzsprungmuster sollte dabei endlich sein und einem vorab bekannten Vorrat an Zeit- und/oder Frequenzsprungmustern entstammen.

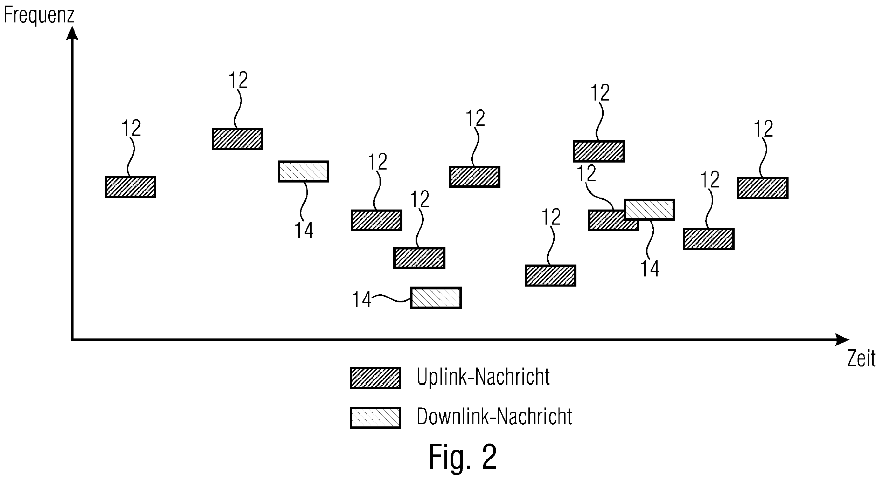

Durch den konkurrenzbasierten Zugriff auf den Kanal zu zufälligen Zeitpunkten entsteht eine asynchrone Übertragung, wie dies beispielhaft in Fig. 2 für ein Kommunikationssystem ohne TSMA gezeigt ist.

Im Detail zeigt Fig. 2 in einem Diagramm eine Belegung eines Frequenzbands eines konkurrenzbasierten Kommunikationssystems bei der Übertragung mehrerer Uplink-Nachrichten 12 und mehrerer Downlink-Nachrichten 14. Dabei beschreibt in Fig. 2 die Abszisse die Frequenz und die Ordinate die Zeit. Mit anderen Worten, Fig. 2 zeigt ein Schema eines Übertragungskanals in einem nicht koordinierten Kommunikationssystem.

In der Regel gibt es in einem nicht koordinierten Kommunikationssystem mehrere Teilnehmer (z.B. Endpunkte), welche mit einer Basisstation kommunizieren. Dabei handelt es sich bei der Übertragung einer Nachricht von einem Teilnehmer zu der Basisstation um den Uplink und in umgekehrter Richtung um den Downlink.

Aus Energieeffizienzgründen schalten die Teilnehmer ihr Sendeempfangsmodul in der Regel nur dann ein, wenn sie eine Nachricht versenden wollen. Der Empfang einer der Downlink-Nachrichten 14, wie sie in Fig. 2 gezeigt sind, ist somit nicht möglich.

In [4] wurde zur Lösung dieses Problems definiert, dass der Teilnehmer nach Aussendung einer Uplink-Nachricht eine fest definierte Zeit wartet, um dann ein Empfangsfenster für eine Downlink-Nachricht zu öffnen. Die Basisstation kann eine Downlink-Nachricht somit nur zu einem bestimmen Zeitpunkt an diesen Teilnehmer senden.

Typischerweise wird der Downlink zu den Teilnehmern, bei welchen die unkoordinierte Übertragung eingesetzt wird, für Nachrichten genutzt, die an mehrere Teilnehmer übermittelt werden soll, z. B. Software-Updates oder Time-Sync-Befehle.

Durch den asynchronen Netzwerkansatz aus [4] (konkurrenzbasierter Zugriff) muss nun jedem Teilnehmer die Downlink-Nachricht separat mitgeteilt werden. Dies stellt gerade in großen Funknetzwerken, in denen es sehr viele Teilnehmer gibt, ein Problem dar, da bei sehr vielen Teilnehmern es sehr lange dauern würde, bis alle Teilnehmer die Daten erhalten haben.

In koordinierten Kommunikationssystemen ist möglich, in einer Bake (engl. beacon) eine Punkt-zu-Mehrpunkt-Nachricht (Multicast-Nachricht) von der Basisstation an die Teilnehmer zu signalisieren. Alle Teilnehmer, welche die Bake empfangen haben, können danach die entsprechenden Ressourcen der Multicast-Nachricht ebenfalls empfangen.

Die DE 10 2016 220883 A1 bezieht sich auf ein Übertragungsverfahren zur drahtlosen Übertragung von Daten in einem Kommunikationssystem. Das Verfahren umfasst einen Schritt des Übertragens der Daten unter Verwendung eines Frequenzsprungmusters und/oder Zeitsprungmusters zeitlich synchronisiert zu einem Referenzsignal.

Die DE 10 2017 206258 A1 bezieht sich auf einen Sender, der Daten in Form von einer Gruppe von mindestens zwei Teil-Telegrammen, die zusammen die Daten aufweisen und die kürzer sind als ein einzelnes die Daten aufweisendes Telegramm, aussendet. Der Sender sendet die Gruppe der Teil-Telegramme gemäß einem Sprungmuster aus, das sich auf Zeitpunkte und/oder Sendefrequenzen der Aussendung der einzelnen Teil-Telegramme bezieht. Zudem sendet der Sender die Gruppe der Teil-Telegramme mehrfach und zumindest zweifach aus. Weiterhin bezieht sich die Erfindung auf einen Empfänger und entsprechende Verfahren.

Die WO 2019/015795 A1 bezieht sich auf Verfahren zum Verteilen von Daten, insbesondere Aktualisierungsprogrammdaten, in einem Kommunikationssystem.

Die WO 2017/167366 A1 bezieht sich auf eine optimierte Präambel und ein Verfahren zur interferenzrobusten Paketdetektion für Telemetrieanwendungen.

Der vorliegenden Erfindung liegt somit die Aufgabe zugrunde die Übertragung einer Punkt-zu-Mehrpunkt-Nachricht in einem Kommunikationssystem mit einer Vielzahl von unkoordiniert sendenden Teilnehmern zu ermöglichen.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Teilnehmer eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei der Teilnehmer ausgebildet ist, um Daten unkoordiniert in Bezug auf andere Teilnehmer und/oder einer Basisstation des Kommunikationssystems zu senden, wobei der Teilnehmer ausgebildet ist, um ein Synchronisationsdatenpaket einer Punkt-zu-Mehrpunkt-Datenübertragung einer Basisstation des Kommunikationssystems zu empfangen, wobei das Synchronisationsdatenpaket in einem vorgegebenen oder dem Teilnehmer bekannten Frequenzbereich des Frequenzbands des Kommunikationssystems übertragen wird, wobei der Teilnehmer ausgebildet ist, um basierend auf dem Synchronisationsdatenpaket ein zu dem Synchronisationsdatenpaket in der Zeit und/oder Frequenz referenziertes [z.B. synchronisiertes; z.B. mit einem vorgegebenen Zeit- und/oder Frequenzabstand und/oder Zeitsprungmuster und/oder Frequenzsprungmuster gesendetes] Nutzdatenpaket der Punkt-zu-Mehrpunkt-Datenübertragung zu empfangen.

Bei Ausführungsbeispielen kann das Nutzdatenpaket der Punkt-zu-Mehrpunkt-Datenübertragung aufgeteilt auf eine Mehrzahl von Teil-Nutzdatenpaketen übertragen werden, wobei die Mehrzahl von Teil-Nutzdatenpaketen jeweils einen Teil des Nutzdatenpakets aufweisen, und wobei die Mehrzahl von Teil-Nutzdatenpaketen entsprechend eines Zeit- und/oder Frequenzsprungmusters in der Zeit [z.B. über mehrere Zeitschlitze] und/oder Frequenz [z.B. über mehrere Frequenzkanäle] verteilt übertragen werden, wobei das Synchronisationsdatenpaket eine Information über das Zeit- und/oder Frequenzsprungmuster aufweist, wobei der Teilnehmer ausgebildet ist, um die Mehrzahl von Teil-Nutzdatenpaketen basierend auf der Information über das Zeit- und/oder Frequenzsprungmuster zu empfangen.

Bei Ausführungsbeispielen können die Mehrzahl von Teil-Nutzdatenpaketen entsprechend eines Frequenzsprungmusters [z.B. und optional Zeitsprungmusters] übertragen werden, wobei eine Empfangsbandbreite eines Empfängers des Teilnehmers zumindest um den Faktor 5 [z.B. um den Faktor 10] kleiner ist als eine Bandbreite der durch das Frequenzsprungmuster angegebenen Belegung [z.B. von Frequenzkanälen] des Frequenzbands.

Bei Ausführungsbeispielen kann der Teilnehmer ausgebildet sein, um eine Empfangsfrequenz des Empfängers des Teilnehmers basierend auf dem Frequenzsprungmuster [z.B. zu den jeweiligen durch das Zeitsprungmuster angegebenen Zeiten oder Zeitschlitze] auf die jeweiligen durch das Frequenzsprungmuster angegebenen Frequenzen oder Frequenzkanäle des Frequenzbands umzuschalten, um die Mehrzahl von Teil-Nutzdatenpaketen zu empfangen.

Bei Ausführungsbeispielen kann das Synchronisationsdatenpaket eine Synchronisationsinformation [z.B. eine Synchronisationssequenz] aufweisen, wobei der Teilnehmer ausgebildet ist, um sich [z.B. seinen Taktgeber und/oder Zeitgeber und/oder Frequenzgeber] auf die Synchronisationsinformation zu synchronisieren.

Bei Ausführungsbeispielen kann der Teilnehmer ausgebildet sein, um eine Uplink-Datenübertragung zu der Basisstation des Kommunikationssystems zu senden und um zeitlich synchronisiert zu der gesendeten Uplink-Datenübertragung eine Downlink-Datenübertragung von der Basisstation zu empfangen, wobei die Downlink-Datenübertragung eine Signalisierungsinformation aufweist, wobei der Teilnehmer ausgebildet ist, um basierend auf der Signalisierungsinformation das Synchronisationsdatenpaket der Punkt-zu-Mehrpunkt-Datenübertragung zu empfangen.

Bei Ausführungsbeispielen kann die Signalisierungsinformation eine Information über einen Zeitpunkt [z.B. Zeitschlitz] der Übertragung des Synchronisationsdatenpakets aufweisen.

Bei Ausführungsbeispielen kann die Signalisierungsinformation eine Information über den Frequenzbereich, in dem das Synchronisationsdatenpaket übertragen wird, aufweisen [z.B. so dass dem Teilnehmer der Frequenzbereich bekannt ist].

Bei Ausführungsbeispielen kann die Downlink-Datenübertragung ferner eine Taktgeberkorrekturinformation zur Korrektur einer Taktabweichung eines Taktgebers des Teilnehmers aufweisen, wobei der Teilnehmer ausgebildet ist, um eine Taktabweichung des Taktgebers basierend auf der Taktgeberkorrekturinformation zu korrigieren.

Bei Ausführungsbeispielen kann das Synchronisationsdatenpaket mehrfach ausgesendet werden, so dass eine Dauer der mehrfachen Aussendung des Synchronisationsdatenpakets größer oder gleich ist als ein maximal möglicher Zeitversatz zwischen dem Teilnehmer und der Basisstation.

Beispielsweise kann eine Zeitspanne zwischen Beginn der ersten Aussendung und Beginn der letzten Aussendung mindestens dem Zeitversatz zwischen Endpunkt und Basisstation entsprechen.

Bei Ausführungsbeispielen kann ein Empfangsfenster [z.B. zeitlicher Suchbereich] des Teilnehmers zum Empfang des Synchronisationsdatenpakets [z.B. bei einfacher oder mehrfacher Aussendung des Synchronisationsdatenpakets] größer sein als ein maximal möglicher Zeitversatz zwischen dem Teilnehmer und der Basisstation.

Bei Ausführungsbeispielen kann das Synchronisationsdatenpaket mehrfach ausgesendet werden, wobei der Teilnehmer ausgebildet ist, um das Synchronisationspaket unter Verwendung von zumindest zwei Empfangsfenstern zu empfangen [z.B. wobei die zwei Empfangsfenster zeitlich kürzer sein als ein maximaler Zeitversatz zwischen der Basisstation und dem Teilnehmer], wobei ein Abstand zwischen aufeinanderfolgenden Aussendungen der mehrfachen Aussendung des Synchronisationsdatenpakets und ein Abstand zwischen den zumindest zwei Empfangsfenstern des Teilnehmers teilerfremd sind.

Bei Ausführungsbeispielen kann das Synchronisationsdatenpaket mehrfach ausgesendet werden, wobei eine erste Aussendung des Synchronisationsdatenpakets und eine zweite Aussendung des Synchronisationsdatenpakets in der Zeit und/oder Frequenz verschobene Versionen voneinander sind.

Bei Ausführungsbeispielen kann das Synchronisationsdatenpaket wiederholt ausgesendet werden, wobei die wiederholten Aussendungen des Synchronisationsdatenpakets periodisch sind, wobei der Teilnehmer ausgebildet ist, um die Synchronisationsdatenpakete unter Ausnutzung der Periodizität der wiederholten Aussendungen der Synchronisationsdatenpakete [z.B. basierend auf einer zyklischen Korrelation] zu empfangen.

Bei Ausführungsbeispielen kann das Synchronisationsdatenpaket der Punkt-zu-Mehrpunkt-Datenübertragung aufgeteilt auf eine Mehrzahl von Teil-Synchronisationsdatenpaketen übertragen werden, wobei die Mehrzahl von Teil-Synchronisationsdatenpaketen jeweils einen Teil des Synchronisationsdatenpakets aufweisen, und wobei die Mehrzahl von Teil-Synchronisationsdatenpaketen entsprechend eines vorgegebenen oder dem Teilnehmer bekannten Zeit- und/oder Frequenzsprungmusters in der Zeit [z.B. über mehrere Zeitschlitze] und/oder Frequenz [z.B. über mehrere Frequenzkanäle] verteilt übertragen werden, wobei der Teilnehmer ausgebildet ist, um die Mehrzahl von Teil-Synchronisationsdatenpaketen basierend auf dem vorgegebenen oder dem Teilnehmer bekannten Zeit- und/oder Frequenzsprungmuster zu empfangen,

Bei Ausführungsbeispielen kann die Downlink-Datenübertragung eine Information über das Zeit- und/oder Frequenzsprungmuster des Synchronisationsdatenpakets aufweisen, [z.B. so dass dem Teilnehmer das Zeit- und/oder Frequenzsprungmuster des Synchronisationsdatenpakets bekannt ist].

Bei Ausführungsbeispielen können die Mehrzahl von Teil-Synchronisationsdatenpaketen entsprechend des Zeit- und/oder Frequenzsprungmusters des Synchronisationsdatenpakets innerhalb des vorgegebenen oder dem Teilnehmer bekannten Frequenzbereichs übertragen werden, wobei der vorgegebene oder dem Teilnehmer bekannte Frequenzbereich höchstens einer Empfangsbandbreite eines Empfängers des Teilnehmers entspricht.

Bei Ausführungsbeispielen können die Teil-Synchronisationsdatenpakete kanalcodiert sein, so dass nur eine Teilmenge der Mehrzahl von Teil-Synchronisationsdatenpaketen zur erfolgreichen Decodierung des Synchronisationsdatenpakets erforderlich ist, wobei der Teilnehmer ausgebildet ist, um zumindest ein Teil der Mehrzahl von Teil-Synchronisationsdatenpaketen zu empfangen und zu decodieren, um das Synchronisationsdatenpaket zu erhalten.

Bei Ausführungsbeispielen kann der vorgegebene oder dem Teilnehmer bekannte Frequenzbereich ein oder mehrere Teilfrequenzbereiche aufweisen, wobei der vorgegebene oder dem Teilnehmer bekannte Frequenzbereich breiter ist als eine Empfangsbandbreite eines Empfängers des Teilnehmers, wobei entsprechend des Zeit- und/oder Frequenzsprungmusters des Synchronisationsdatenpakets pro Teilfrequenzbereich innerhalb des vorgegebenen Frequenzbereichs mindestens so viele der Mehrzahl von Teil-Synchronisationsdatenpaketen übertragen werden, wie für die erfolgreiche Decodierung des Synchronisationsdatenpakets erforderlich sind, wobei jeder der ein oder mehreren Teilfrequenzbereiche höchstens der Empfangsbandbreite des Empfängers des Teilnehmers entspricht.

Bei Ausführungsbeispielen können die Mehrzahl von Teil-Synchronisationsdatenpaketen mehrfach ausgesendet werden, so dass eine Dauer der mehrfachen Aussendung der Mehrzahl von Teil-Synchronisationsdatenpaketen größer oder gleich ist als ein maximal möglicher Zeitversatz zwischen dem Teilnehmer und der Basisstation.

Beispielsweise kann eine Zeitspanne zwischen Beginn der ersten Aussendung und Beginn der letzten Aussendung mindestens dem Zeitversatz zwischen Endpunkt und Basisstation entsprechen.

Bei Ausführungsbeispielen kann ein Empfangsfenster des Teilnehmers zum Empfang der Mehrzahl von Teil-Synchronisationsdatenpaketen [z.B. bei einfacher oder mehrfacher Aussendung der Mehrzahl von Teil-Synchronisationsdatenpaketen] größer sein als ein maximal möglicher Zeitversatz zwischen dem Teilnehmer und der Basisstation.

Bei Ausführungsbeispielen können die Mehrzahl von Teil-Synchronisationsdatenpaketen mehrfach ausgesendet werden, wobei der Teilnehmer ausgebildet ist, um die Mehrzahl von Teil-Synchronisationsdatenpaketen unter Verwendung von zumindest zwei Empfangsfenstern zu empfangen [z.B. wobei die zwei Empfangsfenster zeitlich kürzer sein als ein maximaler Zeitversatz zwischen der Basisstation und dem Teilnehmer], wobei ein Abstand zwischen aufeinanderfolgenden Aussendungen der mehrfachen Aussendung der Mehrzahl von Teil-Synchronisationsdatenpaketen und ein Abstand zwischen den zumindest zwei Empfangsfenstern des Teilnehmers teilerfremd sind.

Bei Ausführungsbeispielen können die Mehrzahl von Teil-Synchronisationsdatenpaketen wiederholt ausgesendet werden, wobei eine erste Aussendung der Mehrzahl von Teil-Synchronisationsdatenpaketen entsprechend des Zeit- und/oder Frequenzsprungmusters und eine zweite Aussendung der Mehrzahl von Teil-Synchronisationsdatenpaketen entsprechend des Zeit- und/oder Frequenzsprungmusters in der Zeit und/oder Frequenz verschobene Versionen voneinander sind.

Bei Ausführungsbeispielen können die Mehrzahl von Teil-Synchronisationsdatenpaketen wiederholt ausgesendet werden, wobei eine erste Aussendung der Mehrzahl von Teil-Synchronisationsdatenpaketen entsprechend des Zeit- und/oder Frequenzsprungmusters innerhalb eines ersten Teilfrequenzbereichs des vorgegebenen oder dem Teilnehmer bekannten Frequenzbereichs liegt, wobei eine zweite Aussendung der Mehrzahl von Teil-Synchronisationsdatenpaketen entsprechend des Zeit- und/oder Frequenzsprungmusters innerhalb eines zweiten Teilfrequenzbereichs des vorgegebenen oder dem Teilnehmer bekannten Frequenzbereichs liegt, wobei der erste Teilfrequenzbereich und der zweite Teilfrequenzbereich unterschiedlich sind.

Bei Ausführungsbeispielen können der erste Teilfrequenzbereich und der zweite Teilfrequenzbereich in der Frequenz so weit voneinander getrennt sein, dass eine durch einen Frequenzversatz [z. B. durch Quarzversätze des Teilnehmers oder der Basisstation] bedingte versehentliche Synchronisation auf den jeweils anderen vorgegebenen Teilfrequenzbereich nicht möglich ist.

Bei Ausführungsbeispielen kann das Frequenzsprungmuster eine Belegung von Frequenzkanälen angeben, wobei durch das Frequenzsprungmuster angegebene unmittelbar aufeinander folgende Frequenzkanäle frequenzmäßig so weit voneinander getrennt sind, dass sich diese auch mit Frequenzversatz nicht überlappen.

Bei Ausführungsbeispielen kann das Frequenzsprungmuster eine Belegung von Frequenzkanälen angeben, wobei die durch das Frequenzsprungmuster angegebene Belegung von Frequenzkanälen keine wiederholenden identischen Frequenzabstände zwischen unmittelbar aufeinander folgenden Frequenzkanälen aufweist.

Bei Ausführungsbeispielen kann das Zeitsprungmuster eine Belegung von Zeitschlitzen angeben, wobei die durch das Zeitsprungmuster angegebene Belegung von Zeitschlitzen keine wiederholenden identischen Zeitabstände zwischen unmittelbar aufeinander folgenden Zeitschlitzen aufweist.

Bei Ausführungsbeispielen können die Mehrzahl von Teil-Synchronisationsdatenpaketen wiederholt ausgesendet werden, wobei eine erste Aussendung der Mehrzahl von Teil-Synchronisationsdatenpaketen entsprechend des Zeit- und/oder Frequenzsprungmusters und eine zweite Aussendung der Mehrzahl von Teil-Synchronisationsdatenpaketen entsprechend des Zeit- und/oder Frequenzsprungmusters ineinander verschachtelt sind [z.B. so dass Abwechselnd Teil-Synchronisationsdatenpakete der ersten Aussendung und der zweiten Aussendung übertragen werden [z.B. wodurch sich implizit ein Sprungmuster ergibt, dass jeweils einen Zeitabstand entsprechend der Anzahl von Wiederholungen hat]].

Beispielsweise kann das Sprungmuster so gewählt werden, dass die obige Verschachtelung möglich ist.

Bei Ausführungsbeispielen können eine erste Aussendung der Mehrzahl von Teil-Synchronisationsdatenpaketen entsprechend des Zeit- und/oder Frequenzsprungmusters und eine zweite Aussendung der Mehrzahl von Teil-Synchronisationsdatenpaketen entsprechend des Zeit- und/oder Frequenzsprungmusters in der Frequenz und/oder Zeit verschobenen Versionen voneinander sein.

Bei Ausführungsbeispielen können die Mehrzahl von Teil-Synchronisationsdatenpaketen wiederholt ausgesendet werden, wobei die wiederholten Aussendungen der Mehrzahl von Teil-Synchronisationsdatenpaketen periodisch sind, wobei der Teilnehmer ausgebildet ist, um die Mehrzahl von Teil-Synchronisationsdatenpaketen unter Ausnutzung der Periodizität der wiederholten Aussendungen der Mehrzahl von Teil-Synchronisationsdatenpaketen [z.B. basierend auf einer zyklischen Korrelation] zu empfangen.

Bei Ausführungsbeispielen kann der Teilnehmer ausgebildet sein, um die Mehrzahl von Teil-Synchronisationsdatenpaketen unter Ausnutzung der Periodizität der wiederholten Aussendungen der Mehrzahl von Teil-Synchronisationsdatenpaketen basierend auf einer zyklischen Korrelation auf Teil-Synchronisationsebene zu empfangen.

Bei Ausführungsbeispielen kann eine Anzahl der Mehrzahl von Teil-Synchronisationsdatenpaketen von einer Coderate eines Fehlerschutz des Nutzdatenpakets der Punkt-zu-Mehrpunkt-Datenübertragung abhängig sein.

Bei Ausführungsbeispielen können die [z.B. alle] Teil-Synchronisationsdatenpakete der Mehrzahl von Teil-Synchronisationsdatenpaketen symbolidentisch sein.

Bei Ausführungsbeispielen können das Synchronisationsdatenpaket [z.B. die Mehrzahl von Teil-Synchronisationsdatenpaketen] und das Nutzdatenpaket der Punkt-zu-Mehrpunkt-Datenübertragung mit dem gleichen Fehlerschutzcode codiert sein.

Bei Ausführungsbeispielen können das Synchronisationsdatenpaket [z.B. die Mehrzahl von Teil-Synchronisationsdatenpaketen] und das Nutzdatenpaket der Punkt-zu-Mehrpunkt-Datenübertragung mit Fehlerschutzcodes vergleichbarer Leistungsfähigkeit codiert sein.

Bei Ausführungsbeispielen kann der vorgegebene oder dem Teilnehmer bekannte Frequenzbereich zumindest einen Frequenzkanal des Frequenzbands umfassen.

Bei Ausführungsbeispielen kann der vorgegebene oder dem Teilnehmer bekannte Frequenzbereich eine Mehrzahl von Frequenzkanälen des Frequenzbands umfassen, wobei zumindest zwei Frequenzkanäle der Mehrzahl von Frequenzkanälen höchstens so weit auseinanderliegen, dass die zwei Frequenzkanäle innerhalb einer Frequenzbandbreite liegen, die einer Empfangsbandbreite eines Empfängers des Teilnehmers entspricht.

Bei Ausführungsbeispielen kann ein Empfänger des Teilnehmers eine Empfangsbandbreite aufweisen, die einer Bandbreite von zwei bis zehn [z.B. zwei bis vier] unmittelbar benachbarten Frequenzkanälen, in die das Frequenzband des Kommunikationssystems unterteilt ist, entspricht.

Bei Ausführungsbeispielen kann ein Empfänger des Teilnehmers eine Empfangsbandbreite von 250 kHz [z.B. oder 100 kHz] oder weniger aufweisen.

Bei Ausführungsbeispielen kann der Teilnehmer ausgebildet sein, um Daten asynchron zu anderen Teilnehmern [z.B. zu der Basisstation] des Kommunikationssystems zu senden.

Beispielsweise kann der Teilnehmer ausgebildet sein, um die Uplink-Datenübertragung asynchron zu der Basisstation zu senden.

Bei Ausführungsbeispielen kann der Teilnehmer ausgebildet sein, um die Uplink-Datenübertragung zu einem zufälligen oder pseudozufälligen Zeitpunkt zu der Basisstation zu senden.

Bei Ausführungsbeispielen kann die Uplink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Uplink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Downlink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Downlink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann der Teilnehmer ein Sensorknoten oder Aktorknoten sein.

Bei Ausführungsbeispielen kann der Teilnehmer batteriebetrieben sein.

Bei Ausführungsbeispielen kann der Teilnehmer ein Energy-Harvesting-Element zur elektrischen Energiegewinnung aufweisen.

Weitere Ausführungsbeispiele schaffen eine Basisstation eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei die Basisstation ausgebildet ist, um eine Punkt-zu-Mehrpunkt-Datenübertragung zu unkoordiniert sendenden Teilnehmern des Kommunikationssystems zu senden, wobei die Punkt-zu-Mehrpunkt-Datenübertragung ein Synchronisationsdatenpaket und ein zu dem Synchronisationsdatenpaket in der Zeit und/oder Frequenz referenziertes [z.B. synchronisiertes; z.B. mit einem vorgegebenen Zeit- und/oder Frequenzabstand und/oder Zeitsprungmuster und/oder Frequenzsprungmuster gesendetes] Nutzdatenpaket aufweist, wobei das Synchronisationsdatenpaket in einem vorgegebenen oder den Teilnehmern bekannten Frequenzbereich des Frequenzbands des Kommunikationssystems übertragen wird.

Bei Ausführungsbeispielen kann die Basisstation ausgebildet sein, um das Nutzdatenpaket der Punkt-zu-Mehrpunkt-Datenübertragung aufgeteilt auf eine Mehrzahl von Teil-Nutzdatenpaketen zu übertragen, wobei die Mehrzahl von Teil-Nutzdatenpaketen jeweils einen Teil des Nutzdatenpakets aufweisen, und wobei die Mehrzahl von Teil-Nutzdatenpaketen entsprechend eines Zeit- und/oder Frequenzsprungmusters in der Zeit [z.B. über mehrere Zeitschlitze] und/oder Frequenz [z.B. über mehrere Frequenzkanäle] verteilt übertragen werden, wobei die Basisstation ausgebildet ist, um das Synchronisationsdatenpaket mit einer Information über das Zeit- und/oder Frequenzsprungmuster zu versehen.

Bei Ausführungsbeispielen kann die Basisstation ausgebildet sein, um die Mehrzahl von Teil-Nutzdatenpaketen entsprechend eines Frequenzsprungmusters [z.B. und optional Zeitsprungmusters] zu übertragen, wobei eine Bandbreite der durch das Frequenzsprungmuster angegebenen Belegung [z.B. von Frequenzkanälen] des Frequenzbands zumindest um den Faktor 5 [z.B. um den Faktor 10] kleiner ist als Empfangsbandbreiten von Empfängern der Teilnehmer.

Bei Ausführungsbeispielen kann die Basisstation ausgebildet sein, um das Synchronisationsdatenpaket mit einer Synchronisationsinformation [z.B. eine Synchronisationssequenz] zur Synchronisation der Teilnehmer zu versehen.

Bei Ausführungsbeispielen kann die Basisstation ausgebildet sein, um eine Uplink-Datenübertragung von einem der Teilnehmer zu empfangen und um zeitlich synchronisiert zu der Uplink-Datenübertragung eine Downlink-Datenübertragung zu dem Teilnehmer zu senden, wobei die Downlink-Datenübertragung eine Signalisierungsinformation aufweist, wobei die Signalisierungsinformation das Synchronisationsdatenpaket signalisiert.

Bei Ausführungsbeispielen kann die Signalisierungsinformation eine Information über einen Zeitpunkt [z.B. Zeitschlitz] der Übertragung des Synchronisationsdatenpakets aufweisen.

Bei Ausführungsbeispielen kann die Signalisierungsinformation eine Information über den Frequenzbereich, in dem das Synchronisationsdatenpaket übertragen wird, aufweisen [z.B. so dass dem Teilnehmer der Frequenzbereich bekannt ist].

Bei Ausführungsbeispielen kann die Basisstation ausgebildet sein, um basierend auf der Uplink-Datenübertragung eine Taktabweichung eines Taktgebers [z.B. Abweichung eines Taktes des Taktgebers von einem Referenztakt] des Teilnehmers zu ermitteln, wobei die Information über den Zeitpunkt oder die Frequenz der Punkt-zu-Mehrpunkt Datenübertragung, die die Signalisierungsinformation aufweist, die Taktabweichung des Taktgebers des Teilnehmers berücksichtigt [z.B. derart, dass die Taktabweichung des Taktgebers kompensiert wird].

Bei Ausführungsbeispielen kann die Basisstation ausgebildet ist, um basierend auf der Uplink-Datenübertragung eine Taktabweichung eines Taktgebers [z.B. Abweichung eines Taktes des Taktgebers von einem Referenztakt] des Teilnehmers zu ermitteln, wobei die Basisstation ausgebildet ist, um die Downlink-Übertragung ferner mit einer Taktgeberkorrekturinformation zur Korrektur der Taktabweichung des Taktgebers des Teilnehmers zu versehen.

Bei Ausführungsbeispielen kann die Basisstation ausgebildet sein, um das Synchronisationsdatenpaket mehrfach auszusenden, so dass eine Dauer der mehrfachen Aussendung des Synchronisationsdatenpakets größer oder gleich ist als ein maximal möglicher Zeitversatz zwischen dem Teilnehmer und der Basisstation.

Beispielsweise kann die Basisstation ausgebildet sein, um das Synchronisationsdatenpaket so oft auszusenden und/oder einen Abstand zwischen den Synchronisationsdatenpaketen so zu wählen, dass eine Zeitspanne zwischen Beginn der ersten Aussendung des Synchronisationsdatenpakets und Beginn der letzten Aussendung des Synchronisationsdatenpakets mindestens dem Zeitversatz zwischen Endpunkt und Basisstation entspricht.

Bei Ausführungsbeispielen kann die Basisstation ausgebildet sein, um das Synchronisationsdatenpaket mehrfach auszusenden, wobei eine erste Aussendung des Synchronisationsdatenpakets und eine zweite Aussendung des Synchronisationsdatenpakets in der Zeit und/oder Frequenz verschobene Versionen voneinander sind.

Bei Ausführungsbeispielen kann die Basisstation ausgebildet sein, um das Synchronisationsdatenpaket wiederholt auszusenden, wobei die wiederholten Aussendungen des Synchronisationsdatenpakets periodisch sind.

Bei Ausführungsbeispielen kann die Basisstation ausgebildet sein, um das Synchronisationsdatenpaket der Punkt-zu-Mehrpunkt-Datenübertragung aufgeteilt auf eine Mehrzahl von Teil-Synchronisationsdatenpaketen zu übertragen, wobei die Mehrzahl von Teil-Synchronisationsdatenpaketen jeweils einen Teil des Synchronisationsdatenpakets aufweisen, und wobei die Mehrzahl von Teil-Synchronisationsdatenpaketen entsprechend eines vorgegebenen oder dem Teilnehmer bekannten Zeit- und/oder Frequenzsprungmusters in der Zeit [z.B. über mehrere Zeitschlitze] und/oder Frequenz [z.B. über mehrere Frequenzkanäle] verteilt übertragen werden.

Bei Ausführungsbeispielen kann die Basisstation ausgebildet sein, um die Downlink-Datenübertragung nach Anspruch 41 mit einer Information über das Zeit- und/oder Frequenzsprungmuster des Synchronisationsdatenpakets zu versehen.

Bei Ausführungsbeispielen kann die Basisstation ausgebildet sein, um die Mehrzahl von Teil-Synchronisationsdatenpaketen entsprechend des Zeit- und/oder Frequenzsprungmusters des Synchronisationsdatenpakets innerhalb des vorgegebenen oder den Teilnehmern bekannten Frequenzbereichs zu übertragen, wobei der vorgegebene oder den Teilnehmern bekannte Frequenzbereich höchstens einer Empfangsbandbreite der Empfänger der Teilnehmer entspricht.

Bei Ausführungsbeispielen kann die Basisstation ausgebildet sein, um die Teil-Synchronisationsdatenpakete kanalzucodieren, so dass nur eine Teilmenge der Mehrzahl von Teil-Synchronisationsdatenpaketen zur erfolgreichen Decodierung des Synchronisationsdatenpakets erforderlich ist.

Bei Ausführungsbeispielen kann der vorgegebene oder den Teilnehmern bekannte Frequenzbereich ein oder mehrere Teilfrequenzbereiche aufweisen.

Bei Ausführungsbeispielen kann der vorgegebene oder den Teilnehmern bekannte Frequenzbereich breiter sein als eine Empfangsbandbreite der Empfänger der Teilnehmer, wobei die Basisstation ausgebildet ist, um entsprechend des Zeit- und/oder Frequenzsprungmusters des Synchronisationsdatenpakets pro Teilfrequenzbereich innerhalb des vorgegebenen Frequenzbereichs mindestens so viele der Mehrzahl von Teil-Synchronisationsdatenpaketen zu übertragen, wie für die erfolgreiche Decodierung des Synchronisationsdatenpakets erforderlich sind, wobei jeder der ein oder mehreren Teilfrequenzbereiche höchstens der Empfangsbandbreite der Empfänger der Teilnehmer entspricht.

Bei Ausführungsbeispielen kann die Basisstation ausgebildet sein, um die Mehrzahl von Teil-Synchronisationsdatenpaketen mehrfach auszusenden, so dass eine Dauer der mehrfachen Aussendung der Mehrzahl von Teil-Synchronisationsdatenpaketen größer oder gleich ist als ein maximal möglicher Zeitversatz zwischen den Teilnehmern und der Basisstation.

Bei Ausführungsbeispielen kann die Basisstation ausgebildet sein, um die Mehrzahl von Teil-Synchronisationsdatenpaketen mehrfach auszusenden, wobei ein Abstand zwischen aufeinanderfolgenden Aussendungen der mehrfachen Aussendung der Mehrzahl von Teil-Synchronisationsdatenpaketen und ein Abstand zwischen Empfangsfenstern, basierend auf denen die Teilnehmer die Mehrzahl von Teil-Synchronisationsdatenpaketen empfangen, teilerfremd sind.

Bei Ausführungsbeispielen kann die Basisstation ausgebildet sein, um die Mehrzahl von Teil-Synchronisationsdatenpaketen wiederholt auszusenden, wobei eine erste Aussendung der Mehrzahl von Teil-Synchronisationsdatenpaketen entsprechend des Zeit- und/oder Frequenzsprungmusters und eine zweite Aussendung der Mehrzahl von Teil-Synchronisationsdatenpaketen entsprechend des Zeit- und/oder Frequenzsprungmusters in der Zeit verschobene Versionen voneinander sind.

Bei Ausführungsbeispielen kann die Basisstation ausgebildet sein, um die Mehrzahl von Teil-Synchronisationsdatenpaketen wiederholt auszusenden, wobei eine erste Aussendung der Mehrzahl von Teil-Synchronisationsdatenpaketen entsprechend des Zeit- und/oder Frequenzsprungmusters innerhalb eines ersten Teilfrequenzbereichs des vorgegebenen oder den Teilnehmern bekannten Frequenzbereichs liegt, wobei eine zweite Aussendung der Mehrzahl von Teil-Synchronisationsdatenpaketen entsprechend des Zeit- und/oder Frequenzsprungmusters innerhalb eines zweiten Teilfrequenzbereichs des vorgegebenen oder den Teilnehmern bekannten Frequenzbereichs liegt, wobei der erste Teilfrequenzbereich und der zweite Teilfrequenzbereich unterschiedlich sind.

Bei Ausführungsbeispielen können der erste Teilfrequenzbereich und der zweite Teilfrequenzbereich in der Frequenz so weit voneinander getrennt sein, dass eine durch einen Frequenzversatz bedingte versehentliche Synchronisation auf den jeweils anderen vorgegebenen Teilfrequenzbereich nicht möglich ist.

Bei Ausführungsbeispielen kann das Frequenzsprungmuster eine Belegung von Frequenzkanälen angeben, wobei durch das Frequenzsprungmuster angegebene unmittelbar aufeinander folgende Frequenzkanäle frequenzmäßig so weit voneinander getrennt sind, dass sich diese auch mit Frequenzversatz nicht überlappen.

Bei Ausführungsbeispielen kann das Frequenzsprungmuster eine Belegung von Frequenzkanälen angeben, wobei die durch das Frequenzsprungmuster angegebene Belegung von Frequenzkanälen keine wiederholenden identischen Frequenzabstände zwischen unmittelbar aufeinander folgenden Frequenzkanälen aufweist.

Bei Ausführungsbeispielen kann das Zeitsprungmuster eine Belegung von Zeitschlitzen angiben, wobei die durch das Zeitsprungmuster angegebene Belegung von Zeitschlitzen keine wiederholenden identischen Zeitabstände zwischen unmittelbar aufeinander folgenden Zeitschlitzen aufweist.

Bei Ausführungsbeispielen kann die Basisstation ausgebildet sein, um die Mehrzahl von Teil-Synchronisationsdatenpaketen wiederholt auszusenden, wobei eine erste Aussendung der Mehrzahl von Teil-Synchronisationsdatenpaketen entsprechend des Zeit- und/oder Frequenzsprungmusters und eine zweite Aussendung der Mehrzahl von Mehrzahl von Teil-Synchronisationsdatenpaketen entsprechend des Zeit- und/oder Frequenzsprungmusters ineinander verschachtelt sind [z.B. so dass Abwechselnd Teil-Synchronisationsdatenpakete der ersten Aussendung und der zweiten Aussendung übertragen werden].

Bei Ausführungsbeispielen können eine erste Aussendung der Mehrzahl von Teil-Synchronisationsdatenpaketen entsprechend des Zeit- und/oder Frequenzsprungmusters und eine zweite Aussendung der Mehrzahl von Teil-Synchronisationsdatenpaketen entsprechend des Zeit- und/oder Frequenzsprungmusters in der Frequenz und/oder Zeit verschobenen Versionen voneinander sein.

Bei Ausführungsbeispielen kann die Basisstation ausgebildet sein, um die Mehrzahl von Teil-Synchronisationsdatenpaketen wiederholt auszusenden, wobei die wiederholten Aussendungen der Mehrzahl von Teil-Synchronisationsdatenpaketen periodisch sind.

Bei Ausführungsbeispielen kann eine Anzahl der Mehrzahl von Teil-Synchronisationsdatenpaketen von einer Coderate eines Fehlerschutz des Nutzdatenpakets der Punkt-zu-Mehrpunkt-Datenübertragung abhängig sein.

Bei Ausführungsbeispielen können die [z.B. alle] Teil-Synchronisationsdatenpakete der Mehrzahl von Teil-Synchronisationsdatenpaketen symbolidentisch sein.

Bei Ausführungsbeispielen können das Synchronisationsdatenpaket [z.B. die Mehrzahl von Teil-Synchronisationsdatenpaketen] und das Nutzdatenpaket der Punkt-zu-Mehrpunkt-Datenübertragung mit dem gleichen Fehlerschutzcode codiert sein.

Bei Ausführungsbeispielen können das Synchronisationsdatenpaket [z.B. die Mehrzahl von Teil-Synchronisationsdatenpaketen) und das Nutzdatenpaket der Punkt-zu-Mehrpunkt-Datenübertragung mit Fehlerschutzcodes vergleichbarer Leistungsfähigkeit codiert sein.

Weitere Ausführungsbeispiele schaffen ein Verfahren zum Betrieb eines unkoordiniert sendenden Teilnehmers eines Kommunikationssystems. Das Verfahren umfasst einen Schritt des Empfangens eines Synchronisationsdatenpakets einer Punkt-zu-Mehrpunkt-Datenübertragung einer Basisstation des Kommunikationssystems, wobei das Synchronisationsdatenpaket in einem vorgegebenen oder dem Teilnehmer bekannten Frequenzbereich des Frequenzbands des Kommunikationssystems übertragen wird. Ferner umfasst das Verfahren einen Schritt des Empfangens, basierend auf dem Synchronisationsdatenpaket, eines zu dem Synchronisationsdatenpaket in der Zeit und/oder Frequenz referenziertes [z.B. synchronisiertes; z.B. mit einem vorgegebenen Zeit- und/oder Frequenzabstand gesendetes] Nutzdatenpakets der Punkt-zu-Mehrpunkt-Datenübertragung.

Weitere Ausführungsbeispiele schaffen ein Verfahren zum Betrieb einer Basisstation eines Kommunikationssystems. Das Verfahren umfasst einen Schritt des Sendens einer Punkt-zu-Mehrpunkt-Datenübertragung zu einer Mehrzahl von unkoordiniert sendenden Teilnehmern des Kommunikationssystems, wobei die Punkt-zu-Mehrpunkt-Datenübertragung ein Synchronisationsdatenpaket und ein zu dem Synchronisationsdatenpaket in der Zeit und/oder Frequenz referenziertes [z.B. synchronisiertes; z.B. mit einem vorgegebenen Zeit- und/oder Frequenzabstand und/oder Zeitsprungmuster und/oder Frequenzsprungmuster gesendetes] Nutzdatenpaket aufweist, wobei das Synchronisationsdatenpaket in einem vorgegebenen oder den Teilnehmern bekannten Frequenzbereich des Frequenzbands des Kommunikationssystems übertragen wird.

Ausführungsbeispiele der vorliegenden Erfindung werden bezugnehmend auf die beiliegenden Figuren näher beschrieben. Es zeigen:
- Fig. 1: in einem Diagramm eine Belegung eines Frequenzbands eines TSMA-basierten Kommunikationssystems bei der Übertragung eines auf eine Mehrzahl von Sub-Datenpaketen aufgeteilten Datenpakets, wobei die Mehrzahl von Sub-Datenpaketen in der Zeit und Frequenz verteilt sind,
- Fig. 2: in einem Diagramm eine Belegung eines Frequenzbands eines konkurrenzbasierten Kommunikationssystems bei der Übertragung mehrerer Uplink-Nachrichten und mehrerer Downlink-Nachrichten,

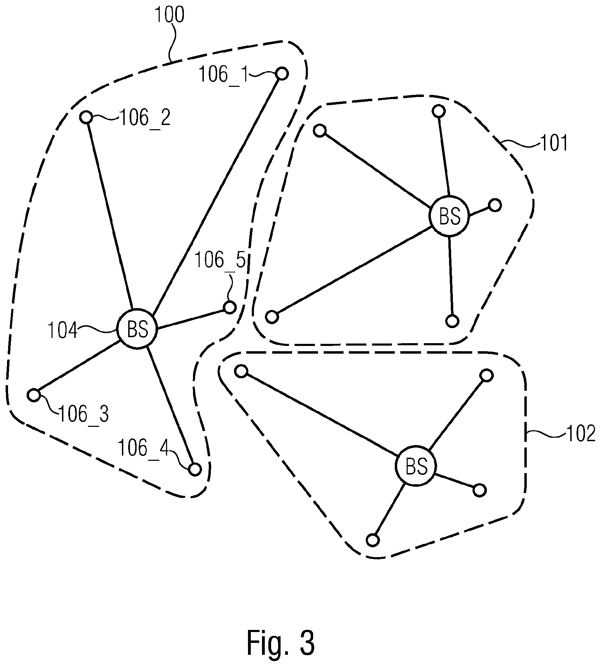

- Fig. 3: eine schematische Ansicht eines Kommunikationssystems mit einer Basisstation und einem oder mehreren Teilnehmern sowie zweier anderer Kommunikationssysteme, gemäß einem Ausführungsbeispiel der vorliegenden Erfindung,

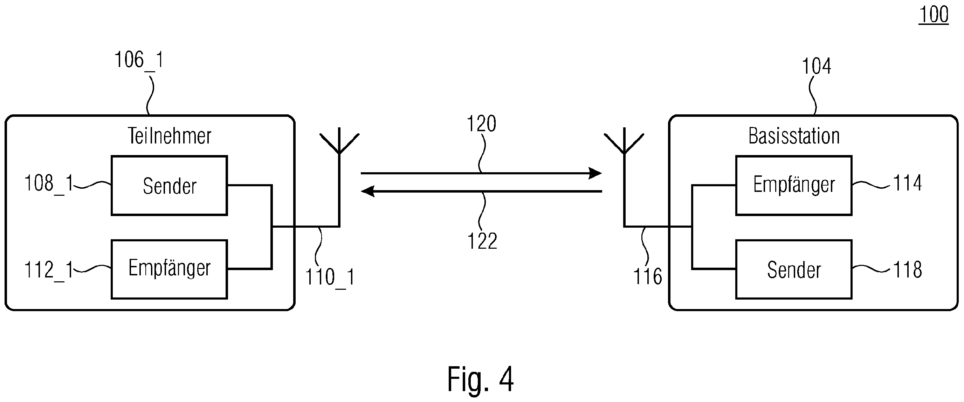

- Fig. 4: ein schematisches Blockschaltbild der Basisstation und eines der Teilnehmer des in Fig. 3 gezeigten Kommunikationssystems, gemäß einem Ausführungsbeispiel der vorliegenden Erfindung,

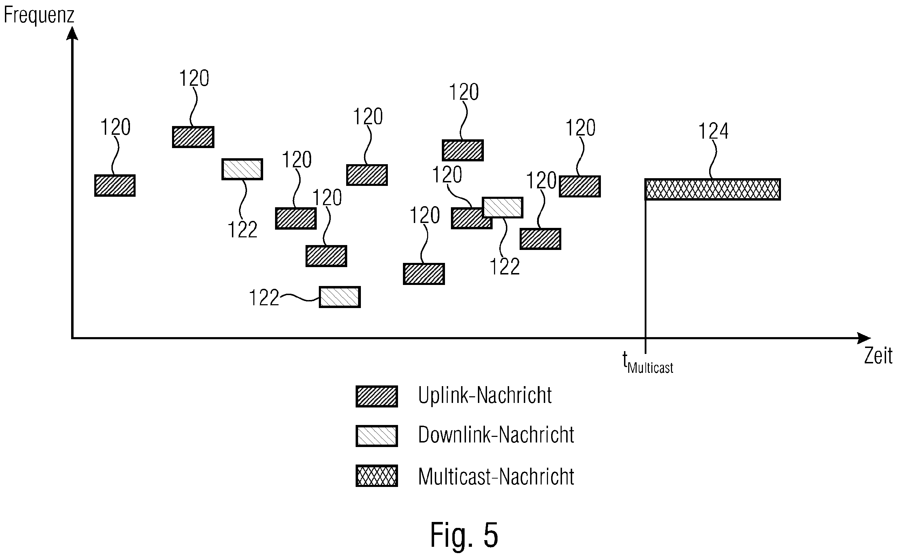

- Fig. 5: in einem Diagramm eine Belegung eines Frequenzbands des Kommunikationssystems bei der Durchführung mehrerer Uplink-Datenübertragungen und Downlink-Datenübertragungen zwischen der Basisstation und mehreren der Teilnehmer sowie einer Punkt-zu-Mehrpunkt-Datenübertragung von der Basisstation zu mehreren der Teilnehmer, gemäß einem Ausführungsbeispiel der vorliegenden Erfindung,

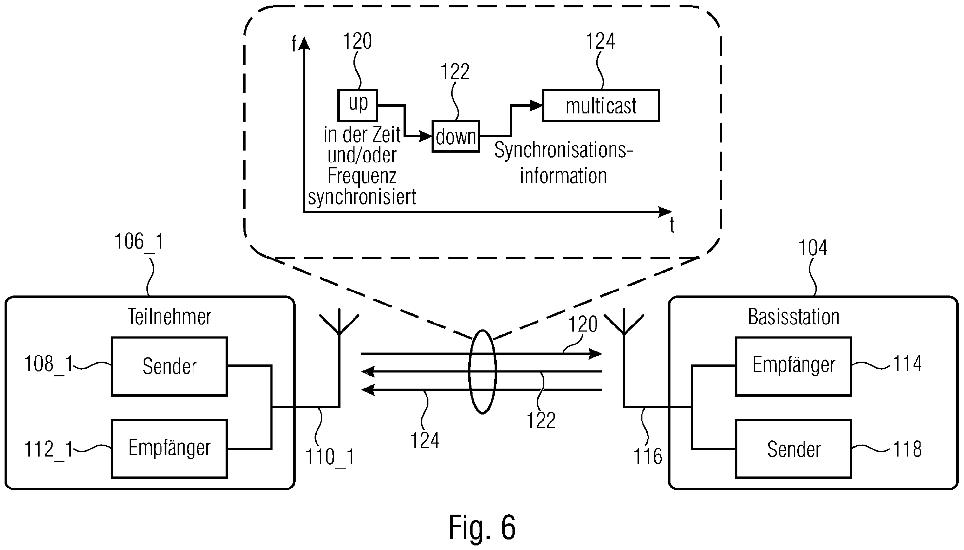

- Fig. 6: ein schematisches Blockschaltbild eines Teilnehmers und einer Basisstation, gemäß einem Ausführungsbeispiel der vorliegenden Erfindung,

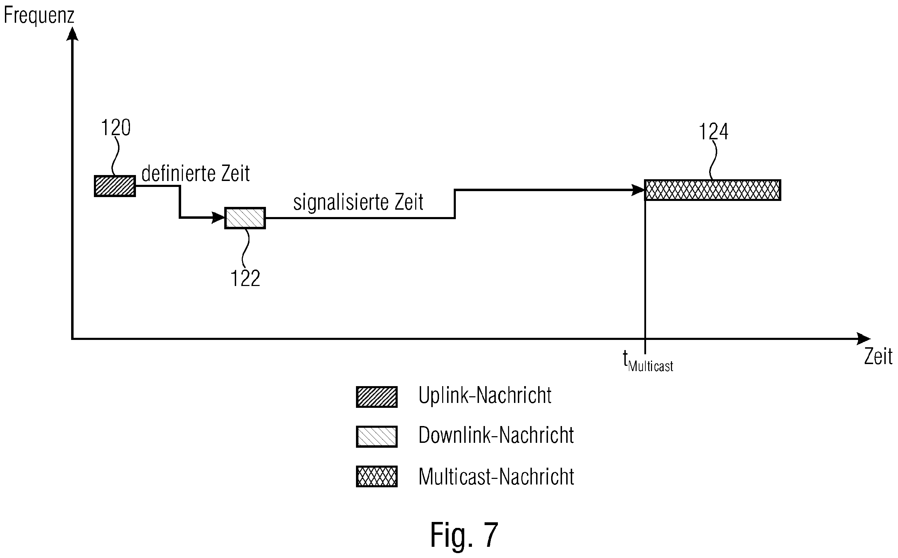

- Fig.7: in einem Diagramm eine Belegung des Frequenzbands des Kommunikationssystems bei der Durchführung einer Uplink-Datenübertragung, einer Downlink-Datenübertagung und einer Punkt-zu-Mehrpunkt-Datenübertragung, gemäß einem Ausführungsbeispiel der vorliegenden Erfindung,

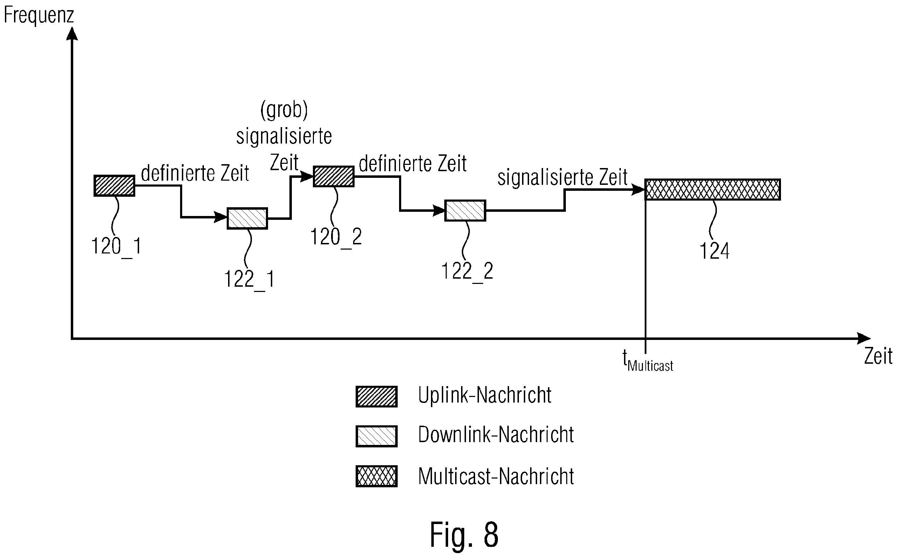

- Fig. 8: in einem Diagramm eine Belegung des Frequenzbands des Kommunikationssystems bei der Durchführung einer ersten Uplink-Datenübertragung, einer ersten Downlink-Datenübertragung, einer zweiten Uplink-Datenübertragung, einer zweiten Downlink-Datenübertragung sowie einer Punkt-zu-Mehrpunkt-Datenübertragung, gemäß einem Ausführungsbeispiel der vorliegenden Erfindung,

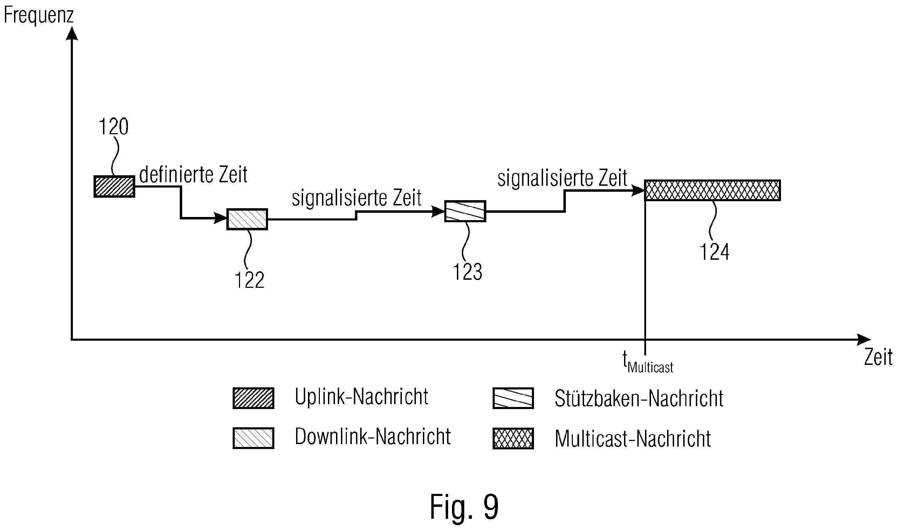

- Fig.9: in einem Diagramm eine Belegung des Frequenzbands des Kommunikationssystems bei der Durchführung einer Uplink-Datenübertragung, einer Downlink-Datenübertragung, einer Übertragung einer Stützbake als weitere Datenübertragung, und einer Punkt-zu-Mehrpunkt-Datenübertragung, gemäß einem Ausführungsbeispiel der vorliegenden Erfindung,

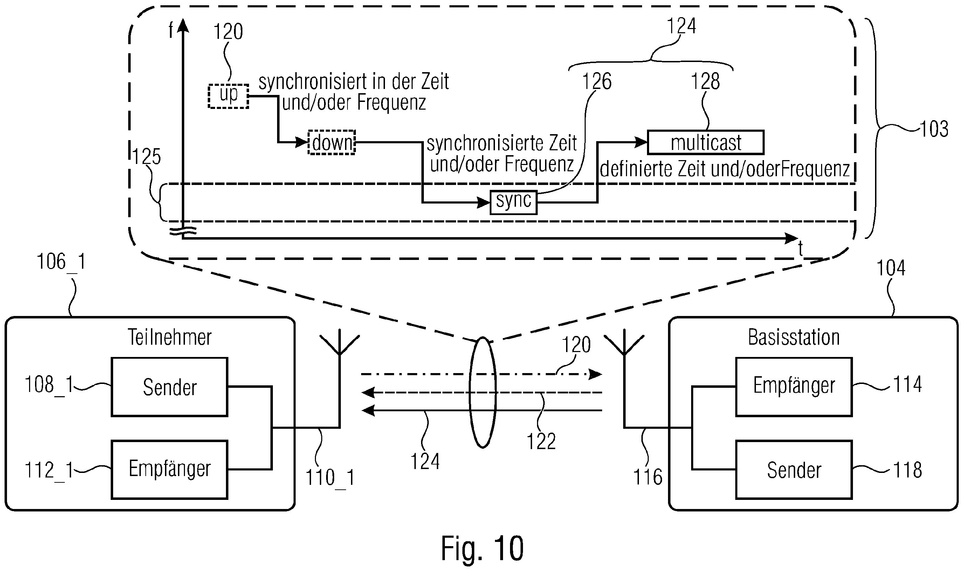

- Fig. 10: ein schematisches Blockschaltbild eines Teilnehmers und einer Basisstation, gemäß einem Ausführungsbeispiel der vorliegenden Erfindung,

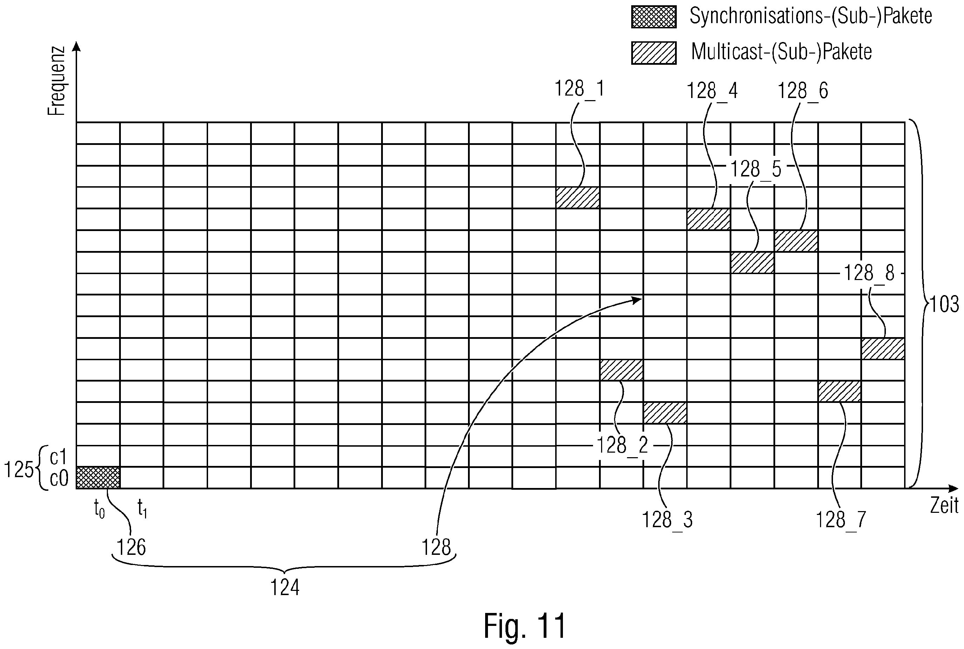

- Fig. 11: eine Belegung des Frequenzbands des Kommunikationssystems bei der Übertragung einer Punkt-zu-Mehrpunkt-Datenübertragung mit einem Synchronisationsdatenpaket und einem Nutzdatenpaket, wobei das Nutzdatenpaket auf eine Mehrzahl von Teil-Nutzdatenpaketen aufgeteilt ist, gemäß einem Ausführungsbeispiel der vorliegenden Erfindung,

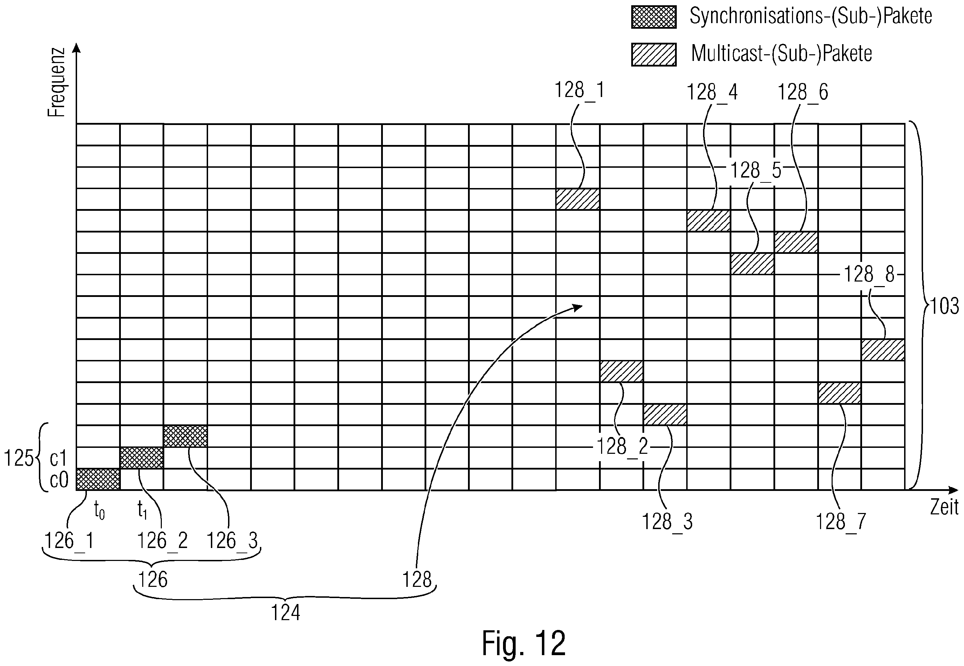

- Fig. 12: in einem Diagramm eine Belegung des Frequenzbands des Kommunikationssystems bei der Übertragung einer Punkt-zu-Mehrpunkt-Datenübertragung mit einem Synchronisationsdatenpaket und einem Nutzdatenpaket, wobei das Synchronisationsdatenpaket auf eine Mehrzahl von Teil-Synchronisationsdatenpaketen und das Nutzdatenpaket auf eine Mehrzahl von Teil-Nutzdatenpaketen aufgeteilt ist, gemäß einem Ausführungsbeispiel der vorliegenden Erfindung,

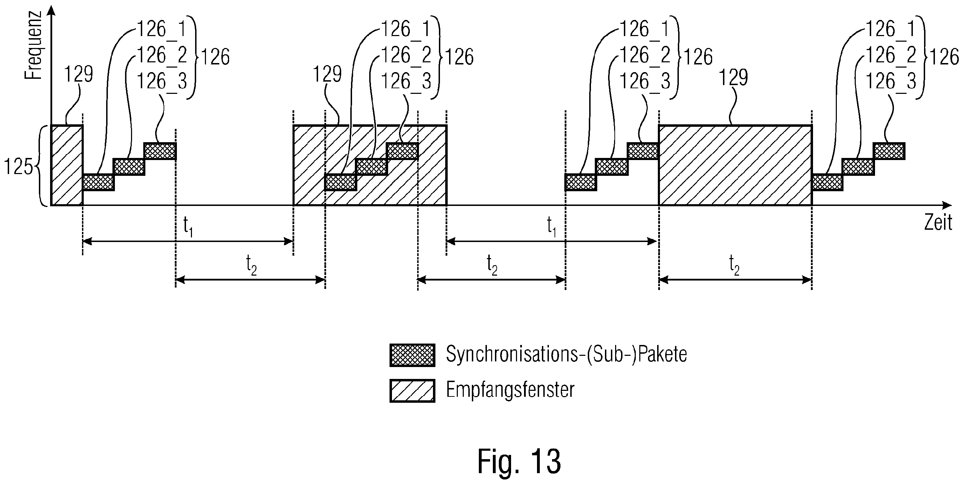

- Fig. 13: eine Belegung des vorgegebenen Frequenzbereichs bei der wiederholten Aussendung des Synchronisationsdatenpakets, wobei das Synchronisationsdatenpaket auf eine Mehrzahl von Teil-Synchronisationsdatenpaketen aufgeteilt ist, die entsprechend eines Zeit- und Frequenzsprungmusters in dem vorgegebenen Frequenzbereich verteilt übertragen werden, gemäß einem Ausführungsbeispiel der vorliegenden Erfindung,

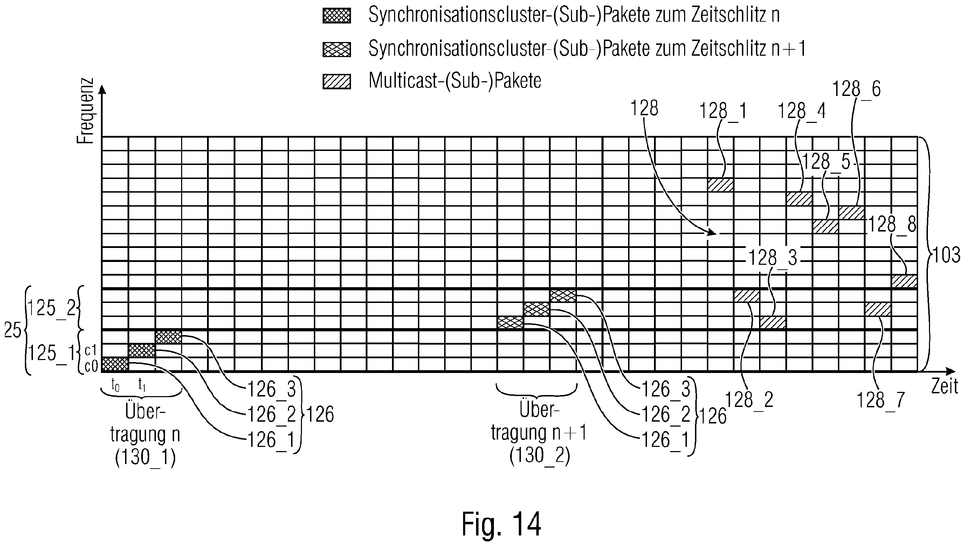

- Fig. 14: eine Belegung des Frequenzbands des Kommunikationssystems bei der Übertragung einer Punkt-zu-Mehrpunkt-Datenübertragung mit einer Mehrzahl von Teil-Nutzdatenpaketen und einer wiederholten Aussendung von Teil-Synchronisationsdatenpaketen auf unterschiedlichen Teilfrequenzbereichen des vorgegebenen Frequenzbereichs, gemäß einem Ausführungsbeispiel der vorliegenden Erfindung,

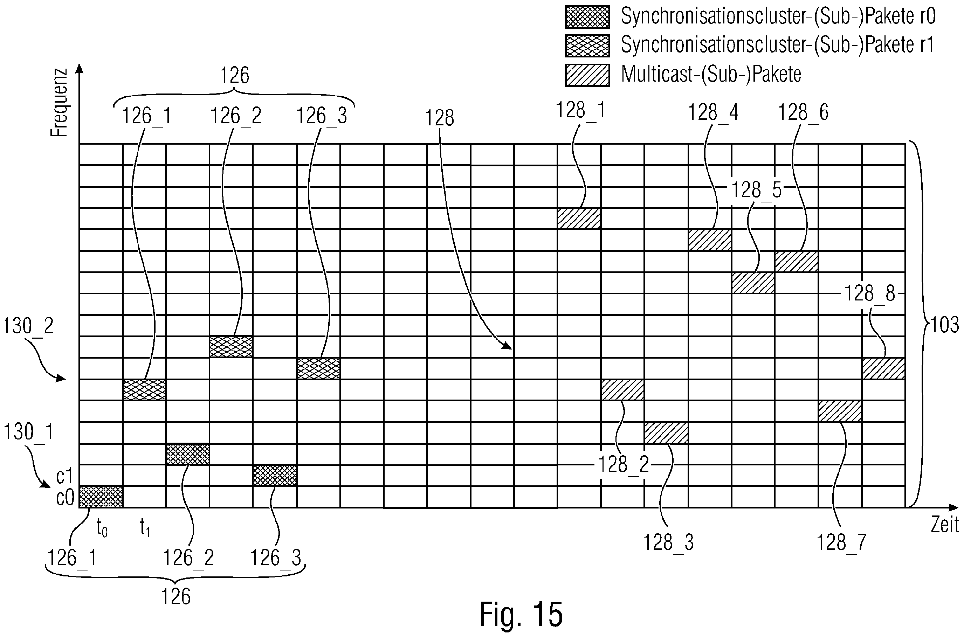

- Fig. 15: eine Belegung des Frequenzbands des Kommunikationssystems bei der Übertragung einer Punkt-zu-Mehrpunkt-Datenübertragung mit einer Mehrzahl von Teil-Nutzdatenpaketen und einer wiederholten Aussendung von Teil-Synchronisationsdatenpaketen, wobei die wiederholten Aussendung von Teil-Synchronisationsdatenpaketen ineinander verschachtelt sind, gemäß einem Ausführungsbeispiel der vorliegenden Erfindung,

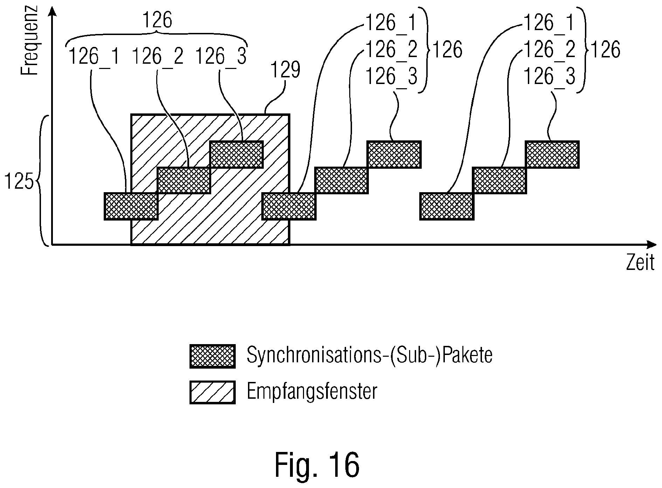

- Fig. 16: in einem Diagramm eine Belegung des vorgegebenen Frequenzbereichs bei einer periodischen Aussendung von Teil-Synchronisationsdatenpaketen sowie ein Empfangsfenster des Empfängers des Teilnehmers zum Empfang der Teil-Synchronisationsdatenpakete, gemäß einem Ausführungsbeispiel der vorliegenden Erfindung,

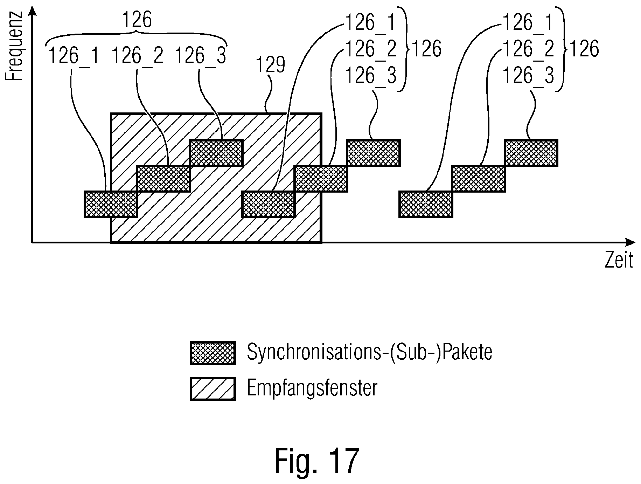

- Fig. 17: in einem Diagramm eine Belegung des vorgegebenen Frequenzbereichs bei einer periodischen Aussendung von Teil-Synchronisationsdatenpaketen sowie ein Empfangsfenster des Empfängers des Teilnehmers zum Empfang der Teil-Synchronisationsdatenpakete, wobei eine Länge des Empfangsfensters einer Länge von vier Teil-Synchronisationsdatenpaketen entspricht, gemäß einem Ausführungsbeispiel der vorliegenden Erfindung,

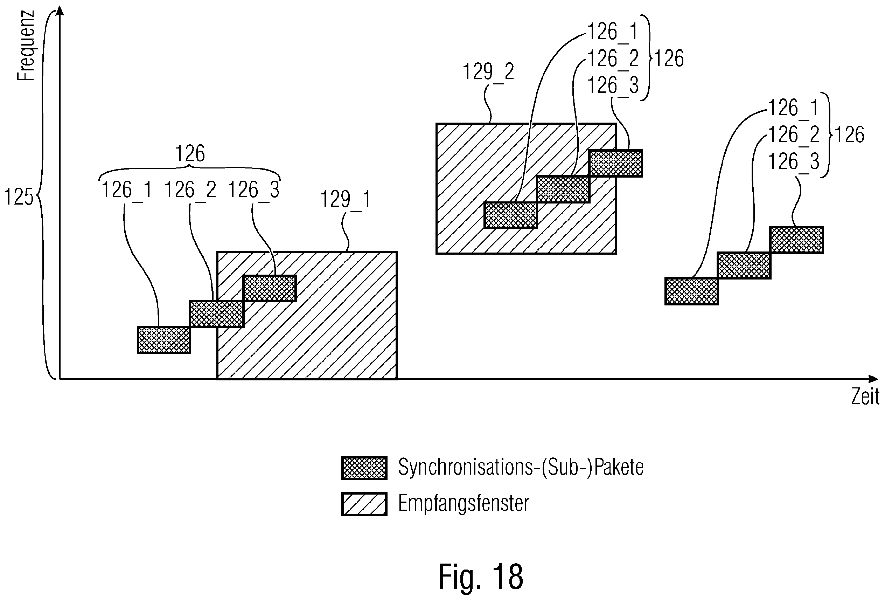

- Fig. 18: in einem Diagramm eine Belegung des vorgegebenen Frequenzbereichs bei einer wiederholten Aussendung von Teil-Synchronisationsdatenpaketen sowie zweier Empfangsfenster des Empfängers des Teilnehmers zum Empfang der Teil-Synchronisationsdatenpakete, wobei die wiederholten Aussendungen der Teil-Synchronisationsdatenpakete in der Zeit und Frequenz verschobene Versionen voneinander sind, gemäß einem Ausführungsbeispiel der vorliegenden Erfindung,

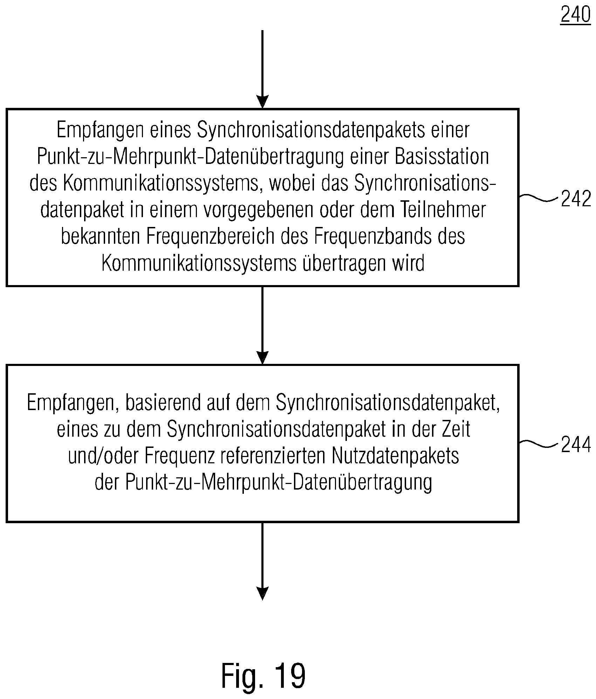

- Fig. 19: ein Flussdiagramm eines Verfahrens zum Betrieb eines unkoordiniert sendenden Teilnehmers eines Kommunikationssystems, gemäß einem Ausführungsbeispiel der vorliegenden Erfindung, und

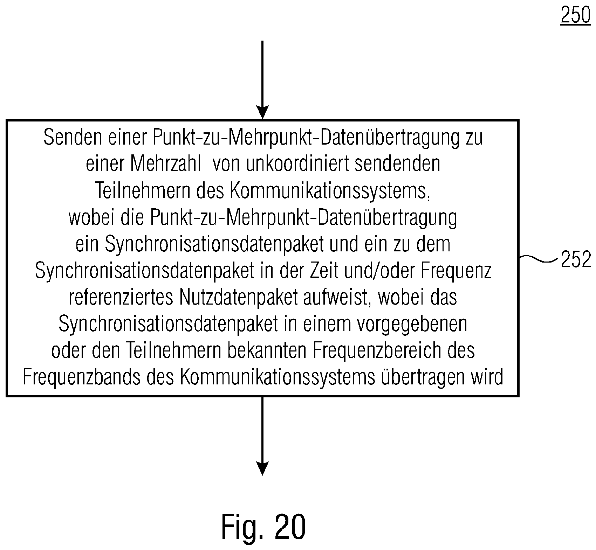

- Fig. 20: ein Flussdiagramm eines Verfahrens zum Betrieb einer Basisstation eines Kommunikationssystems, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Bevor detaillierte Ausführungsbeispiele eines Teilnehmers (z.B. Endpunkts) und einer Basisstation näher beschrieben werden, wird zunächst das zugrundeliegende Kommunikationssystem, in dem der Teilnehmer bzw. die Basisstation eingesetzt werden können, anhand der Fig. 3 und 4 näher erläutert.

Fig. 3 zeigt eine schematische Ansicht eines Kommunikationssystems 100 sowie zweier anderer Kommunikationssysteme 101 und 102, gemäß einem Ausführungsbeispiel der vorliegenden Erfindung.

Das Kommunikationssystem 100 kann eine Basisstation 104 (oder optional mehrere Basisstationen) und ein oder mehrere Teilnehmer (z.B. Endpunkte) 106_1-106_n aufweisen, wobei n eine natürliche Zahl größer gleich eins ist. In dem in Fig. 3 gezeigten Ausführungsbeispiel weist das Kommunikationssystem 100 zur Veranschaulichung fünf Teilnehmer 106_1-106_5 auf, das Kommunikationssystem 104_1 kann jedoch genauso 1, 10, 100, 1.000, 10.000 oder sogar 100.000 Teilnehmer aufweisen.

Das Kommunikationssystem 100 kann ausgebildet sein, um in einem Frequenzband (z.B. einem lizenzfreien und/oder genehmigungsfreien Frequenzband, wie z.B. dem ISM Band) drahtlos zu kommunizieren, welches von einer Mehrzahl von untereinander unkoordinierten Kommunikationssystemen zur Kommunikation genutzt wird, wie dies in Fig. 3 beispielhaft durch die anderen Kommunikationssysteme 101 und 102 angedeutet ist.

Das von dem Kommunikationssystem 100 genutzte Frequenzband kann dabei eine wesentlich (z.B. um zumindest den Faktor 5 (oder 10)) größere Bandbreite aufweisen als Empfangsfilter der Empfänger (Receiver oder Transceiver) der Teilnehmer 106_1-106_n.

Die Teilnehmer 106_1-106_n des Kommunikationssystems 100 können ausgebildet sein, um Daten unkoordiniert (z.B. und asynchron) in Bezug auf andere Teilnehmer und/oder die Basisstation 104 des Kommunikationssystems 100 zu senden. Beispielsweise können die Teilnehmer 106_1-106_n ausgebildet sein, um Daten in vorgegebenen groben Abständen (z.B. stündlich, täglich, wöchentlich, halbjährlich, jährlich, usw.) oder ansprechend auf ein externes Ereignis (z.B. Abweichung eines Sensorwertes von einem Sollwert) zu senden. Hierbei kann der genaue Sendezeitpunkt und/oder die genaue Frequenz bzw. der genaue Frequenzkanal des Frequenzbands zur Übertragung der Daten von dem jeweiligen Teilnehmer selbst bestimmt werden. Der jeweilige Teilnehmer sendet die Daten hierbei unabhängig davon, ob ein anderer Teilnehmer und/oder die Basisstation 104 zum selben Zeitpunkt oder zeitlich überlappend und/oder auf derselben Frequenz bzw. demselben Frequenzkanal des Frequenzbands Daten überträgt.

Die Übertragung von Daten (z.B. eines Datenpakets) von einem der Teilnehmer 106_1-106_n, z.B. von dem Teilnehmer 106_1, zu der Basisstation 104 wird hierbei als Uplink-Datenübertragung bezeichnet, während die Übertragung von Daten von der Basisstation 104 zu einem der Teilnehmer 106_1-106_n, z.B. zu dem Teilnehmer 106_1, als Downlink-Datenübertragung bezeichnet wird. Die Uplink-Datenübertragung bezeichnet (oder umfasst) demnach die Übertragung eines Uplink-Datenpakets (bzw. einer Uplink-Nachricht) von dem jeweiligen Teilnehmer zu der Basisstation 104, während die Downlink-Datenübertragung die Übertragung eines Downlink-Datenpakets (bzw. einer Downlink-Nachricht) von der Basisstation 104 zu dem jeweiligen Teilnehmer bezeichnet (oder umfasst).

Da die Uplink-Datenübertragung des jeweiligen Teilnehmers 106_1-106_n unkoordiniert erfolgt und die Sendeempfängereinheit (Transceiver) des jeweiligen Teilnehmers 106_1-106_n in der Regel nur zur Datenübertragung aktiviert wird, erfolgt die Downlink-Datenübertragung zu dem jeweiligen Teilnehmer zeitlich synchronisiert zu der Uplink-Datenübertragung, d.h. nach einer vorgegebenen Zeit und/oder Frequenz nach der Uplink-Datenübertragung aktiviert der jeweilige Teilnehmer seine Sendeempfängereinheit (Transceiver) für ein vorgegebenes Zeitintervall (Empfangsfenster), um die Downlink-Datenübertragung zu empfangen, die von der Basisstation 104 ansprechend (z.B. in Reaktion auf) auf die Uplink-Datenübertragung genau innerhalb dieses Zeitintervalls gesendet wird. Optional kann die Downlink-Datenübertragung zu dem jeweiligen Teilnehmer auch in der Frequenz synchronisiert zu der jeweiligen Uplink-Datenübertragung sein, wie z.B. auf der gleichen Frequenz (im gleichen Frequenzkanal) oder mit einem vorgegebenen Frequenzabstand.

Dies hat den Vorteil, dass die Teilnehmer 106_1-106_n ihre Sendeempfängereinheiten (Transceiver) nur für die jeweilige Datenübertragung (Uplink-Datenübertragung und/oder Downlink-Datenübertragung) aktivieren (z.B. in einen normalen Betriebsmodus) müssen, während die Sendeempfängereinheiten für die übrige Zeit deaktiviert (z.B. in einen Energiesparmodus versetzt) werden können, um Energie zu sparen. Dies ist insbesondere dann von Vorteil, wenn dem jeweiligen Teilnehmer nur begrenzte Energieressourcen zur Verfügung stehen, beispielsweise da dieser batteriebetrieben ist oder Energie mittels eines Energy-Harvesting-Elements aus der Umgebung bezieht.

Die Teilnehmer 106_1-106_n des Kommunikationssystems 100 können beispielsweise Aktorknoten und/oder Sensorknoten, wie z.B. Heizungszähler, Bewegungsmelder, Rauchmelder, usw., sein.

Optional können die Basisstation 104 und die Teilnehmer 106_1-106_n des Kommunikationssystems 100 ausgebildet sein, um Daten basierend auf dem Telegram-Splitting-Verfahren (dt. Telegrammaufteilungsverfahren) zu übertragen. Hierbei werden auf Datensenderseite die zu übertragenen Daten, wie z.B. ein Telegramm bzw. Datenpaket (z.B. der physikalischen Schicht im OSI-Modell), beispielsweise ein Uplink-Datenpaket oder ein Downlink-Datenpaket, auf eine Mehrzahl von Sub-Datenpaketen (oder Teil-Datenpaketen) aufgeteilt und die Sub-Datenpakete nicht zusammenhängend, sondern entsprechend eines Zeit- und/oder Frequenzsprungmusters in der Zeit und/oder in der Frequenz verteilt übertragen, wobei auf Datenempfängerseite die Sub-Datenpakete wieder zusammenfügt (oder kombiniert) werden, um das Datenpaket zu erhalten. Jedes der Sub-Datenpakete enthält dabei nur einen Teil des Datenpakets. Das Datenpaket kann ferner codiert (z.B. kanalcodiert oder fehlerschutzcodiert) sein, so dass zum fehlerfreien Decodieren des Datenpakets nicht alle Sub-Datenpakete, sondern nur ein Teil der Sub-Datenpakete erforderlich ist.

Die Verteilung der Mehrzahl von Sub-Datenpaketen in der Zeit- und/oder Frequenz kann, wie bereits erwähnt, entsprechend eines Zeit- und/oder Frequenzsprungmusters erfolgen.

Ein Zeitsprungmuster kann eine Abfolge von Sendezeitpunkten oder Sendezeitabständen angeben, mit denen die Sub-Datenpakete gesendet werden. Beispielsweise kann ein erstes Sub-Datenpaket zu einem ersten Sendezeitpunkt (oder in einem ersten Sendezeitschlitz) und ein zweites Sub-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Sub-Datenpaketen können Sendepausen vorhanden sein in denen nicht gesendet wird. Die Sub-Datenpakete können sich auch zeitlich überlappen (überschneiden).

Ein Frequenzsprungmuster kann eine Abfolge von Sendefrequenzen oder Sendefrequenzsprüngen angeben, mit denen die Sub-Datenpakete gesendet werden. Beispielsweise kann ein erstes Sub-Datenpaket mit einer ersten Sendefrequenz (oder in einem ersten Frequenzkanal) und ein zweites Sub-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Sub-Datenpaketes auch sowohl in der Zeit- als auch in der Frequenz verteilt übertragen werden. Die Verteilung der Mehrzahl von Sub-Datenpaketen in der Zeit und in der Frequenz kann entsprechend einem Zeit- und Frequenzsprungmuster erfolgen. Ein Zeit- und Frequenzsprungmuster kann die Kombination aus einem Zeitsprungmuster und einem Frequenzsprungmuster sein, d.h. eine Abfolge von Sendezeitpunkten oder Sendezeitabständen mit denen die Sub-Datenpakete übertragen werden, wobei den Sendezeitpunkten (oder Sendezeitabständen) Sendefrequenzen (oder Sendefrequenzsprünge) zugeordnet sind.

Eine Bandbreite der durch das Frequenzsprungmuster angegebene Belegung des Frequenzbands kann dabei wesentlich (z.B. zumindest um den Faktor 5 (oder 10) größer sein als eine Bandbreite der Empfangsfilter der Empfänger (Receiver oder Transceiver) der Teilnehmer 106_1-106_n. Zum Empfangen einer Telegram-Splitting-basierten Datenübertragung kann der jeweilige Teilnehmer daher ausgebildet sein, um die Empfangsfrequenz seines Empfängers basierend auf dem Frequenzsprungmuster (z.B. zu den jeweiligen durch das Zeitsprungmuster angegebenen Zeiten oder Zeitschlitzen) auf die jeweiligen durch das Frequenzsprungmuster angegebenen Frequenzen oder Frequenzkanäle des Frequenzbands umzuschalten, um die Mehrzahl von Sub-Datenpaketen zu empfangen.

Fig. 4 zeigt ein schematisches Blockschaltbild der Basisstation 104 und eines der Teilnehmer 106_1-106_n des in Fig. 3 gezeigten Kommunikationssystems 100, gemäß einem Ausführungsbeispiel der vorliegenden Erfindung.

Der Teilnehmer 106_1 kann einen Sender (bzw. Sendemodul; Transmitter) 108_1 aufweisen, der ausgebildet ist, um die Uplink-Datenübertragung 120 zu der Basisstation 104 zu senden. Der Sender 108_1 kann mit einer Antenne 110_1 des Teilnehmers 106_1 verbunden sein. Der Teilnehmer 106_1 kann ferner einen Empfänger (bzw. Empfangsmodul; Receiver) 112_1 aufweisen, der ausgebildet ist, um die Downlink-Datenübertragung 122 von der Basisstation 104 zu empfangen. Der Empfänger 112_1 kann mit der Antenne 110_1 oder einer weiteren Antenne des Teilnehmers 106_1 verbunden sein. Der Teilnehmer 106_1 kann auch einen kombinierten Sendeempfänger (bzw. Sendeempfangsmodul; Transceiver) aufweisen.

Die Basisstation 104 kann einen Empfänger (bzw. Empfangsmodul; Receiver) 114 aufweisen, der ausgebildet ist, um die Uplink-Datenübertragung 120 von dem Teilnehmer 106_1 zu empfangen. Der Empfänger 114 kann mit einer Antenne 116 der Basisstation 104 verbunden sein. Die Basisstation 104 kann ferner einen Sender (bzw. Sendemodul; Transmitter) 118 aufweisen, der ausgebildet ist, um die Downlink-Datenübertragung 122 zu dem Teilnehmer 106_1 zu senden. Der Sender 118 kann mit der Antenne 116 oder einer weiteren Antenne der Basisstation 104 verbunden sein. Die Basisstation 104 kann auch einen kombinierten Sendeempfänger (bzw. Sendeempfangsmodul; Transceiver) aufweisen.

Das in Bezug auf Fig. 3 und 4 beschriebene Kommunikationssystem 100 kann beispielsweise ein LPWAN (LPWAN = Low Power Wide Area Network, dt. Niedrigenergieweitverkehrnetzwerk) sein, wie es zum Beispiel im Standard ETSI TS 103 357 [4] definiert ist.

Im Folgenden werden Ausführungsbeispiele eines Teilnehmers 106_1 und einer Basisstation 104 beschrieben, die z.B. in dem oben in Bezug auf die Fig. 3 und 4 beschriebenen Kommunikationssystem 100 eingesetzt werden können. Natürlich können die nachfolgend beschriebenen Ausführungsbeispiele des Teilnehmers 106_1 und/oder der Basisstation 104 auch in anderen Kommunikationssystemen mit nicht koordiniert sendenden Teilnehmern umgesetzt bzw. implementiert werden.

### 1. Signalisierung einer Multicast-Nachricht in nicht koordinierten Netzen

Die nachfolgend beschriebenen Ausführungsbeispiele ermöglichen es, in unkoordinierten Kommunikationssystemen 100, in denen die Teilnehmer 106_1-106_n Daten asynchron an die Basisstation 104 übertragen, eine Multicast-Nachricht (Punkt-zu-Mehrpunkt-Datenübertragung) von der Basisstation 104 an die Teilnehmer 106_1-106_n oder einen Teil (echte Teilmenge) der Teilnehmer 106_1-106_n umzusetzen.

Dies könnte beispielsweise wie in Fig. 5 gezeigt umgesetzt werden, wobei während der Aussendung der Multicast-Nachricht (Punkt-zu-Mehrpunkt-Datenübertragung) 124 vorzugsweise keine anderen (z.B. die Punkt-zu-Mehrpunkt-Datenübertragung 124 überlappende/überlagernde) Datenübertragungen (z.B. Uplink-Datenübertragungen 120 und/oder Downlink-Datenübertragungen 122) stattfinden.

Im Detail zeigt Fig. 5 in einem Diagramm eine Belegung eines Frequenzbands des Kommunikationssystems 100 bei der Durchführung mehrerer Uplink-Datenübertragungen 120 und Downlink-Datenübertragungen 122 zwischen der Basisstation 104 und mehreren der Teilnehmer 106_1-106_n sowie einer Punkt-zu-Mehrpunkt-Datenübertragung 124 von der Basisstation 104 zu mehreren der Teilnehmer 106_1-106_n, gemäß einem Ausführungsbeispiel der vorliegenden Erfindung. Dabei beschreibt in Fig. 5 die Ordinate die Frequenz und die Abszisse die Zeit. Mit anderen Worten, Fig. 5 zeigt ein Beispiel einer Multicast-Nachricht (Punkt-zu-Mehrpunkt-Datenübertagung) 124 in einem nicht koordinierten Kommunikationssystem.

Damit eine solche Multicast-Nachricht (Punkt-zu-Mehrpunkt-Datenübertagung) 124 nach Fig. 5 von den Teilnehmern 106_1-106_n bzw. einer Teilmenge der Teilnehmer 106_1-106_n des Kommunikationssystems 100 empfangen werden kann, erfolgt bei Ausführungsbeispielen eine Signalisierung des Zeitpunktes t_{multicast} der Punkt-zu-Mehrpunkt-Datenübertragung 124 oder einer anderen Information, basierend auf derer die Teilnehmer 106_1-106_n die Punkt-zu-Mehrpunkt-Datenübertragung 124 empfangen können, wie dies im Folgenden ausgeführt wird.

Fig. 6 zeigt ein schematisches Blockschaltbild eines Teilnehmers 106_1 und einer Basisstation 104, gemäß einem Ausführungsbeispiel der vorliegenden Erfindung.

Der Teilnehmer 106_1 (z.B. Endpunkt) kann ausgebildet sein, um Daten unkoordiniert in Bezug auf die Basisstation 104 und/oder andere Teilnehmer des Kommunikationssystems 100 (vgl. Fig. 3) zu senden.

Der Teilnehmer 106_1 kann ferner ausgebildet sein, um eine Uplink-Datenübertragung 120 zu der Basisstation 104 zu senden, und um zeitlich synchronisiert zu der Uplink-Datenübertragung 120 eine Downlink-Datenübertragung 122 von der Basisstation 104 zu empfangen, wobei die Downlink-Datenübertragung 122 eine Signalisierungsinformation aufweist, wobei die Signalisierungsinformation eine nachfolgende Punkt-zu-Mehrpunkt-Datenübertragung 124 der Basisstation 104 und/oder eine der Punkt-zu-Mehrpunkt-Datenübertragung 124 vorangehende weitere Datenübertragung (z.B. eine die Punkt-zu-Mehrpunkt-Datenübertragung vorbereitende Datenübertragung) anzeigt bzw. signalisiert.

Der Teilnehmer 106_1 kann ferner ausgebildet sein, um basierend auf der Signalisierungsinformation die Punkt-zu-Mehrpunkt-Datenübertragung (z.B. Multicast-Datenübertragung) 124 von der Basisstation 104 zu empfangen.

Die Basisstation 104 kann ausgebildet sein, um die Uplink-Datenübertragung 120 von dem Teilnehmer 106_1 zu empfangen, und um zeitlich synchronisiert zu der empfangenen Uplink-Datenübertragung 120 die Downlink-Datenübertragung 122 zu dem Teilnehmer 106_1 zu senden, wobei die Downlink-Datenübertragung 122 die Signalisierungsinformation aufweist, wobei die Signalisierungsinformation die nachfolgende Punkt-zu-Mehrpunkt-Datenübertragung 124 der Basisstation 104 und/oder die der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigt bzw. signalisiert.

Die Basisstation 104 kann ferner ausgebildet sein, um die Punkt-zu-Mehrpunkt-Datenübertragung 124 entsprechend der Signalisierungsinformation zu dem Teilnehmer 160 (z.B. und zu einem oder mehreren anderen Teilnehmern des Kommunikationssystems 100) zu senden.

Bei Ausführungsbeispielen kann die Signalisierungsinformation eine Information über einen Zeitpunkt der Punkt-zu-Mehrpunkt-Datenübertragung 124 aufweisen. Beispielsweise kann die Information über den Zeitpunkt ein absoluter Zeitpunkt, ein relativer Zeitpunkt (z.B. eine definierte Zeitspanne zwischen der Downlink-Datenübertragung 122 und der Punkt-zu-Mehrpunkt-Datenübertragung 124) oder eine Information sein, von der der absolute oder relative Zeitpunkt abgeleitet werden kann, wie z.B. eine Anzahl von Taktzyklen eines Taktgebers (Oszillators) des Teilnehmers.

Bei Ausführungsbeispielen kann die Signalisierungsinformation zusätzlich oder alternativ eine Information über eine Frequenz oder einen Frequenzkanal (z.B. des von dem Kommunikationssystem verwendeten Frequenzbands) der Punkt-zu-Mehrpunkt-Datenübertragung 124 aufweisen. Beispielsweise kann die Information über die Frequenz eine absolute Frequenz oder eine relative Frequenz (z.B. ein Abstand zwischen einer Frequenz der Downlink-Datenübertragung 122 und einer Frequenz der Punkt-zu-Mehrpunkt-Datenübertragung 124 sein). Beispielsweise kann die Information über den Frequenzkanal ein absoluter Frequenzkanal oder ein relativer Frequenzkanal (z.B. ein Abstand zwischen einem Frequenzkanal der Downlink-Datenübertragung 120 und einem Frequenzkanal der Punkt-zu-Mehrpunkt-Datenübertragung 124 sein).

Bei Ausführungsbeispielen kann die Punkt-zu-Mehrpunkt-Datenübertragung 124 eine Mehrzahl von Sub-Datenpaketen aufweisen, die in der Zeit- und oder Frequenz entsprechend eines Zeit- und/oder Frequenzsprungmusters verteilt übertragen werden (Telegramm-Splitting-Übertragungsverfahren). In diesem Fall kann die Signalisierungsinformation ferner eine Information über das Zeit- und oder Frequenzsprungmuster der Punkt-zu-Mehrpunkt-Datenübertragung 124 aufweisen. Beispielsweise kann die Punkt-zu-Mehrpunkt-Datenübertragung 124 eine Telegram-Splitting-basierte Datenübertragung sein. Bei einer Telegram-Splitting-basierten Datenübertragung werden die zu übertragenen Daten (z.B. (codierte) Nutzdaten der physikalischen Schicht) auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Im Folgenden werden detaillierte Ausführungsbeispiele des Teilnehmers 106_1 und der Basisstation 104 näher beschrieben.

### 1.1 Signalisierung im vorherigen Downlink-Paket

Typischerweise werden von der Basisstation 104 an die Teilnehmer 106_1-106_n neben Nachrichten, welche für mehrere Teilnehmer 106_1-106_n bestimmt sind, auch individuelle Informationen übertragen, z.B. eine authentisierte Bestätigung oder eine Änderung von Parametern des jeweiligen Teilnehmers. Da diese individuell für jeden Teilnehmer sind, muss ein individueller Downlink übertragen werden.

An diesem Punkt setzten Ausführungsbeispiele der vorliegenden Erfindung an, indem der individuell übertragenen Downlink-Nachricht (Downlink-Datenübertragung) 122 der Sendezeitpunkt der folgenden Multicast-Nachricht (Punkt-zu-Mehrpunkt-Datenübertragung) 124 angehängt wird.

Stehen mehrere Frequenzkanäle zur Verfügung, kann neben der Signalisierung des Sendezeitpunktes ebenfalls die Information über den Sendekanal hinzugefügt (z.B. signalisiert) werden.

Durch diese Signalisierung ist nun einem Teilnehmer der Zeitpunkt und ggf. der Frequenzkanal der anstehenden Multicast-Nachricht (Punkt-zu-Mehrpunkt-Datenübertragung) 124 bekannt. Weitere Teilnehmer können mit Hilfe des gleichen Verfahrens ebenfalls auf die Multicast-Nachricht (Punkt-zu-Mehrpunkt-Datenübertragung) 124 synchronisiert werden.

Liegen keine individuell an den Teilnehmer zu sendenden Daten vor, kann in diesem Fall auch nur der Zeitpunkt und ggf. der Frequenzkanal in der anstehenden Downlink-Nachricht (Downlink-Datenübertragung) 124 übertragen werden.

Dieses Verfahren besitzt den Vorteil, dass exakt nur den Teilnehmern (der Mehrzahl von Teilnehmern 106_1-106_n des Kommunikationssystems 100), von denen die Multicast-Nachricht (Punkt-zu-Mehrpunkt-Datenübertragung) 124 empfangen soll, der Zeitpunkt und ggf. der Frequenzkanal mitgeteilt wird. Somit entsteht für die Teilnehmer, welche die Multicast-Nachricht (Punkt-zu-Mehrpunkt-Datenübertragung) 124 nicht empfangen sollen, kein zusätzlicher, den Batterieverbrauch erhöhender Aufwand.

Fig. 7 zeigt den Ablauf der Signalisierung der Multicast-Nachricht (Punkt-zu-Mehrpunkt-Datenübertragung) 124 von der Uplink-Nachricht (Uplink-Datenübertragung) 120 bis zur eigentlichen Multicast-Nachricht (Punkt-zu-Mehrpunkt-Datenübertragung) 124 beispielhaft für einen Teilnehmer eines unkoordinierten Funknetzes (Kommunikationssystems) 100.

Im Detail zeigt Fig. 7 in einem Diagramm eine Belegung des Frequenzbands des Kommunikationssystems 100 bei der Durchführung einer Uplink-Datenübertragung 120, einer Downlink-Datenübertagung 122 und einer Punkt-zu-Mehrpunkt-Datenübertragung 124, gemäß einem Ausführungsbeispiel der vorliegenden Erfindung. Dabei beschreibt in Fig. 7 die Ordinate die Frequenz und die Abszisse die Zeit.

Wie in Fig. 7 zu erkennen ist, erfolgt die Downlink-Datenübertragung 122 zeitlich synchronisiert zu der Uplink-Datenübertragung 120, z.B. nach einer vorgegebenen (definierten) Zeit nach der Uplink-Datenübertragung 120. Die Downlink-Datenübertragung 122 weist eine Signalisierungsinformation auf, die die nachfolgende Punkt-zu-Mehrpunkt-Datenübertragung 124 anzeigt bzw. signalisiert.

Die Signalisierungsinformation kann beispielsweise, wie dies in Fig. 7 angedeutet ist, eine Information über einen Zeitpunkt der Punkt-zu-Mehrpunkt-Datenübertragung 124 aufweisen. Natürlich kann die Signalisierungsinformation auch zusätzlich oder alternativ eine Information über eine Frequenz oder einen Frequenzkanal der Punkt-zu-Mehrpunkt-Datenübertragung 124 aufweisen.

Bei Ausführungsbeispielen kann die Signalisierungsinformation, sofern die Punkt-zu-Mehrpunkt-Datenübertragung 124 basierend auf dem Telegram-Splitting-Übertragungsverfahren (TSMA, Telegram Splitting Multiple Access) übertragen wird, eine Information über das Zeit- und/oder Frequenzsprungmuster der Punkt-zu-Mehrpunkt-Datenübertragung 124 aufweisen.

Mit anderen Worten, wird TSMA für die Übertragung der Multicast-Nachricht (Punkt-zu-Mehrpunkt-Datenübertragung) 124 eingesetzt, kann zusätzlich noch das Sprungmuster (Zeit und/oder Frequenzspurngmuster) signalisiert werden, falls dies nicht global vorab definiert wurde.

Bei Ausführungsbeispielen kann somit einem individuell generierten Downlink-Datenpaket (z.B. der Downlink-Datenübertragung 120) zu einem Teilnehmer die Information über den Sendezeitpunkt und/oder Sendekanal (Sendefrequenz) und/oder das Sprungmuster (nur bei TSMA) angehängt werden.

In [4] wurde eine sog. authentisierte Aufwach- und/oder Authentisierungsnachricht im Downlink definiert. Mit Hilfe dieser Nachricht kann die Basisstation 104 individuell einem Teilnehmer eine Bestätigung der vorrausgehenden Uplink-Nachricht schicken. Falls weitere individuelle Daten für den Teilnehmer vorliegen, wird in dieser Nachricht ebenfalls die Länge dieser Daten und der Abstand zwischen der Nachricht und den folgenden Daten signalisiert. Liegt nun eine Signalisierung einer Multicast-Nachricht an einen Teilnehmer an und es liegen keine weiteren individuellen Daten für den Teilnehmer vor, kann nur für die Signalisierung der Multicast-Nachricht die zusätzliche Übertragung neben dem Aufwach- und Authentisierungsnachricht verwendet werden.

Im Falle einer reinen Signalisierung einer Multicast-Nachricht (Punkt-zu-Mehrpunkt-Datenübertragung) 124, können die Felder, welche die Zusatzinformationen für die folgenden Daten (Längen- und Zeitinformation bzw. PSI und TSI in [4]) enthalten, auch für die direkte Signalisierung der Multicast-Nachricht (Punkt-zu-Mehrpunkt-Datenübertragung) 124 (Zeit, Frequenz, Länge, usw.) eingesetzt werden. Hierdurch reduziert sich der Overhead welcher für die separate Übertragung neben der Aufwach- und Authentisierungsnachricht nötig wäre.

Bei Ausführungsbeispielen können zur Verfügung stehende Felder in einer Aufwach- und/oder Authentisierungsnachricht (Downlink-Datenübertragung nach [4]) bei reiner Signalisierung einer Multicast-Nachricht (Punkt-zu-Mehrpunkt-Datenübertragung) 124 dafür verwendet werden.

### 1.2 Grobe Zeit-Signalisierung

Oftmals dauert es längere Zeit bis nach Abschnitt 1.1 alle notwendigen Teilnehmer über die vorherstehende Multicast-Nachricht (Punkt-zu-Mehrpunkt-Datenübertragung) 124 informiert worden sind. Gerade bei denjenigen Teilnehmern, welche sehr früh über die anstehende Multicast-Nachricht (Punkt-zu-Mehrpunkt-Datenübertragung) 124 informiert werden, muss eine sehr große Zeitdifferenz signalisiert werden. Um diese entsprechend fein auflösen zu können, sind entsprechend viele Bits nötig, welche zu übertragen sind. Bei Teilnehmern, welche (zeitlich) sehr nahe an der eigentlichen Multicast-Nachricht (Punkt-zu-Mehrpunkt-Datenübertragung) 124 darüber informiert werden, sind bei gleicher Auflösung die oberen Stellen der Bits des Datenfeldes in der Signalisierung Null.

Daraus folgt, dass abhängig von der (zeitlichen) Differenz zwischen Signalisierung und der Multicast-Nachricht (Punkt-zu-Mehrpunkt-Datenübertragung) 124 eine unterschiedlich lange Sequenz zur Signalisierung sinnvoll wäre.

Wird jedoch einen realer Teilnehmer betrachtet, welcher einen Quarz aufweist, dann zeigt sich, dass die Ungenauigkeit des Zeitpunktes, wann der Teilnehmer die Multicast-Nachricht (Punkt-zu-Mehrpunkt-Datenübertragung) 124 erwartet, ebenfalls abhängig von der Differenzzeit zwischen Signalisierung und der Multicast-Nachricht (Punkt-zu-Mehrpunkt-Datenübertragung) 124 ist.

Umso länger diese Differenz ist, umso ungenauer ist auch der Zeitpunkt welchen der Teilnehmer für die Multicast-Nachricht (Punkt-zu-Mehrpunkt-Datenübertragung) 124 annimmt. Umso ungenauer dieser Zeitpunkt ist, umso größer wählt der Teilnehmer den Suchbereich für die Multicast-Nachricht (Punkt-zu-Mehrpunkt-Datenübertragung) 124. Liegt der Suchbereich deutlich über der Auflösung des übertragenen Zeitpunktes der Multicast-Nachricht (Punkt-zu-Mehrpunkt-Datenübertragung) 124, kann die Auflösung geringer (und damit mehr Unsicherheit) gewählt werden, ohne den Suchbereich (im schlimmsten Fall addieren sich der Quarzfehler und der Auflösungsfehler) drastisch zu erhöhen.

Typische Werte für eine Ungenauigkeit bei der Signalisierung liegen im Bereich von 1 Symbol (z.B. Symboldauern) bis zu 10.000 Symbolen (z.B. Symboldauern).

Höhere Werte als 10.000 Symbole (z.B. Symboldauern) haben eine zu große Ungenauigkeit und würden eine sehr umfangreiche Nachsynchronisation erfordern.

Wichtig ist hier festzuhalten, dass bei idealen Timings die Unsicherheit noch so groß ist, dass ein Empfang ohne Nachsynchronisation nicht möglich wäre.

Bei Ausführungsbeispielen kann die Auflösung der Signalisierung eine gewisse Ungenauigkeit aufweisen, welche im Rahmen der Nachsynchronisation ermittelt werden kann.

Anstelle oder in Kombination mit der groben Signalisierung des Zeitpunktes kann auch eine nichtlineare Skalierung des Zeitpunktes gewählt werden, z.B. eine logarithmische Skalierung. Dies hat den Vorteil, dass Zeitpunkte, die nahe an der anstehenden Multicast-Nachricht (Punkt-zu-Mehrpunkt-Datenübertragung) 124 liegen, eine genauere Auflösung besitzen als Zeitpunkte, die noch weiter in der Ferne liegen. Dies ist nach den obigen Ausführungen jedoch unkritisch, da durch Quarzoffsets (z.B. Frequenzoffsets der Quarze) die Ungenauigkeiten mit steigendem (zeitlichen) Abstand zur Multicast-Nachricht (Punkt-zu-Mehrpunkt-Datenübertragung) 124 ansteigen. Somit kann auch die Auflösung entsprechend ungenauer werden, desto weiter der Zeitpunkt der Multicast-Nachricht (Punkt-zu-Mehrpunkt-Datenübertragung) 124 in der Zukunft liegt.

Bei Ausführungsbeispielen kann die Auflösung der Signalisierung eine nichtlineare Skalierung aufweisen.

### 1.3 Signalisierung einer weiteren Uplink-Nachricht

Typischerweise wird für die Signalisierung des Zeitpunktes der Multicast-Nachricht (Punkt-zu-Mehrpunkt-Datenübertagung) 124 nach Abschnitt 1.1 oder Abschnitt 1.2 eine Variable mit beispielsweise 16 Bit übertragen. Bei einer beispielhaft gewählten Quantisierung von 1 s pro LSB (Least Significant Bit, dt. niederwertigstes Bits) ergibt sich somit eine maximale Differenz zwischen der Signalisierung und der Multicast-Nachricht (Punkt-zu-Mehrpunkt-Datenübertragung) 124 von 65536 Sekunden. Dies ergibt umgerechnet etwa 18 Stunden.

Es sollte somit sichergestellt werden, dass alle notwendigen Teilnehmer für die Multicast-Nachricht (Punkt-zu-Mehrpunkt-Datenübertragung) 124 innerhalb von 18 Stunden vor der Nachricht informiert werden können.

In großen Netzen mit mehreren Hunderttausend Teilnehmern (z.B. Knoten) 106_1-106_n lässt sich dies typischerweise nicht realisieren, da es Teilnehmer geben kann, welche nur einmal am Tag oder noch seltener Daten an die Basisstation 104 übertragen. Somit ist es mit den oben gegeben Parametern nicht möglich allen Teilnehmern (z.B. Knoten) die anstehende Multicast-Nachricht (Punkt-zu-Mehrpunkt-Datenübertragung) 124 mitzuteilen bzw. zu signalisieren.

Bei Ausführungsbeispielen kann daher allen Teilnehmern, denen die Multicast-Nachricht (Punkt-zu-Mehrpunkt-Datenübertragung) 124 zeitlich vor der maximalen Signalisierungslänge mitgeteilt wird, anstelle des Zeitpunktes der Multicast-Nachricht (Punkt-zu-Mehrpunkt-Datenübertragung) 124 eine (ungefähre) Zeit mitgeteilt werden, zu denen die Teilnehmer wieder eine Uplink-Nachricht (Uplink-Datenübertragung) 120 an die Basisstation 104 senden sollen/müssen.

Wird diese neue Uplink-Nachricht (Uplink-Datenübertragung) 120 von dem Teilnehmer ausgesendet, kann die Basisstation 104 wieder eine Downlink-Nachricht (Downlink-Datenübertragung) 122 zurückschicken und in dieser dann den Zeitpunkt der Multicast-Nachricht (Punkt-zu-Mehrpunkt-Datenübertragung) 124 mitteilen.

Der zeitliche Ablauf dieses Schemas ist in Fig. 8 skizziert. Dabei wurde in der ersten Downlink-Nachricht (ersten Downlink-Datenübertragung) 122_1 eine (grobe) Zeit für eine weitere Uplink-Nachricht (zweite Uplink-Datenübertragung) 120_2 übertragen. In der zweiten Downlink-Nachricht (zweiten Downlink-Datenübertragung) 122_2 folgte dann die Mitteilung über den Zeitpunkt und/oder Frequenz für die Multicast-Nachricht (Punkt-zu-Mehrpunkt-Datenübertragung) 124.

Im Detail zeigt Fig. 8 in einem Diagramm eine Belegung des Frequenzbands des Kommunikationssystems 100 bei der Durchführung einer ersten Uplink-Datenübertragung 120_1, einer ersten Downlink-Datenübertragung 122_1, einer zweiten Uplink-Datenübertragung 120_1, einer zweiten Downlink-Datenübertragung 122_2 sowie einer Punkt-zu-Mehrpunkt-Datenübertragung 124, gemäß einem Ausführungsbeispiel der vorliegenden Erfindung. Dabei beschreibt in Fig. 8 die Ordinate die Frequenz und die Abszisse die Zeit.

Wie in Fig. 8 zu erkennen ist, erfolgt die erste Downlink-Datenübertragung 122 zeitlich synchronisiert zu der ersten Uplink-Datenübertragung 120_1, z.B. nach einer vorgegebenen (definierten) Zeit nach der ersten Uplink-Datenübertragung 120_1. Die erste Downlink-Datenübertragung 122 weist eine erste Signalisierungsinformation auf.

Die erste Signalisierungsinformation kann eine der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigen bzw. signalisieren, wobei in dem in Fig. 8 gezeigten Ausführungsbeispiel die weitere Datenübertragung sowohl die zweite Uplink-Datenübertragung 120_2 als auch die darauf zeitlich synchronisiert folgende zweite Downlink-Datenübertragung 122_2 umfassen kann.

Wie in Fig. 8 angedeutet ist, kann die erste Signalisierungsinformation einen Zeitraum oder Zeitpunkt (z.B. groben Zeitpunkt) für die zweite Uplink-Datenübertragung 120_2 signalisieren, wobei die zweite Uplink-Datenübertragung 122_2 zu dem mit der ersten Signalisierungsinformation signalisierten Zeitraum bzw. groben Zeitpunkt erfolgt, und wobei die zweite Downlink-Datenübertragung 122_2 zeitlich synchronisiert zu der zweiten Uplink-Datenübertragung 120_2, z.B. nach einer vorgegebenen (definierten) Zeit nach der ersten Uplink-Datenübertragung 120_1, erfolgt. Die zweite Downlink-Datenübertragung 122_2 kann eine zweite Signalisierungsinformation aufweisen, wobei die zweite Signalisierungsinformation die nachfolgende Punkt-zu-Mehrpunkt-Datenübertragung 124 der Basisstation 104 anzeigt bzw. signalisiert.

Die zweite Signalisierungsinformation kann beispielsweise, wie dies in Fig. 8 angedeutet ist, eine Information über einen Zeitpunkt der Punkt-zu-Mehrpunkt-Datenübertragung 124 aufweisen. Natürlich kann die zweite Signalisierungsinformation auch zusätzlich oder alternativ eine Information über eine Frequenz oder einen Frequenzkanal der Punkt-zu-Mehrpunkt-Datenübertragung 124 aufweisen. Sofern die Punkt-zu-Mehrpunkt-Datenübertragung 124 basierend auf dem Telegram-Splitting-Übertragungsverfahren (TSMA, Telegram Splitting Multiple Access) übertragen wird, kann die zweite Signalisierungsinformation auch zusätzlich oder alternativ eine Information über das Zeit- und/oder Frequenzsprungmuster der Punkt-zu-Mehrpunkt-Datenübertragung 124 aufweisen.

Mit anderen Worten, Fig. 8 zeigt eine Signalisierung einer Zeit für eine weitere Uplink-Nachricht (z.B. zweite Uplink-Datenübertragung) 120_2, wobei auf die weitere Uplink-Nachricht (z.B. zweite Uplink-Datenübertragung) 120_2 eine weitere Downlink-Nachricht (z.B. zweite Downlink-Datenübertragung) 122_2 folgt, die z.B. eine Zeit zu der Multicast-Nachricht (z.B. Punkt-zu-Mehrpunkt-Datenübertragung) 124 definiert

Sendet ein Teilnehmer noch seltener Nachrichten an die Basisstation 104, beispielsweise nur einmal pro Woche, ist es auch möglich mehrmals eine weitere Uplink-Nachricht (Uplink-Datenübertragung) anzufordern, solange bis die nötige Zeit zur Signalisierung innerhalb des gültigen Bereichs liegt.

Bei Ausführungsbeispielen kann anstelle der Signalisierung des Zeitpunktes der Multicast-Nachricht (Punkt-zu-Mehrpunkt-Datenübertragung), eine (grobe, ungefähre) Zeit definiert werden, zu der der Teilnehmer eine weitere Uplink-Nachricht verschicken soll/muss.

Durch die fehlende Koordination des Kommunikationssystems (Funknetzes) 100 kann es zu Störungen und Ausfällen bei der Übertragung kommen. Häufig wird das hierin beschriebene Kommunikationssystem 100 in lizenzfreien Bändern betrieben, in denen sich das Kommunikationssystem 100 die Ressourcen mit anderen Kommunikationssystemen (vgl. Fig. 3) teilt, wobei das Kommunikationssystem 100 und die anderen Kommunikationssysteme gegenseitig nicht koordiniert sind. Somit kann es ebenfalls zu Störungen durch fremde Kommunikationssysteme kommen.

Durch das Telegram-Splitting-Übertragungsverfahren wurde zwar eine Methodik entwickelt, welche eine sehr hohe Störfestigkeit aufweist, jedoch kann auch hier keine hundertprozentige Durchkommenswahrscheinlichkeit garantiert werden.

Wurde einem Teilnehmer nach Abschnitt 1.3 eine weitere Aussendung einer Uplink-Nachricht (Uplink-Datenübertragung) mitgeteilt, kann der Teilnehmer mit einer sicheren Antwort der Basisstation 104 im Downlink (z.B. in Form einer Downlink-Datenübertragung) rechnen.

Wird von dem Teilnehmer jedoch keine oder nur eine falsche/fehlerhafte/zerstörte Downlink-Nachricht (Downlink-Datenübertragung) empfangen, ist dem Teilnehmer bekannt, dass bei der Übertragung etwas nicht korrekt gelaufen ist (z.B. durch Störung im Kanal).

In diesem Fall kann der Teilnehmer zeitnah eine weitere Uplink-Nachricht (z.B. eine dritte Uplink-Datenübertragung) (z.B. eine Wiederholung der vorherigen Uplink-Nachricht (z.B. der zweiten Uplink-Datenübertragung 120_2)) an die Basisstation 104 senden. Danach wird wieder auf die Downlink-Nachricht (z.B. dritte Downlink-Datenübertragung) der Basisstation 104 gewartet. Wird diese nun korrekt empfangen, ist sichergestellt, dass die Uplink-Nachricht (z.B. dritte Uplink-Datenübertragung) nun korrekt an der Basisstation 104 eingetroffen ist. Andernfalls kann der Teilnehmer ein weiteres Empfangsfenster (z.B. für eine weitere Downlink-Datenübertragung) aufmachen (insofern das der Basisstation 104 bekannt ist) oder eine nochmalige Aussendung einer Uplink-Nachricht (Uplink-Datenübertragung) vornehmen.

Bei Ausführungsbeispielen kann, sofern auf die zeitlich (grob) signalisierte weitere Uplink-Nachricht (z.B. zweite Uplink-Datenübertragung), keine korrekte Antwort im Downlink (z.B. in Form einer zweiten Downlink-Datenübertragung) erhalten wurde, (zeitnah) eine weitere Uplink-Nachricht (z.B. dritte Uplink-Datenübertragung) versendet werden.

Alternativ zur Signalisierung der Multicast-Nachricht (Punkt-zu-Mehrpunkt-Datenübertragung) 124 kann auch weiterhin der Zeitpunkt der Multicast-Nachricht (Punkt-zu-Mehrpunkt-Datenübertragung) 124 mittgeteilt werden, jedoch mit einer anderen Auflösung (z.B. 1 min -> 1,5 Monate Range). Der Teilnehmer kann dann selbst entscheiden wann (vor der Multicast-Nachricht (Punkt-zu-Mehrpunkt-Datenübertragung) 124) er wieder eine Uplink-Nachricht (z.B. vierte Uplink-Datenübertragung) sendet, um den genaueren Zeitpunkt (der Punkt-zu-Mehrpunk-Datenübertragung 124) zu erhalten.

Dadurch kann der Teilnehmer z.B. bis 1h vor der Multicast-Nachricht (Punkt-zu-Mehrpunkt-Datenübertragung) 124 warten, ob ohnehin ein Uplink-Nachricht (Uplink-Datenübertragung) notwendig ist und er damit den genauen Zeitpunkt erhält. Ist dies nicht der Fall, dann kann der Teilnehmer eine dedizierte Uplink-Nachricht (z.B. vierte Uplink-Datenübertragung) senden. Die dedizierte Uplink-Nachricht (z.B. vierte Uplink-Datenübertragung) sollte dabei natürlich (pseudo) zufällig in der verbleibenden Zeit platziert werden, damit nicht alle Teilnehmer (z.B. Knoten), die noch keine genaue Zeitsynchronisation für die Multicast-Nachricht (Punkt-zu-Mehrpunkt-Datenübertragung) 124 haben, auf einmal senden.

Bei Ausführungsbeispielen kann die Auflösung bei der Signalisierung des Zeitpunktes bei Teilnehmern, die lange vor der eigentlichen Multicast Nachricht informiert werden, größer gewählt werden. Der Teilnehmer kann dann zunächst abwarten ob bis kurz vor der Multicast-Nachricht (Punkt-zu-Mehrpunkt-Datenübertragung) 124 eine Uplink-Nachricht (Uplink-Datenübertragung) angefallen ist. Falls nicht kann eine dedizierte Uplink-Nachricht (z.B. vierte Uplink-Datenübertragung) ausgelöst werden.

### 1.4 Signalisierung der Zeit und/oder des Frequenzkanals einer Stützbake

Bei Ausführungsbeispielen kann vor der Übertragung einer Multicast-Nachricht (Punkt-zu-Mehrpunkt-Datenübertragung) 124 eine sog. Stützbake eingesetzt werden. In einer solchen Stützbake kann eine Signalisierung bis zur nächsten Stützbake bzw. bis zur Multicast-Nachricht (Punkt-zu-Mehrpunkt-Datenübertragung) 124 enthalten sein.

Bei Ausführungsbeispielen können die Teilnehmer (des Kommunikationssystems 100) auf diese Stützbaken synchronisiert werden. In gleicher Weise wie in Abschnitt 1.1 kann z.B. die Zeit bis zur Stützbake und ggf. der verwendete Frequenzkanal der Stützbake signalisiert werden, wie dies schematisch in Fig. 9 skizziert ist.

Fig. 9 zeigt in einem Diagramm eine Belegung des Frequenzbands des Kommunikationssystems 100 bei der Durchführung einer Uplink-Datenübertragung 120, einer Downlink-Datenübertragung 122 sowie einer Punkt-zu-Mehrpunkt-Datenübertragung 124, gemäß einem Ausführungsbeispiel der vorliegenden Erfindung. Dabei beschreibt in Fig. 9 die Ordinate die Frequenz und die Abszisse die Zeit.

Wie in Fig. 9 zu erkennen ist, erfolgt die Downlink-Datenübertragung 122 zeitlich synchronisiert zu der Uplink-Datenübertragung 120, z.B. nach einer vorgegebenen (definierten) Zeit nach der Uplink-Datenübertragung 120. Die Downlink-Datenübertragung 122 weist eine erste Signalisierungsinformation auf.

Die erste Signalisierungsinformation kann eine der Punkt-zu-Mehrpunkt-Datenübertragung 124 vorangehende weitere Datenübertragung (z.B. die Punkt-zu-Mehrpunkt-Datenübertragung vorbereitende Datenübertragung) anzeigen bzw. signalisieren, wobei in dem in Fig. 9 gezeigten Ausführungsbeispiel die weitere Datenübertragung eine Stützbake 123 ist.

Wie in Fig. 9 angedeutet ist, kann die erste Signalisierungsinformation eine Information über einen Zeitpunkt des Stützbakens 123 aufweisen. Natürlich kann die erste Signalisierungsinformation auch zusätzlich oder alternativ eine Information über eine Frequenz oder einen Frequenzkanal der Stützbake aufweisen. Sofern die Stützbake 123 basierend auf dem Telegram-Splitting-Übertragungsverfahren (TSMA, Telegram Splitting Multiple Access) übertragen wird, kann die erste Signalisierungsinformation auch zusätzlich oder alternativ eine Information über das Zeit- und/oder Frequenzsprungmuster der Stützbake 124 aufweisen.

Die Stützbake kann eine zweite Signalisierungsinformation aufweisen, wobei die zweite Signalisierungsinformation eine weitere Stützbake oder die nachfolgende Punkt-zu-Mehrpunkt-Datenübertragung 124 der Basisstation 104 anzeigt bzw. signalisiert.

Die zweite Signalisierungsinformation kann beispielsweise, wie dies in Fig. 9 angedeutet ist, eine Information über einen Zeitpunkt der Punkt-zu-Mehrpunkt-Datenübertragung 124 aufweisen. Natürlich kann die zweite Signalisierungsinformation auch zusätzlich oder alternativ eine Information über eine Frequenz oder einen Frequenzkanal der Punkt-zu-Mehrpunkt-Datenübertragung 124 aufweisen. Sofern die Punkt-zu-Mehrpunkt-Datenübertragung 124 basierend auf dem Telegram-Splitting-Übertragungsverfahren (TSMA, Telegram Splitting Multiple Access) übertragen wird, kann die zweite Signalisierungsinformation auch zusätzlich oder alternativ eine Information über das Zeit- und/oder Frequenzsprungmuster der Punkt-zu-Mehrpunkt-Datenübertragung 124 aufweisen.

Mit anderen Worten, Fig. 9 zeigt eine Signalisierung der Zeit und ggf. des Frequenzoffsets von einer Nachricht eines Teilnehmers (Downlink-Datenübertragung 120) bis zu einer Stützbake 123.

Bei Ausführungsbeispielen kann einem individuell generierten Downlink-Datenpaket (z.B. einer Downlink-Datenübertragung 120) zu einem Teilnehmer die Information über den Sendezeitpunkt und/oder Sendekanal (Sendefrequenz) und/oder Sprungmuster (nur bei TSMA) einer Stützbake angehängt werden.

### 1.5 Kompensation von Quarzoffsets

Wie bereits Abschnitt 1.2 erwähnt wurde, besitzen sowohl die Teilnehmer 106_1-106_n als auch die Basisstation 104 in der Regel Schwingquarze (z.B. als Taktgeber) zur Erzeugung interner Referenzfrequenzen. Diese Quarze sind jedoch nicht ideal und besitzen sog. Toleranzen auf den bereitgestellten Frequenzen. Diese Toleranzen übertragen sich auch auf die internen Referenzfrequenzen.

Aus diesen Referenzfrequenzen werden unter anderem die Sendefrequenz als auch die Zeitgeber (engl. timer) gespeist, welche die Zeitdifferenzen zwischen den Nachrichten bestimmen. Somit wirken sich die Toleranzen des Quarzes direkt auf die Übertragung und auch den Empfang von Nachrichten aus.

In [4] wird beispielsweise die Empfangsfrequenz eines Teilnehmers aus der Uplink-Nachricht (Uplink-Datenübertragung) geschätzt und die Sendefrequenz im Downlink entsprechend so modifiziert, dass der Teilnehmer die Downlink-Nachricht (Downlink-Datenübertragung) ohne Frequenzoffset empfangen kann. Mit anderen Worten, die Eigenschaften der Downlink-Nachricht (Downlink-Datenübertragung) werden entsprechend des Frequenzoffsets (des Quarzes) des Teilnehmers so angepasst, dass der Teilnehmer den Frequenzoffset des Quarzes nicht mehr sieht.

Dieses Schema funktioniert einwandfrei, solange nur eine Kommunikation zwischen einer Basisstation 104 und einem Teilnehmer 106_1 erfolgt. Kommuniziert eine Basisstation 100 mit zwei oder mehr Teilnehmern 106_1-106_n, erhält die Basisstation 104 für jeden der Teilnehmer 106_1-106_n einen anderen Frequenzoffset, welcher durch den jeweiligen Quarz erzeugt wurde.

Damit ist es nicht möglich eine Multicast-Nachricht (Punkt-zu-Mehrpunkt-Datenübertragung) 124 an alle Teilnehmer 106_1-106_n so zu versenden, dass alle Teilnehmer 106_1-106_n keinen oder einen vernachlässigbar geringen Frequenzoffset und/oder Zeitoffset (Zeitversatz) durch ihren Quarz sehen.

Jeder Teilnehmer (z.B. Knoten) muss aufgrund seiner zulässigen Toleranzen eine Zeit- und Frequenzsynchronisation bei Beginn der Multicast-Nachricht (Punkt-zu-Mehrpunkt-Datenübertragung) 124 durchführen.

Ausgehend von einem typischen Schwingquarz mit 20 ppm Toleranzbereich und der beispielhaft in Abschnitt 1.3 gezeigten maximalen Signalisierungslänge von ca. 18 h ergibt sich eine maximale zeitliche Ungenauigkeit des Teilnehmers zum Zeitpunkt der Übertragung der Multicast-Nachricht (Punkt-zu-Mehrpunkt-Datenübertragung) 124 von 65536 s * 20 ppm = 1,31 s. Der Teilnehmer muss somit einen Suchbereich von ± 1,31 s vor und nach dem angenommenen Zeitpunkt der Multicast-Nachricht (Punkt-zu-Mehrpunkt-Datenübertragung) 124 nach dem korrekten Zeitpunkt absuchen.

Ähnliches gilt für den Frequenzoffset, bei einer typischen Trägerfrequenz von 900 MHz beträgt der maximale Offset ± 18 kHz, welcher vom jeweiligen Teilnehmer abgesucht werden muss.

Sind im Teilnehmer entsprechend schnelle Prozessoren für eine Echtzeitsuche vorhanden, kann dieser den korrekten Zeitpunkt und den Frequenzoffset ohne großen Speicherbedarf ermitteln. Kann die Suche jedoch nicht echtzeitfähig durchgeführt werden, kann alternativ eine Speicherung aller Basisbanddaten für eine anschließende Offline-Auswertung erfolgen.

Im zweiten Fall besitzen die Teilnehmer typischerweise nur sehr kleine Mikroprozessoren, auf denen eine komplette Speicherung der Basisbanddaten mit solch großen Ungenauigkeiten nicht möglich ist.

Es sei das folgende Beispiel betrachtet: Die Datenrate der Multicast-Nachricht (Punkt-zu-Mehrpunkt-Datenübertragung) 124 beträgt 5 kHz. Bei den oben erwähnten 20 ppm Quarzoffset beträgt die abzusuchende Bandbreite somit mindestens 2*18 kHz + 5 kHz = 41 kHz. Damit beträgt die Abtastrate bei Verwendung eines SDR-Frontends im Basisband (I-Phase und Q-Phase) ebenfalls mindestens 41 kSamples/s. Bei dem oben erwähnten Suchbereich von ±1,31 s müssen somit 107.420 Samples im Speicher für die Verarbeitung zwischengespeichert werden können. Bei einer typischen ADC-Auflösung von 16 Bit (16 Bit I-Phase und 16 Bit Q-Phase) benötigt dies einen mindestens 429,680 kByte großen Arbeitsspeicher. Typische Werte für Arbeitsspeicher auf kleinen Mikroprozessoren liegen unter 100 kByte (z.B. 64 kByte). Somit kann eine Offlineverarbeitung des gesamten Suchbereichs nicht erfolgen.

In beiden Fällen ist zusätzlich ein sehr hoher Rechenaufwand von Nöten und somit wird auch der Stromverbrauch deutlich erhöht, was gerade bei batteriebetriebenen Teilnehmern sehr kritisch ist.

Es gilt somit große Suchbereiche sowohl in Zeit- als auch in Frequenzrichtung zu vermeiden.

In manchen Systemen besitzen die Teilnehmer auch mehr als einen Quarz, wie z.B. einen LF-Quarz (LF = low frequency, dt. Niedrigfrequenz) und einen HF-Quarz (HF = high frequency, dt. Hochfrequenz). Der LF-Quarz benötigt in der Regel weniger Strom als der HF-Quarz. Deshalb wird der LF-Quarz in der Regel dauerhaft betrieben und davon die Timings abgeleitet. Der Funkchip benötigt jedoch einen höheren Takt und wird deshalb mit dem HF-Quarz betrieben. Die Sendefrequenz hängt somit vom HF-Quarz ab. Der HF-Quarz kann aus Stromgründen zwischen den Aussendungen abgeschaltet werden.

Der LF-Quarz hat typischerweise eine höhere Toleranz als der HF-Quarz. Beispielsweise kann der LF-Quarz eine Toleranz von z.B. 100 ppm aufweisen, wohingegen der HF-Quarz eine Toleranz von z.B. 20 ppm aufweisen kann.

Wie bereits erwähnt wird in [4] eine Messung/Schätzung der Trägerfrequenz durchgeführt. Daraus kann mit Hilfe der erwarteten Trägerfrequenz der Frequenzoffset und daraus der Quarzfehler bestimmt werden. Alternativ oder in Kombination mit der Schätzung der Trägerfrequenz, wäre es ebenfalls möglich die Zeitabstände (zwischen zwei Telegrammen/Pakten/Aussendungen oder innerhalb einer Aussendung bei Telegram-Splitting) zu messen, um die Abweichung des Quarzes zu schätzen.

Dieser Offset bzw. diese Offsets kann bzw. können zusammen mit den Parametern aus den vorherigen Abschnitten 1.1 bis 1.4 ebenfalls im Downlink (d.h. mit der Downlink-Datenübertragung) übertragen werden. Dadurch kennt der Teilnehmer nun seinen Quarzoffset zum Zeitpunkt der Aussendung der Uplink-Nachricht (Uplink-Datenübertragung).

Alternativ kann auch der mittlere Quarzoffset aus mehreren vorherigen Uplink-Nachrichten (Uplink-Datenübertragungen) verwendet werden und/oder falls die Temperatur vorhanden sein sollte, die Temperaturabhängigkeit mit einbezogen werden (temperaturnormalisierte Frequenzabweichung mitteilen).

Wird die Methode der Quarzoffset-Bestimmung durch den Zeitversatz angewandt, kann auch der akkumulierte Offset (z.B. Zeitoffset) bestimmt werden. Hierbei ist der Basisstation 104 die Zeit zwischen zwei beliebigen Aussendungen (z.B. Uplink-Datenübertragungen) (d.h. nicht notwendigerweise zweier aufeinanderfolgender Aussendungen) bekannt. Die Basisstation 104 empfängt nun die beiden Aussendungen (z.B. Uplink-Datenübertragungen) und bestimmt die zeitliche Abweichung zwischen den Aussendungen (z.B. Uplink-Datenübertragungen). Daraus lässt sich der akkumulierte Quarzoffset (z.B. Zeitoffset) bestimmen. Die Abweichungen des Quarzes durch Temperaturschwankungen während der Zeit zwischen den beiden Aussendungen (z.B. Uplink-Datenübertragungen) ist somit akkumuliert, da für die Bestimmung der Sendezeitpunkte der Quarz dauerhaft laufen muss und somit immer die momentanen Umgebungsbedingungen Einfluss auf den Quarz haben.

Anders sieht es aus, wenn der Quarzoffset durch die Sendefrequenz bestimmt wird, da nur der Offset (z.B. Frequenzoffset) zum aktuellen Sendezeitpunkt einen Einfluss auf die Sendefrequenz hat.

Typischerweise ändern sich Umweltbedingungen an dem jeweiligen Teilnehmer nicht schlagartig, so dass angenommen werden kann, dass, wenn der aktuelle Quarzoffset (z.B. Frequenzoffset des Quarzes) bekannt ist, dass der maximale Fehler über der Zeit zwischen Signalisierung der Multicast-Nachricht (Punkt-zu-Mehrpunkt-Datenübertragung) 124 und der eigentlichen Aussendung (der Punkt-zu-Mehrpunkt-Datenübertragung 124), kleiner ist als der maximal zulässige Quarzoffset.

Hierdurch reduziert sich der Suchbereich sowohl in Zeit- als auch in Frequenzrichtung, was Rechenleistung, Speicherplatz und somit auch Energie einspart. Werden die gleichen Parameter wie im vorherigen Beispiel gewählt, nur dass in diesem Fall der Quarzoffset im jeweiligen Teilnehmer auf Basis des Wertes aus der vorhergehenden Uplink-Nachricht (Uplink-Datenübertragung) korrigiert wurde, reduziert sich der maximal mögliche Restoffset (z.B. restliche Frequenzoffset) auf beispielhaft 5 ppm.

Der maximale Suchbereich in Zeitrichtung reduziert sich somit auf 328 ms bzw. in Frequenzrichtung auf 4,5 kHz. Somit ist nur ein Viertel des Speicherplatzes notwendig und auch die Rechenleistung reduziert sich um diesen Faktor.

Ist in den jeweiligen Teilnehmern mehr als einem Quarz verbaut, kann die Basisstation 104 auch für mehrere Quarze entsprechend den Offset (z.B. Frequenzoffset) bestimmt und diesen signalisiert (z.B. in der Downlink-Datenübertragung). Alternativ kann im Teilnehmer (z.B. Knoten) auch eine Kopplung der Quarze durchgeführt werden. Dadurch wird erreicht, dass die (z.B. alle) Quarze (des jeweiligen Teilnehmers) den gleichen Offset (z.B. Frequenzoffset) besitzen. In diesem Fall reicht es aus, wenn die Basisstation 104 nur den Offset (z.B. Frequenzoffset) eines Quarzes schätzt, da der jeweilige Teilnehmer den Offset direkt auf die anderen Quarze anwenden kann.

Bei Ausführungsbeispielen kann der Quarzversatz des Teilnehmers aus der Uplink-Nachricht (Uplink-Datenübertragung) bestimmt und dem Teilnehmer in der folgenden Downlink-Nachricht (Downlink-Datenübertragung) mitgeteilt werden. Der Teilnehmer kann diesen Versatz korrigieren und beim Empfang der Multicast-Nachricht (Punkt-zu-Mehrpunkt-Datenübertragung) entsprechend kleinere Suchfenster wählen.

Alternativ zur Signalisierung des Quarzoffsets (z.B. Frequenzoffsets des Quarzes) aus dem Uplink (z.B. der Uplink-Datenübertragung) kann die Basisstation 104 den Quarzoffset auch dazu verwenden, um den signalisierten Zeitpunkt der Multicast-Nachricht (Punkt-zu-Mehrpunkt-Datenübertragung) anzupassen. Die Basisstation 104 kann hierzu die Abweichung des Zeitpunkts unter Berücksichtigung des Quarzoffsets des Teilnehmers (z.B. Endpunkts) berechnen und entsprechend den "falschen" bzw. korrigierten Zeitpunkt signalisieren. Ähnliches gilt für die Signalisierung des Frequenzkanals und ggf. des Sprungmusters bei Telegram-Splitting.

Der Teilnehmer muss so nichts über seinen Quarzoffset wissen und kann bei der Suche des Beginns der Multicast-Nachricht (Punkt-zu-Mehrpunkt-Datenübertragung) einen geringeren Quarzfehler (siehe oben) annehmen.

Bei Ausführungsbeispielen kann der Quarzversatz (z.B. Frequenzoffset des Quarzes) des Teilnehmers bei der Signalisierung des Startzeitpunktes (z.B. der Punkt-zu-Mehrpunkt-Datenübertragung 124) berücksichtigt und entsprechend in der Basisstation 104 modifiziert werden.

### 2. Punkt-zu-Mehrpunkt-Datenübertragung mit Synchronisationsdatenpaket zur Synchronisation der Teilnehmer

Es wird im Folgenden vorausgesetzt, dass es innerhalb jedes Netzwerks (oder Kommunikationssystems) 100 eine koordinierende Instanz (z.B. Basisstation 104) sowie nicht-koordinierende Teilnehmer (z.B. Endgeräte oder Endpunkte) 106_1-106_n gibt.

Für den Betrieb von Niedrigenergie-Weitverkehrsnetzwerken (LPWANs) hat sich die Übertragung von Nachrichten in Form des Telegrammaufteilungs-Verfahrens (Telegram Splitting) als besonders vorteilhaft erwiesen. Die Grundzüge dieses Übertragungsprinzips sind beispielhaft in [1], [2], [5] dargestellt. Hierbei wird eine Nachricht (Datenpaket (z.B. der physikalischen Schicht im OSI Modell)) in eine Vielzahl von Teil-Datenpaketen aufgeteilt und auf unterschiedliche Zeit-/Frequenzressourcen verteilt übertragen. Die Abfolge der Aussendungen der Teil-Datenpakete in Zeit und/oder Frequenz wird als Kanalzugriffsmuster oder Sprungmuster bezeichnet.

Bei Kanalzugriffsverfahren kommt z.B. in LPWAN Netzwerken oftmals ein "konkurrenzbasierter Zugriff" (engl. contention based access) zum Einsatz. Hierbei stehen den Teilnehmern (z.B. Endgeräten) 106_1-106_n keine exklusiv zugewiesenen Ressourcen zu Verfügung, sondern mehrere Teilnehmer (z.B. Endgeräte) 106_1-106_n greifen eigeninitiativ auf ein gemeinsames Angebot an Funkressourcen zu. Dadurch kann es zu Zugriffskonflikten kommen, d.h. zur gleichzeitigen Belegung von Funkressourcen durch zwei oder mehr Teilnehmer. Um die Auswirkung solcher Zugriffskonflikte zu minimieren, steht den Teilnehmern (z.B. Endgeräten) 106_1-106_n ein Vorrat von untereinander unterschiedlichen Kanalzugriffsmustern (Sprungmustern) zur Verfügung.

Möchte die Basisstation 104 eine Nachricht an einen Teilnehmer (z.B. Endgerät) 106_1 senden, erfolgt dies zu einem fest definierten Zeit- und Frequenzpunkt (Empfangsfenster). Ansonsten wäre es dem Teilnehmer (z.B. Endgerät) nicht möglich mit seinen begrenzten Ressourcen die Nachricht (z.B. Datenpaket; z.B. Downlink-Datenübertragung) zu empfangen. Um eine Nachricht gleichzeitig an mehrere Teilnehmer (z.B. Endgeräte) 106_1-106_n zu übertragen (Multicast), müssen die Empfangsfenster der Teilnehmer (z.B. Endgeräte) 106_1-106_n aufeinander abgestimmt werden.

Im normalen Betrieb laufen die Teilnehmer (z.B. Endgeräte) 106_1-106_n jedoch völlig asynchron zu anderen Teilnehmern und zur Basisstation 104.

Aussendungen der Basisstation 104 an mehrere Teilnehmer (z.B. Endknoten) werden als Multicast (Punkt-zu-Mehrpunkt-Datenübertragung) bezeichnet. Der Spezialfall, dass eine Aussendung an alle Teilnehmer (z.B. Endknoten) gerichtet ist, wird als Broadcast bezeichnet. Dieser ist ebenfalls von Ausführungsbeispielen abgedeckt.

Netzwerke (Kommunikationssysteme), die das Telegram-Splitting-Verfahren nutzen, belegen für die einzelne Aussendung eines Teil-Datenpakets nur eine geringe Bandbreite. Da für die Synchronisation aber der Empfang mehrerer Teil-Datenpakete von Nöten ist und diese mittels Frequenzsprungverfahren über eine große Bandbreite verteilt werden, um die Störanfälligkeit zu verringern, ist es für die Synchronisation mit einem Telegram-Splitting-Signal weiterhin notwendig, einen großen Frequenzbereich für die initiale Synchronisation zu betrachten.

In kleinen (häufig batteriebetriebenen) (Low-Cost, dt. kostengünstigen) Teilnehmern steht eine derart hochratige Datenverarbeitung (wie sie für den zuvor genannten Frequenzbereich nötig ist) nicht zur Verfügung und auch eine dafür notwendige Empfangsbandbreite kann normalerweise nicht bereitgestellt werden. Somit steht einem (Low-Cost) Teilnehmer nicht die Möglichkeit zur Verfügung eine Multicast-Nachricht (Punkt-zu-Mehrpunkt-Datenübertragung) ohne zusätzliche Informationen zu empfangen.

An diesem Punkt setzten die nachfolgenden Ausführungsbeispiele an, gemäß denen vor der Multicast-Nachricht (Punkt-zu-Mehrpunkt-Datenübertragung) sog. Synchronisations-(Teil- )Datenpakete anfügt werden, die von den adressierten Teilnehmern zur Synchronisation in Zeit und/oder Frequenz eingesetzt werden können.

Die im Folgenden beschriebenen Ausführungsbeispiele ermöglichen es somit Teilnehmern 106_1-106_n (z.B. einschließlich des Teilnehmers 106_1) welche in einem nicht synchronisierten Netz (Kommunikationssystem) 100 arbeiten, sich auf eine Nachricht an mehrere Teilnehmer (Punkt-zu-Mehrpunkt-Datenübertragung 124) zu synchronisieren. Dabei ist der Teilnehmer 106_1 nicht in der Lage die breitbandige Übertragung der Multi-Cast-Nachricht (Punkt-zu-Mehrpunkt-Datenübertragung) 124 in voller Bandbreite zu empfangen und in Echtzeit zu verarbeiten.

Der Hauptaspekt gilt dabei dem zweistufigen Synchronisierungsvorgang, dem Aufbau und Detektionsvorgang der Synchronisationssequenz, in welcher sich die eindeutige Information über das verwendete Empfangsfenster befindet.

Fig. 10 zeigt ein schematisches Blockschaltbild eines Teilnehmers 106_1 und einer Basisstation 104, gemäß einem Ausführungsbeispiel der vorliegenden Erfindung.

Der Teilnehmer 106_1 (z.B. Endpunkt) kann ausgebildet sein, um Daten unkoordiniert in Bezug auf die Basisstation 104 und/oder andere Teilnehmer des Kommunikationssystems 100 (vgl. Fig. 3) zu senden.

Der Teilnehmer 106_1 kann ferner ausgebildet sein, um ein Synchronisationsdatenpaket 126 einer Punkt-zu-Mehrpunkt-Datenübertragung 124 einer Basisstation 104 des Kommunikationssystems 100 zu empfangen, wobei das Synchronisationsdatenpaket 126 in einem vorgegebenen oder dem Teilnehmer bekannten Frequenzbereich 125 des Frequenzbands 103 des Kommunikationssystems 100 übertragen wird.

Der Teilnehmer 106_1 kann ferner ausgebildet sein, um basierend auf dem Synchronisationsdatenpaket 126 ein zu dem Synchronisationsdatenpaket 128 in der Zeit und/oder Frequenz referenziertes Nutzdatenpaket 128 der Punkt-zu-Mehrpunkt-Datenübertragung 124 zu empfangen.

Die Basisstation 104 kann ausgebildet sein, um die Punkt-zu-Mehrpunkt-Datenübertragung 124 zu unkoordiniert sendenden Teilnehmern 106_1-106_n des Kommunikationssystems 100, einschließlich des Teilnehmers 106_1, zu senden, wobei die Punkt-zu-Mehrpunkt-Datenübertragung 124 ein Synchronisationsdatenpaket 126 und ein zu dem Synchronisationsdatenpaket 126 in der Zeit und/oder Frequenz referenziertes (z.B. synchronisiertes; z.B. mit einem vorgegebenen bzw. definierten Zeit- und/oder Frequenzabstand gesendetes) Nutzdatenpaket 128 aufweist, wobei das Synchronisationsdatenpaket 126 in einem vorgegebenen oder den Teilnehmern 106_1-106_n bekannten Frequenzbereich 125 des Frequenzbands 103 des Kommunikationssystems 100 übertragen wird.

Bei Ausführungsbeispielen kann das Synchronisationsdatenpaket 126 eine Synchronisationsinformation, wie z.B. eine Synchronisationssequenz oder Pilotsequenz, aufweisen, wobei der Teilnehmer 106__1 ausgebildet sein kann, um sich auf die Synchronisationsinformation (z. B. eine Synchronisationssequenz) zu synchronisieren.

Dadurch können dem Teilnehmer 106_1 z.B. ein (relativer) Zeitpunkt (oder Zeitschlitz) und/oder eine (relative) Frequenz (oder Frequenzkanal) (der Übertragung) des Synchronisationsdatenpakets 126 bekannt sein. Basierend auf dem (relativen) Zeitpunkt (oder Zeitschlitz) und/oder der (relativen) Frequenz (oder Frequenzkanal) des Synchronisationsdatenpakets 126 und einer Information über einen Zeitpunkt (oder Zeitschlitz) und/oder eine Frequenz (oder Frequenzkanal) und/oder ein Sprungmuster (z.B. im Falle von TSMA) der Übertragung des Nutzdatenpakets 128 (z.B. in Bezug auf bzw. relativ zum Synchronisationsdatenpaket 126), welche z.B. in dem Synchronisationsdatenpaket 126 enthalten sein kann oder die von einer mit dem Synchronisationsdatenpaket 126 übertragenen Information abgeleitet werden kann oder die dem Teilnehmer 106_1 anderweitig bekannt ist, wie z.B. aus einer vorherigen Downlink-Datenübertragung 122 oder im System (fest) definiert ist, ist es dem Teilnehmer 106_1, der eigentlich unkoordiniert (und asynchron) in Bezug auf die Basisstation 104 sendet, möglich, das Nutzdatenpaket 128 der Punkt-zu-Mehrpunkt-Datenübertragung 124 der Basisstation 104 zu empfangen.

Bei Ausführungsbeispielen kann zur Signalisierung der Punkt-zu-Mehrpunkt-Datenübertragung 124 eine Signalisierungsinformation verwendet werden, die z.B. mit einer Downlink-Datenübertragung 122 von der Basisstation 104 zu dem Teilnehmer 106_1 gesendet wird.

Im Detail kann der Teilnehmer 106_1 ausgebildet sein, um zeitlich synchronisiert zu einer gesendeten Uplink-Datenübertragung 120 eine Downlink-Datenübertragung 122 von der Basisstation 104 zu empfangen, wobei die Downlink-Datenübertragung 122 eine Signalisierungsinformation aufweist, wobei die Signalisierungsinformation die Übertragung der Punkt-zu-Mehrpunkt-Datenübertragung 124, oder genauer genommen, die Übertragung des Synchronisationsdatenpakets 126 der Punkt-zu-Mehrpunkt-Datenübertragung 124 signalisiert.

Der Teilnehmer 106_1 kann dabei ausgebildet sein, um basierend auf der Signalisierungsinformation das Synchronisationsdatenpaket 126 der Punkt-zu-Mehrpunkt-Datenübertragung 124 zu empfangen.

Bei Ausführungsbeispielen kann die Signalisierungsinformation zumindest eines aus
- eine Information über einen Zeitpunkt (z.B. Zeitschlitz) der Übertragung des Synchronisationsdatenpakets 126,
- eine Information über den (vorgegebenen) Frequenzbereich 125, in dem das Synchronisationsdatenpaket 126 übertragen wird.
- eine Information über ein Zeit- und/oder Frequenzsprungmuster basierend auf dem das Synchronisationsdatenpaket 126 übertragen wird,
aufweisen.

Beispielsweise kann die Information über den Zeitpunkt ein absoluter Zeitpunkt (oder Zeitschlitz), ein relativer Zeitpunkt (oder Zeitschlitz) (z.B. eine definierte Zeitspanne zwischen der Downlink-Datenübertragung 122 und der Übertragung des Synchronisationsdatenpakets 126) oder eine Information sein, von der der absolute oder relative Zeitpunkt (oder Zeitschlitz) abgeleitet werden kann, wie z.B. eine Anzahl von Taktzyklen eines Oszillators des Teilnehmers 106_1.

Beispielsweise kann die Information über den vorgegebenen Frequenzbereich 125 ein absoluter Frequenzbereich, wie z.B. absolute Frequenzkanäle (z.B. c0, c1, c2; vgl. Fig. 11), oder ein relativer Frequenzbereich, wie z.B. ein Abstand zwischen einem Frequenzkanal (z.B. c4) der Downlink-Datenübertragung 122 und dem vorgegebenen Frequenzbereich (z.B. c4-c1=c3; c4-c2=c2; c4-c3=c1; vgl. Fig. 11) sein.

Beispielsweise kann das Synchronisationsdatenpaket 126 basierend auf dem Telegram-Splitting-Übertragungsverfahren (TSMA) übertragen werden. Bei der Übertragung des Synchronisationsdatenpakets 126 basierend auf dem Telegram-Splitting-Übertragungsverfahren kann das Synchronisationsdatenpaket 126 (z.B. der physikalischen Schicht im OSI Modell) auf eine Mehrzahl von Teil-Synchronisationsdatenpaketen aufgeteilt werden, so dass die Mehrzahl von Teil-Synchronisationsdatenpaketen jeweils nur einen Teil des Synchronisationsdatenpakets 126 aufweisen, wobei die Mehrzahl von Teil-Synchronisationsdatenpaketen nicht zusammenhängend, sondern in der Zeit und/oder Frequenz entsprechend eines Zeit- und/oder Frequenzsprungmusters verteilt in dem vorgegebenen Frequenzbereich 125 übertragen werden.

Im Folgenden werden detaillierte Ausführungsbeispiele des Teilnehmers 106_1 und der Basisstation 104 näher beschrieben.

### 2.1 Aussendung von (Teil-)Synchronisationsdatenpaketen vor dem Nutzdatenpaket der Punkt-zu-Mehrpunkt-Datenübertragung

Die in typischen Netzwerken (z.B. Kommunikationssystemen) 100 eingesetzten Signale mit Bandbreiten von mehreren MHz können von Teilnehmern 106_1-106_n, die sehr günstige Hardware verwenden und/oder batteriebetrieben sind, in der Regel nicht gleichzeitig in voller Bandbreite empfangen und/oder verarbeitet werden.

Typischerweise können die auf solchen Teilnehmern 106_1-106_n verbauten Funkchips eine Bandbreite von wenigen 100 kHz zur Verfügung stellen. Die Rechenleistung solcher Teilnehmer 106_1-106_n ist zudem so ausgelegt, dass eine echtzeitfähige Verarbeitung dieser Bandbreiten möglich sein sollte.

Damit diese Teilnehmer 106_1-106_n trotzdem die Möglichkeit haben ihr Empfangsfenster auf einen Multicast (z.B. Punkt-zu-Mehrpunkt-Datenübertragung) 124 für mehrere Teilnehmer 106_1-106_n zu synchronisieren, ermöglichen es Ausführungsbeispiele innerhalb einer Bandbreite von ca. 100 kHz die notwendige Information für das Empfangsfenster mit seiner Frequenz- und/oder Zeitlage zu übertragen.

Nach der Extraktion der notwendigen Daten kann der Teilnehmer 106_1 die zeitliche(n) Position(en) und/oder den Frequenzkanal / die Frequenzkanäle des Empfangsfensters (z.B. das Sprungmuster der (Teil-)Nutzdatenpakete der Punkt-zu-Mehrpunkt-Datenübertragung 124 ermitteln und entsprechend durch umschalten der Trägerfrequenz die (Teil-)Nutzdatenpakete der Multicast-Nachricht (Punkt-zu-Mehrpunkt-Datenübertragung 124) empfangen.

Um dies zu erreichen, kann in einem zeitlich definierten Abstand vor dem Nutzdatenpaket 128 der Punkt-zu-Mehrpunkt-Datenübertragung 124 ein sog. (Teil-)Synchronisationsdatenpaket 126 auf einer fest definierten Frequenz zu einem vorher ausgehandelten Zeitpunkt ausgesendet werden. Dieses (Teil-)Synchronisationsdatenpaket 126 kann verwendet werden, um den Beginn des Nutzdatenpakets 128 der Punkt-zu-Mehrpunkt-Datenübertragung 124 zu bestimmen.

Wird ein Nutzdatenpaket 128 der Punkt-zu-Mehrpunkt-Datenübertragung 124 mittels eines Kanalzugriffsmusters (oder Sprungmusters) ausgesendet, kann in diesem (Teil-)Synchronisationsdatenpaket 126 ferner eine Information enthalten sein, über welche auf das Kanalzugriffsmuster (oder Sprungmuster), sowie Zeit- und Frequenzlage des Nutzdatenpakets 128 der Punkt-zu-Mehrpunkt-Datenübertragung 124 geschlossen werden kann, oder es wurde anderweitig vorher vereinbart.

Eine solche Aussendung eines (Teil-)Synchronisationsdatenpakets 126 vor der eigentlichen Aussendung (des Nutzdatenpakets 128 der Punkt-zu-Mehrpunkt-Datenübertragung) ist in Fig. 11 zu sehen. Dabei enthält das (Teil-)Synchronisationsdatenpaket 126 die Information über das für das Nutzdatenpaket 128 der Punkt-zu-Mehrpunkt-Datenübertragung 124 verwendete Kanalzugriffsmuster (z.B. Sprungmuster). Der Abstand zwischen dem (Teil-)Synchronisationsdatenpaket 126 und dem Nutzdatenpaket 128 der Punkt-zu-Mehrpunkt-Datenübertragung 124 kann fest definiert oder als Information im (Teil-)Synchronisationsdatenpaket 126 vorhanden sein.

Im Detail zeigt Fig. 11 eine Belegung des Frequenzbands 103 des Kommunikationssystems 100 bei der Übertragung einer Punkt-zu-Mehrpunkt-Datenübertragung 124 mit einem Synchronisationsdatenpaket 126 und einem Nutzdatenpaket 128 gemäß einem Ausführungsbeispiel der vorliegenden Erfindung. Dabei beschreibt in Fig. 11 die Ordinate die Frequenz (Frequenzkanäle) und die Abszisse die Zeit (Zeitschlitzte).

Wie in Fig. 11 zu erkennen ist, kann das Synchronisationsdatenpaket 126 in einem vorgegebenen Frequenzbereich 125 (Frequenzkanal c0 in Fig. 11) übertragen werden. Der vorgegebene Frequenzbereich 125 kann dabei, wie in Fig. 11 angedeutet ist, beispielsweise einen Frequenzkanal umfassen. Natürlich kann der vorgegebene Frequenzbereich 125 auch mehr als einen Frequenzkanal, wie z.B. zwei oder drei Frequenzkanäle, umfassen, sofern der vorgegebene Frequenzbereich 125 kleiner ist als eine Empfangsbandbreite eines Empfängers des Teilnehmers 106_1. Sofern das Synchronisationsdatenpaket 126 basierend auf dem Telegram-Splitting-Verfahren übertragen wird, kann der vorgegebene Frequenzbereich 125 in Abhängigkeit von der verwendeten Kanalcodierung auch größer sein als die Empfangsbandbreite des Empfängers des Teilnehmers 106_1.

Wie in Fig. 11 ferner zu erkennen ist, kann das Nutzdatenpaket 128 der Punkt-zu-Mehrpunkt-Datenübertragung 124 basierend auf dem Telegram-Splitting-Verfahren (TSMA) übertragen werden. Hierbei kann das Nutzdatenpaket 128 (z.B. der physikalischen Schicht im OSI Modell) auf eine Mehrzahl von Teil-Nutzdatenpaketen 128_1-128_i (i=8) aufgeteilt werden, wobei die Mehrzahl von Teil-Nutzdatenpaketen 128_1-128_i (i=8) entsprechend eines Zeit- und/oder Frequenzsprungmusters in der Zeit (z.B. über mehrere Zeitschlitze) und/oder Frequenz (z.B. über mehrere Frequenzkanäle) verteilt übertragen werden.

Das Synchronisationsdatenpaket 128 kann daher eine Information über das Zeit- und/oder Frequenzsprungmuster aufweisen, wobei der Teilnehmer 106_1 ausgebildet sein kann, um die Mehrzahl von Teil-Nutzdatenpaketen 128_1-128 i (i=8) basierend auf der Information über das Zeit- und/oder Frequenzsprungmuster zu empfangen.

Mit anderen Worten, Fig. 11 zeigt eine Aussendung eines (Teil-)Synchronisationsdatenpakets 126 vor der eigentlichen Aussendung des Nutzdatenpakets 128 der Punkt-zu-Mehrpunkt-Datenübertragung 124.

Bei Ausführungsbeispielen kann vor der Aussendung des Nutzdatenpakets 128 der Punkt-zu-Mehrpunkt-Datenübertragung 124 zeitlich referenziert ein (Teil-)Synchronisationsdatenpaket 126 ausgesendet werden, welches z.B. die notwendige Information über das für das Nutzdatenpaket 128 der Punkt-zu-Mehrpunkt-Datenübertragung 124 verwendete Kanalzugriffsmuster/Sprungmuster enthält.

### 2.2 Information der Teilnehmer über einen bevorstehenden Multicast (z.B. Punkt-zu-Mehrpunkt-Datenübertragung)

Normalerweise arbeiten die Teilnehmer 106_1-106_n im Netz (z.B. Kommunikationssystem) 100 asynchon zueinander und sind nur bereit für den Empfang einer Nachricht (z.B. Downlink-Datenübertragung 122) nachdem sie ein Telegramm (z.B. Uplink-Datenübertragung 120) an die Basisstation 104 gesendet haben, wie dies beispielsweise bei dem im ETSI Standard TS 103 357 [4] spezifizierten Kommunikationssystem der Fall ist.

Damit die Teilnehmer (z.B. Geräte) 106_1-106_n trotzdem die Möglichkeit zum Empfang eines Multicasts (Punkt-zu-Mehrpunkt-Datenübertragung) 124 haben, wird jedem einzeln mitgeteilt, dass ein Multicast (z.B. Punkt-zu-Mehrpunkt-Datenübertragung) 124 für ihn ansteht. Außerdem kann auch die exakte Frequenz des Multicasts (z.B. Punkt-zu-Mehrpunkt-Datenübertragung) 124 übertragen werden, wie dies z.B. in Abschnitt 1 erläutert wurde.

Zusätzlich zur Signalisierung der Multicast-Nachricht (z.B. Punkt-zu-Mehrpunkt-Datenübertragung) 124 nach Abschnitt 1 kann die Basisstation 104 die Informationen zu Zeit und Frequenz in Bezug auf den aktuellen Quarzversatz des Teilnehmers 106_1 übertragen. Eine weitere Möglichkeit wäre den Quarzversatz direkt dem Teilnehmer 106_1 mitzuteilen, so dass dieser die Kompensation selbst vornehmen kann.

Bei Ausführungsbeispielen können neben der Signalisierung des Zeitpunktes der Multicast-Nachricht (z.B. Punkt-zu-Mehrpunkt-Datenübertragung) 124 nach Abschnitt 1 individuell an jeden Teilnehmer Informationen zu Zeit und/oder Frequenz in Bezug und/oder Sprungmuster auf den aktuellen Quarzversatz des Teilnehmers übertragen werden.

Die Information über einen ausstehenden Multicast (z.B. Punkt-zu-Mehrpunkt-Datenübertragung) 124 kann auch mehrere Tage im Voraus erfolgen. Jedoch ist zu berücksichtigen, dass hierbei der Quarz des Teilnehmers 106_1 erhebliche Abweichungen aufweisen kann. Z.B. ein einfacher Uhrenquarz mit ± 60 ppm würde nach 7 Tagen eine Abweichung von ± 36 s aufweisen. Über eine Kalibrierung mit dem HF-Quarz der z.B. ± 20 ppm Genauigkeit hat, reduziert sich die Ungenauigkeit über 7 Tage auf 12 s.

Bei Ausführungsbeispielen kann anstelle der Signalisierung des Beginns des eigentlichen Multicasts (z.B. der eigentlichen Punkt-zu-Mehrpunkt-Datenübertragung 124, d.h. des Nutzdatenpakets 128 der Punkt-zu-Mehrpunkt-Datenübertragung 124) wie in Abschnitt 1 beschrieben, der Beginn des (Teil-)Synchronisationsdatenpakets 126 der Punkt-zu-Mehrpunkt-Datenübertragung 124 in der individuellen Downlink-Nachricht (Downlink-Datenübertragung 122) signalisiert werden.

### 2.3 Aufteilung von des Synchronisationsdatenpakets in mehrere Teil-Synchronisationsdatenpakete

Zu Beginn von Abschnitt 2 wurde ein (Teil-)Synchronisationsdatenpaket 126 eingeführt welches zeitlich referenziert zu einem folgenden Nutzdatenpaket 128 der Punkt-zu-Mehrpunkt-Datenübertragung 124 ausgesendet wird. Dieses (Teil-)Synchronisationsdatenpaket 126 kann ebenfalls die Information enthalten, wie sich das Kanalzugriffsmuster (oder Sprungmuster) des Nutzdatenpakets 128 der Punkt-zu-Mehrpunkt-Datenübertragung 124 zusammensetzt.

Im Vergleich zu dem Nutzdatenpaket 128 der Punkt-zu-Mehrpunkt-Datenübertragung 124, welches typischerweise in mehrere Teildatenpakete (z.B. Teil-Nutzdatenpakete) 128_1-128_i unterteilt ist, handelt es sich bei dem (Teil-)Synchronisationsdatenpaket 126 bei dem in Fig. 11 gezeigtem Ausführungsbeispiel nur um eine einzelne Übertragung (z. B. ein belegtes Ressourcenelement).

Liegt eine Störung während dieser Übertragung vor, ist es den Teilnehmern 106_1-106_n in der Regel nicht möglich die Daten aus diesem (Teil-)Synchronisationsdatenpaket 126 zu extrahieren.

Die typische Bandbreite eines Frequenzkanals in Fig. 11 liegt bei unter 50 kHz. Die Low-Cost (dt. kostengünstigen) Teilnehmer 106_1-106_n können jedoch typischerweise bis 100 kHz und mehr echtzeitfähig verarbeiten.

Damit ist es den Teilnehmern 106_1-106_n möglich zumindest zwei Frequenzkanäle parallel zu empfangen und abzusuchen.

Es bietet sich an, das (Teil-)Synchronisationsdatenpaket 126 mittels des Telegram-Splitting-Übertragungsverfahrens ebenfalls aufzuteilen. Aufgrund der sehr begrenzten Größe an Nutzdaten im (Teil-)Synchronisationsdatenpaket 126 sind typischerweise nicht mehr als fünf Teil-Datenpakete (z.B. Teil-Synchronisationsdatenpakete) notwendig.

Wird eine Codierung eingesetzt, die es zulässt, dass zumindest ein Teil-Datenpaket (z.B. Teil-Synchronisationsdatenpaket) verloren gehen kann, kann das Sprungmuster für das aufgeteilte Synchronisationsdatenpaket 126 so gewählt werden, dass eine größere Bandbreite belegt ist als von dem Low-Cost-Teilnehmer empfangen werden kann. Wichtig ist nur, dass der Low-Cost-Teilnehmer unabhängig von Quarzoffset immer zumindest die minimale Anzahl an notwendigen Frequenzkanälen empfangen kann.

Ein solches Beispiel ist in Fig. 12 skizziert. Dort wurde das Synchronisationsdatenpaket 126 in drei Teil-Datenpakete (Teil-Synchronisationsdatenpakete) 126_1-126_k (k=3) unterteilt und auf den Frequenzkanälen c0 bis c2 übertragen. Es könnte zwischen den Teil-Datenpaketen (Teil-Synchronisationsdatenpaketen) 126_1-126_k (k=3) auch eine Pause bei der Übertragung eingefügt werden und die Anordnung der Teil-Datenpakete 126_1-126 k (k=3) zu den Frequenzen anders gewählt werden. Wichtig ist nur, dass diese Struktur (z. B. das Sprungmuster) dem Teilnehmer 106_1 vorab bekannt ist.

Im Detail zeigt Fig. 12 in einem Diagramm eine Belegung des Frequenzbands 103 des Kommunikationssystems 100 bei der Übertragung einer Punkt-zu-Mehrpunkt-Datenübertragung 124 mit einem Synchronisationsdatenpaket 126 und einem Nutzdatenpaket 128, wobei das Synchronisationsdatenpaket 126 auf eine Mehrzahl von Teil-Synchronisationsdatenpaketen 126_1-126_k (k=3) und das Nutzdatenpaket 128 auf eine Mehrzahl von Teil-Nutzdatenpaketen 128_1-128_i (i=8) aufgeteilt ist, gemäß einem Ausführungsbeispiel der vorliegenden Erfindung. Dabei beschreibt in Fig. 12 die Ordinate die Frequenz (Frequenzkanäle) und die Abszisse die Zeit (Zeitschlitzte). Mit anderen Worten, Fig. 12 zeigt eine Unterteilung des Synchronisationsdatenpakets 126 in drei Teil-Datenpakete (Teil-Synchronisationsdatenpakete) 126_1-126_k (k=3), wobei diese auf verschiedenen Frequenzen übertragen werden.

Wie in Fig. 12 zu erkennen ist, können die Teil-Synchronisationsdatenpakete 126_1-126_k (k=3) auf verschiedenen Frequenzkanälen (in Fig. 12 die Frequenzkanäle c0, c1 und c2) innerhalb des vorgegebenen Frequenzbereichs 125 übertragen werden. Der vorgegebene Frequenzberiech 125 kann dabei kleiner oder gleich der Empfangsbandbreite des Empfängers des Teilnehmers 106_1 sein. Sofern die Teil-Synchronisationsdatenpakete 126_1-126_k (k=3) kanalcodiert sind, so dass zur erfolgreichen Decodierung des Synchronisationsdatenpakets 126 nicht alle Teil-Synchronisationsdatenpakete 126_1-126_k sondern nur ein Teil der Teil-Synchronisationsdatenpakete 126_1-126_k erforderlich sind, kann der vorgegebene Frequenzbereich 125 auch größer sein als die Empfangsbandbreite des Empfängers des Teilnehmers 106_1, solange sichergestellt ist, dass pro Teilfrequenzbereich innerhalb des vorgegebenen Frequenzbereichs 125 mindestens so viele der Mehrzahl von Teil-Synchronisationsdatenpaketen 126_1-126_k übertragen werden, wie für die erfolgreiche Decodierung des Synchronisationsdatenpakets 126 erforderlich sind, wobei jeder der ein oder mehreren Teilfrequenzbereiche höchstens der Empfangsbandbreite des Empfängers des Teilnehmers 106_1 entspricht.

In Fig. 12 ist das Synchronisationsdatenpaket 126 zur Veranschaulichung in drei Teil-Synchronisationsdatenpakete 126_1-126_k (k=3) aufgeteilt, das Synchronisationsdatenpaket 126 kann bei Ausführungsbeispielen in k Teil-Synchronisationsdatenpakete 126_1-126_k aufgeteilt werden, wobei k eine natürliche Zahl größer gleich zwei ist, k ≥ 2.

Bei Ausführungsbeispielen kann die Aussendung des Synchronisationsdatenpakets 126 in Teil-Datenpakete (Teil-Synchronisationsdatenpakete) 126_1-126_k unterteilt werden, wobei diese so platziert werden, dass ein Low-Cost-Teilnehmer (dt. kostengünstiger Teilnehmer) 106_1 zumindest einen Teil von diesen Teil-Datenpaketen (Teil-Synchronisationsdatenpaketen) 126_1-126_k empfangen kann. Das bedeutet, innerhalb der Bandbreite des Low-Cost-Empfängers liegen zumindest die für den fehlerfreien Empfang minimal notwendige Anzahl an Teil-Datenpaketen (Teil-Synchronisationsdatenpaketen) 126_1-126_k.

### 2.4 Aufteilen der Sende- und Empfangslast auf Basisstation und Teilnehmer

Wenn die Benachrichtigung über einen Multicast (z.B. Punkt-zu-Mehrpunkt-Datenübertragung) 124 lange bevor dem Multicast (z.B. Punkt-zu-Mehrpunkt-Datenübertragung) 124 erfolgt, kann die Zeitdifferenz zwischen angenommener Übertragung und der tatsächlichen Übertragung aufgrund von Referenzzeit-Versätzen (z.B. bedingt durch Quarzoffsets) zwischen Basisstation 104 und Teilnehmer 106_1 mehrere Sekunden betragen, wie z.B. ± 36 s. Damit der Teilnehmer 106_1 die minimale Anzahl an notwendigen Symbolen empfangen kann, ist es entweder nötig, dass der Teilnehmer 106_1 sehr lange empfängt, wie z.B. 72 s oder die Basisstation 104 sehr oft Wiederholungen sendet.

Bei Ausführungsbeispielen kann (z.B. die Basisstation 104 ausgebildet sein, um) die Aussendung des Synchronisationsdatenpakets 126 so oft wiederholt werden/ zu wiederholen, dass die Dauer der kompletten Sequenz (z.B. mehrfachen Aussendung des Synchronisationsdatenpakets 126) länger als der maximale Versatz (z. B. Zeitversatz) zwischen Basisstation 104 und Teilnehmer 106_1 ist.

Bei Ausführungsbeispielen kann der Suchbereich des Empfängers (z.B. des Teilnehmers 106_1) länger sein als der maximal mögliche Zeit-Versatz (z.B. bedingt durch Quarzoffsets) zwischen Basisstation 104 und Teilnehmer 106_1.

In Bezug auf die erste Möglichkeit ist zu berücksichtigen, dass die Basisstation 104 oft nur eine beschränke Sendezeit pro Zeiteinheit hat (z.B. SRD in EU 10% Duty Cycle sind 6 Minuten pro Stunde). Bei der zweiten Möglichkeit muss der Teilnehmer sehr lange empfangen. Dies kann Aufgrund von begrenzten Ressourcen, in Form einer Batterie, verfügbaren Arbeitsspeicher und CPU-Rechenzeit, nicht möglich sein. Die Lösung ist, dass die Basisstation die Sync-Sequenz (z.B. das Synchronisationsdatenpaket 126) öfters (z. B mehrfach) aussendet und der Teilnehmer 106_1 öfter nach einer Aussendung sucht. Durch teilerfremde Abstände zwischen Aussendungsabstand und Empfangsfensterabstand kann die Wahrscheinlichkeit erhöht werden, dass die Aussendung (z.B. des Synchronisationsdatenpakets 126) zum Zeitpunkt des Empfangsfensters ist.

Bei Ausführungsbeispielen können Abstände zwischen den wiederholten Aussendungen der (Teil-)Synchronisationsdatenpakete 126 teilerfremd sein.

Bei Ausführungsbeispielen können Abstände der Empfangsfenster des Teilnehmers 106_1 teilerfremd sein. Beispielsweise kann der Teilnehmer 106_1 ausgebildet sein, um bei der Wahl der Empfangsfenster teilerfremde Abstände zu wählen.

Ein solches Beispiel ist in Fig. 13 dargestellt. Die Basisstation 104 sendet die (Teil-)Synchronisationsdatenpakete 126 (Sync-Sequenz) viermal aus und der Teilnehmer 106_1 versucht dreimal die Sequenz zu finden. Die Abstände zwischen Aussendungen (der (Teil-)Synchronisationsdatenpakete 126) und Empfangsfenster 129 können orthogonal (z. B teilerfremd) gewählt werden, um die Wahrscheinlichkeit einer Überschneidung zu erhöhen.

Im Detail zeigt Fig. 13 eine Belegung des vorgegebenen Frequenzbereichs 125 bei der wiederholten Aussendung des Synchronisationsdatenpakets 126, wobei das Synchronisationsdatenpaket auf eine Mehrzahl von Teil-Synchronisationsdatenpaketen 126_1-126 k (k=3) aufgeteilt ist, die entsprechend eines Zeit- und Frequenzsprungmusters in dem vorgegebenen Frequenzbereich verteilt übertragen werden, gemäß einem Ausführungsbeispiel der vorliegenden Erfindung. Dabei beschreibt die Ordinate die Frequenz und die Abszisse die Zeit. Mit anderen Worten, Fig. 13 zeigt eine mehrfache Wiederholung der (Teil-)Synchronisationsdatenpakete 126 und mehrfache Suche nach diesen.

Wie in Fig. 13 zu erkennen ist, können Abstände t₁ zwischen den Empfangsfenstern 129 des Teilnehmers und Abstände t₂ zwischen der wiederholten Aussendung des Synchronisationsdatenpakets 126 bzw. der wiederholten Aussendung der Mehrzahl von Teil-Synchronisationsdatenpaketen 126_1-126_k (k=3) teilerfremd sein.

### 2.5 Variation der Frequenzen der (Teil-)Synchronisationsdatenpakete

In den in den Abschnitten 2.1, 2.3 und 2.4 beschriebenen Ausführungsbeispielen wird das / werden die (Teil-)Synchronisationsdatenpaket(e) 126 auf der gleichen Frequenz bzw. auf den gleichen (benachbarten) Frequenzen übertragen, um Low-Cost-Teilnehmern eine Synchronisation auf das Nutzdatenpaket 128 der Punkt-zu-Mehrpunkt-Datenübertragung 124 zu ermöglichen.

Die Aussendung des Nutzdatenpakets 128 der Punkt-zu-Mehrpunkt-Datenübertragung 124 erfolgt in einem größeren Frequenzbereich. Dadurch ist die Störsicherheit des Nutzdatenpakets 128 der Punkt-zu-Mehrpunkt-Datenübertragung) 124 im Vergleich zu dem/den (Teil-)Synchronisationsdatenpaket(en) 126 größer. Des Weiteren kann es bei statischen Szenarien vorkommen, dass die wenigen Frequenzkanäle der (Teil-)Synchronisationsdatenpakete 126 genau in einem Fading-Loch liegen und deshalb nie von einem Teilnehmer empfangen werden. Außerdem kann es in manchen Regionen (z.B. USA) notwendig sein mehrere Frequenzen gleichmäßig zu belegen, um eine Zertifizierung (z.B. nach FCC) zu bekommen.

Dieses Problem kann umgangen werden, indem die Aussendung der (Teil-)Synchronisationsdatenpakete 126_1-126_k mehrfach auf unterschiedlichen Frequenzen erfolgt. Dieses Schema ist in Fig. 14 dargestellt. Dort werden für die erste Aussendung (z.B. der (Teil-)Synchronisationsdatenpakete 126_1-126_k) die Frequenzkanäle c0 bis c2 und bei der zweiten Aussendung (z.B. der (Teil-)Synchronisationsdatenpakete 126_1-126_k) die Kanäle c3 bis c5 belegt. Bei weiteren Aussendungen (z.B. der (Teil-)Synchronisationsdatenpakete 126_1-126_k) könnten entsprechend die Frequenzkanäle c6 bis c8 belegt werden.

Im Detail zeigt Fig. 14 eine Belegung des Frequenzbands 103 des Kommunikationssystems 100 bei der Übertragung einer Punkt-zu-Mehrpunkt-Datenübertragung 104 mit einer Mehrzahl von Teil-Nutzdatenpaketen 128_1-128 i (i=8) und einer wiederholten Aussendung von Teil-Synchronisationsdatenpaketen 126_1-126_k auf unterschiedlichen Teilfrequenzbereichen 125_1 und 125_2 des vorgegebenen Frequenzbereichs 125, gemäß einem Ausführungsbeispiel der vorliegenden Erfindung. Dabei beschreibt in Fig. 14 die Ordinate die Frequenz (Frequenzkanäle) und die Abszisse die Zeit (Zeitschlitze).

Bei Ausführungsbeispielen können die Teilfrequenzbereiche 125_1 und 125_2 jeweils kleiner sein als eine Empfangsbandbreite des Empfängers des Teilnehmers 106_1 bzw. der Empfänger der Teilnehmer 106_1-106_n des Kommunikationssystems 100.

Mit anderen Worten, Fig. 14 zeigt eine Variation der Frequenzkanäle der (Teil-)Synchronisationsdatenpakete 126_1-126_k.

Somit kann beispielsweise ein Teilnehmer 106_1, welcher in den Kanälen c0 bis c2 keine (Teil-)Synchronisationsdatenpakete 126_1-126_k detektiert, den Kanal wechseln und dort wieder nach (Teil-)Synchronisationsdatenpakete 126_1-126_k Ausschau halten. Falls er dort wiederum nichts detektieren sollte könnte er wieder den Kanal wechseln und so weiter.

Dies ermöglicht zudem Teilnehmern (z.B. Knoten), die lokal einer Dauerstörung auf bestimmen Teilkanälen ausgesetzt sind oder in einem Fading-Loch sind, trotzdem an dem Multicast (z.B. Punkt-zu-Mehrpunkt-Datenübertragung) 124 teilzunehmen.

Im Ausführungsbeispiel ist zur Veranschaulichung eine aufsteigende Reihenfolge der Frequenzkanäle für die aufeinanderfolgenden Teil-Synchronisationsdatenpakete 126_1-126_k gewählt. Dies ist jedoch nicht zwingend erforderlich, sodass in anderen Ausführungsbeispielen z.B. eine andere Abfolge der Frequenzkanäle (z.B.: Aussendung n: c0,c1,c2, Aussendung n+1: c10,c11,c12, Aussendung n+2: c5,c6,c7 etc.) bestimmt werden kann.

Bei Ausführungsbeispielen können die Frequenzkanäle, welche für die Aussendung der (Teil-)Synchronisationsdatenpakete 126_1-126_k verwendet werden, zeitlich variabel sein. Dabei kann es eine zeitliche Periodizität geben mit der das gesamte Muster der Abfolge Kanäle wiederholt wird.

Um die Übertragungssicherheit zu maximieren, ist es möglich die (Teil-)Synchronisationsdatenpakete 126_1-126_k der verschiedenen Zeitschlitzen (engl. timeslots) aus derselben Synchronisationsinformation abzuleiten um somit eine beliebige Kombination der (Teil-)Synchronisationsdatenpakete 126_1-126_k zur Rekonstruktion der Daten verwenden zu können. Ist dies der Fall, so kann der Empfänger (z.B. des Teilnehmers 106_1) bei gleichbleibender Clusterung über die Zeitschlitze (engl. timeslots) hinweg nicht eindeutig feststellen, welcher Frequenzversatz vorliegt, da er nicht bestimmen kann ob die Teil-Synchronisationsdatenpakete 126_1-126_k zur Aussendung n oder n+1 gehörten, wenn der Frequenzversatz größer ist als der Abstand der Cluster.

Die Bezeichnung Cluster bezieht sich dabei hierin auf die Aussendung der Teil-Synchronisationsdatenpakete 126_1-126_k. Beispielsweise kann eine erste Aussendung der Teil-Synchronisationsdatenpakete 126_1-126_k (k=3) als erster Cluster 130_1 bezeichnet werden, während eine zweite Aussendung der Teil-Synchronisationsdatenpakete 126_1-126_k (k=3) als zweiter Cluster 130_2 bezeichnet werden kann (vgl. Fig. 14).

Bei Ausführungsbeispielen können die Cluster 130_1-130_2 frequenzmäßig mindestens so weit von einander getrennt sein, dass eine versehentliche Synchronisation, durch Frequenzversatz, auf das im Frequenzbereich verschobene Cluster nicht möglich ist.

Innerhalb eines Clusters 130_1-130 2 kann es von Vorteil sein exakt zu wissen welche der Teil-)Synchronisationsdatenpakete 126_1-126_k empfangen wurden. Ist beispielsweise bei einer 3er Clusterung c0+c1+c2 eines der äußeren beiden (Teil-)Synchronisationsdatenpakete 126_1-126_k gestört, also c0 oder c2, so kann der Teilnehmer (z.B. Knoten) 106_1 zwar erfolgreich synchronisieren und dank des Fehlerschutzes auch decodieren, weiß aber nicht ob er c0+c1 oder c1+c2 empfangen hat.

Sind die Frequenzkanäle cX und cX+1 weit genug voneinander entfernt, dass auch trotz Frequenzversatz eindeutig festzustellen ist, auf welchem cX das (Teil-)Synchronisationsdatenpaket versendet wurde, so ist diese Mehrdeutigkeit nichtmehr gegeben.

Bei Ausführungsbeispielen können die Frequenzkanäle innerhalb eines Clusters 130_1-130_2 frequenzmäßig mindestens so weit von einander getrennt sein, dass auch mit Frequenzversatz, benachbarte Kanäle nicht überlappen.

Ein anderer Lösungsweg ist die Cluster 130_1-130_2 so zu gestalten, dass das Frequenzsprungmuster innerhalb des Clusters eindeutig ist. Also z.B. keine Treppe wie in Fig. 14 gezeigt, sondern die Folge c0+c2+c1, welche bei erfolgreicher Detektion mindestens zweier (Teil-)Synchronisationsdatenpakete 126_1-126_k eindeutig festlegt welche (Teil-)Synchronisationsdatenpakete 126_1-126_k empfangen wurden.

Bei Ausführungsbeispielen können die Cluster 130_1-130_2 der (Teil-)Synchronisationsdatenpakete 126_1-126_k so gewählt werden, dass es keine wiederholenden identischen Abstände in Zeit und/oder Frequenz der (Teil-)Synchronisationsdatenpakete 126_1-126_k innerhalb des Clusters gibt.

Eine weitere Möglichkeit ist, dass die Frequenzlage des Clusters 130_1-130_2 anhand des Abstandes zum Nutzdatenpaket 128 bzw. den Teil-Nutzdatenpaketen 128_1-128_i der Punkt-zu-Mehrpunkt-Datenübertragung 124 identifiziert wird.

Bei Ausführungsbeispielen können die Cluster 130_1-130_2 zeitlich so einen großen Abstand haben, dass sie eindeutig vom Teilnehmer 106_1 zugeordnet werden können.

### 2.6 Verschränkte Cluster bei wiederholter Aussendung der (Teil-)Synchronisationsdatenpakete vor einem Nutzdatenpaket der Punkt-zu-Mehrpunkt-Datenübertragung

Werden wie nach Abschnitt 2.4 die Teil-Synchronisationsdatenpakete 126_1-126_k wiederholt ausgesendet, gibt es die Möglichkeit die zumindest zwei Aussendungen zeitlich zu verschachteln. Dies ist in Fig. 15 für eine zweifache Aussendung bei einer Unterteilung (z.B. des Synchronisationsdatenpakets 126) in drei Teil-Synchronisationsdatenpakete 126_1-126_k (k=3) zu sehen.

Im Detail zeigt Fig. 15 eine Belegung des Frequenzbands 103 des Kommunikationssystems 100 bei der Übertragung einer Punkt-zu-Mehrpunkt-Datenübertragung 104 mit einer Mehrzahl von Teil-Nutzdatenpaketen 128_1-128_i (i=8) und einer wiederholten Aussendung von Teil-Synchronisationsdatenpaketen 126_1-126_k (k=3), wobei die wiederholten Aussendung von Teil-Synchronisationsdatenpaketen 126_1-126_k (k=3) ineinander verschachtelt sind, gemäß einem Ausführungsbeispiel der vorliegenden Erfindung. Dabei beschreibt in Fig. 15 die Ordinate die Frequenz (Frequenzkanäle) und die Abszisse die Zeit (Zeitschlitze). Mit anderen Worten, Fig. 15 zeigt eine zeitliche Verschachtelung von zwei Aussendungen von Teil-Synchronisationsdatenpaketen 126_1-126_k (k=3).

Vorteil dieser zeitlichen Verschachtelung liegt in der Störfestigkeit, da zwischen benachbarten Frequenzkanälen ein größerer zeitlicher Abstand vorhanden ist. In Hinsicht auf die Eigenschaften für eine Synchronisation eines Teilnehmers 106_1 ändert sich für diesen nichts, außer dass es eine höhere Latenz beim Empfang der Teil-Synchronisationsdatenpakete 126_1-126_k gibt. Dies ist nicht weiter tragisch, da der Teilnehmer 106_1 nach Empfang der Teil-Synchronisationsdatenpakete 126_1-126_k sowieso warten muss, bis er das Nutzdatenpaket 128 bzw. die Mehrzahl von Teil-Nutzdatenpaketen 128_1-128_i der Punkt-zu-Mehrpunkt-Datenübertragung 124 empfangen kann.

Da der Abstand zwischen dem letzten Teil-Synchronisationsdatenpakete 126_3 und dem Beginn des ersten Teil-Nutzdatenpakets 128_1 der Punkt-zu-Mehrpunkt-Datenübertragung 124 hier von Cluster 130_1 zu Cluster 130_2 variiert, kann dieser Abstand (d.h. der zeitliche Beginn des ersten Teil-Nutzdatenpakets 128_1 der Punkt-zu-Mehrpunkt-Datenübertragung 124) dem Teilnehmer 106_1 entweder vorab bekannt sein oder geeignet signalisiert werden.

Bei Ausführungsbeispielen können bei wiederholter Aussendung der Teil-Synchronisationsdatenpaketen 126_1-126 k (z.B. vor einem (Teil-)Nutzdatenpaket 128 der Punkt-zu-Mehrpunkt-Datenübertragung 124) die Wiederholungen (z.B. der Teil-Synchronisationsdatenpakete 126_1-126_k) verschachtelt werden.

Bei mehrfacher Wiederholung können alle Aussendungen (z.B. der Teil-Synchronisationsdatenpakete 126_1-126_k) ineinander verschachtelt werden, wobei zwischen den Teil-Synchronisationsdatenpaketen 126_1-126_k einer Übertragung eine Pause gelassen wird, die der Anzahl der Wiederholungen entspricht.

In dem Beispiel aus Fig. 15 wird eine einfache Wiederholung (z.B. von Teil-Synchronisationsdatenpaketen 126_1-126_k) angewendet, so dass zwischen den Teil-Synchronisationsdatenpaketen 126_1-126_k der ersten Aussendung r0 Pausen für jeweils einen Hop (dt. Sprung), genauer gesagt die Dauer eines Teil-Synchronisationsdatenpakets, frei gelassen wird. Bei zweifacher Wiederholung (z.B. von Teil-Synchronisationsdatenpaketen 126_1-126_k) wären die Pause zwei Hops (dt. Sprünge) (z.B. Teil-Synchronisationsdatenpakete) lang und so weiter.

Aussendung r1 beginnt dann mit dem gleichen Muster (entspricht einem Cluster) bei Zeitschritt t1. Durch die äquidistante Wahl der Abstände ist sichergestellt, dass es zwischen den Wiederholungen nicht zu zeitlichen Überlagerungen kommt.

Würden zwei Wiederholungen verwendet, würde die zweite Wiederholung im Zeitschlitz t2 beginnen.

Bei Ausführungsbeispielen kann ein Grundcluster (z.B. Grundsprungmuster) verwendet werden, welches bei allen wiederholten Aussendungen (z.B. von Teil-Synchronisationsdatenpaketen 126_1-126_k) verwendet wird.

Bei Ausführungsbeispielen können zeitliche Abstände zwischen den Teil-Synchronisationsdatenpaketen 126_1-126_k innerhalb des Clusters der Anzahl an Wiederholungen (z.B. der Teil-Synchronisationsdatenpakete 126_1-126_k) entsprechen.

### 2.7 Virtueller zyklischer Fortsatz der Sequenz bei Teilempfang mit zyklischer Korrelation

Wenn der Teilnehmer (z.B. Endknoten) 106_1 die genau zeitliche Lage der Teil-Synchronisationsdatenpakete 126_1-126_k nicht kennt, kann er mindestens die doppelte Länge der Sequenz empfangen, um diese einmal komplett zu erhalten. Vorausgesetzt die Basisstation 104 wiederholt die Teil-Synchronisationsdatenpakete 126_1-126_k ständig (z. B. ohne zeitliche Pause).

Um die Empfangszeit auf exakt die Länge der Teil-Synchronisationsdatenpakete 126_1-126_k zu reduzieren, kann der Empfänger (z.B. des Teilnehmers 106_1) die empfangenen Teil-Synchronisationsdatenpakete zyklisch korrelieren und so unabhängig von der Position der empfangenen Daten die Sequenz empfangen. Dafür sollte die Aussendung (z.B. der Teil-Synchronisationsdatenpakete 126_1-126 k) über die gesamte Länge kohärent erfolgen, wie zum Beispiel mit einem SDR-Frontend (SDR = Software Defined Radio).

Fig. 16 zeigt in einem Diagramm eine Belegung des vorgegebenen Frequenzbereichs 125 bei einer periodischen Aussendung von Teil-Synchronisationsdatenpaketen 126_1-126_k (k=3) sowie ein Empfangsfenster 129 des Empfängers des Teilnehmers 106_1 zum Empfang der Teil-Synchronisationsdatenpakete 126_1-126_k (k=3), gemäß einem Ausführungsbeispiel der vorliegenden Erfindung. Dabei beschreibt in Fig. 16 die Ordinate die Frequenz und die Abszisse die Zeit. Mit anderen Worten, Fig. 16 zeigt einen zyklischen Empfang der Sync-Sequenz (z.B. Teil-Synchronisationsdatenpakete 126_1-126_k (k=3)).

Bei Ausführungsbeispielen kann der Empfänger (z.B. des Teilnehmers 106_1) die Periodizität der Teil-Synchronisationsdatenpakete 126_1-126_k (k=3) für eine zyklische Korrelation nutzen.

Für einen robusteren Empfang ist es möglich die zyklische Korrelation nur auf vollständig empfangenen Teil-Synchronisationsdatenpaketen durchzuführen. Hierbei wird das Empfangsfenster 129 auf die Länge von beispielsweise vier Teil-Synchronisationsdatenpaketen ausgeweitet. Somit sind immer drei Teil-Synchronisationsdatenpakete komplett empfangen und können zu einer Sequenz kombiniert werden. Die Korrelation kann im Zeit- oder Frequenzbereich (z.B. über eine FFT) erfolgen.

Fig. 17 zeigt in einem Diagramm eine Belegung des vorgegebenen Frequenzbereichs 125 bei einer periodischen Aussendung von Teil-Synchronisationsdatenpaketen 126_1-126_k (k=3) sowie ein Empfangsfenster 129 des Empfängers des Teilnehmers 106_1 zum Empfang der Teil-Synchronisationsdatenpakete 126_1-126_k (k=3), wobei eine Länge des Empfangsfensters 129 einer Länge von vier Teil-Synchronisationsdatenpaketen entspricht, gemäß einem Ausführungsbeispiel der vorliegenden Erfindung. Dabei beschreibt in Fig. 17 die Ordinate die Frequenz und die Abszisse die Zeit. Mit anderen Worten, Fig. 17 zeigt einen zyklischen Empfang der Sync-Sequenz (z.B. Teil-Synchronisationsdatenpakete 126_1-126_k (k=3)) auf Teil-Synchronisationsdatenpaket-Ebene.

Bei Ausführungsbeispielen kann der Empfänger (z.B. des Teilnehmers 106_1) die Periodizität der Teil-Synchronisationsdatenpakete 126_1-126 k für eine zyklische Korrelation auf Teil-Synchronisationsdatenpaket-Ebene nutzen.

Weiterhin ist auch eine Kombination der Ausführungsbeispiele aus Abschnitt 2.4, 2.5 und 2.6 möglich, wie dies in Fig. 18 gezeigt ist.

Im Detail zeigt Fig. 18 in einem Diagramm eine Belegung des vorgegebenen Frequenzbereichs 125 bei einer wiederholten Aussendung von Teil-Synchronisationsdatenpaketen 126_1-126_k (k=3) sowie zweier Empfangsfenster 129_1 und 129_2 des Empfängers des Teilnehmers 106_1 zum Empfang der Teil-Synchronisationsdatenpakete 126_1-126_k (k=3), wobei die wiederholten Aussendungen der Teil-Synchronisationsdatenpakete 126_1-126_k (k=3) in der Zeit und Frequenz verschobene Versionen voneinander sind, gemäß einem Ausführungsbeispiel der vorliegenden Erfindung. Dabei beschreibt in Fig. 18 die Ordinate die Frequenz und die Abszisse die Zeit. Mit anderen Worten, Fig. 18 zeigt einen zyklischen Empfang der Sync-Sequenz (z.B. Teil-Synchronisationsdatenpakete 126_1-126_k) basierend auf Teil-Synchronisationsdatenpaket-Ebene auf unterschiedlichen Frequenzen.

### 2.8 Verschiedene Coderaten

Um die höchstmögliche Übertragungssicherheit zu gewährleisten, ist es vorteilhaft die übertragenen Daten mit einem Fehlerschutzcode zu versehen. Je nach Anforderung des Systems (Kommunikationssystems) 100, kann es notwendig sein, dass mehr (Teil-)Synchronisationsdatenpakete verwendet werden, damit die Schwelle bei der das Paket (z.B. Teil-Synchronisationsdatenpaket) synchronisiert werden kann mindestens unterhalb der Schwelle liegt, bei der es decodiert werden kann.

Wird beispielsweise ein sehr niederratiger Fehlerschutz (z. B Faltungscode mit Coderate ¼) im Nutzdatenpaket 128 der Punkt-zu-Mehrpunkt-Datenübertragung 124 verwendet, so ist dieses Paket z.B. bis zu einem SNR von 0 dB decodierbar. Werden jetzt nur sehr wenige (Teil-)Synchronisationsdatenpakete 126_1-126_k (z. B. hochratiger Fehlerschutz (z. B Faltungscode mit Coderate 1/2)) ausgesendet, so kann es passieren, dass die (Teil-)Synchronisationsdatenpakete 126_1-126_k nur bis zu einem SNR von +3dB erfolgreich synchronisiert werden können. In diesem Fall wäre der erhöhte Fehlerschutz im Nutzdatenpaket 128 der Punkt-zu-Mehrpunkt-Datenübertragung 124 verschwendete Energie in der Aussendung des Nutzdatenpakets 128 der Punkt-zu-Mehrpunkt-Datenübertragung 124 da ohne eine Synchronisation der (Teil-)Synchronisationsdatenpakete 126_1-126_k das Nutzdatenpaket 128 der Punkt-zu-Mehrpunkt-Datenübertragung 124 nicht empfangen werden kann, da dessen Position und/oder Sprungmuster nicht bekannt sind.

Dementsprechend kann die Anzahl der (Teil-)Synchronisationsdatenpakete 126_1-126_k an den zu verwendenden Fehlerschutzcode des Nutzdatenpakets 128 der Punkt-zu-Mehrpunkt-Datenübertragung 124 angepasst werden.

Bei Ausführungsbeispielen kann die Anzahl der (Teil-)Synchronisationsdatenpakete 126_1-126_k an den verwendeten Fehlerschutz im Nutzdatenpaket 128 der Punkt-zu-Mehrpunkt-Datenübertragung 124 angepasst werden.

Da die Information im (Teil-)Synchronisationsdatenpaket ebenfalls bei der gleichen Schwelle wie das Nutzdatenpaket 128 der Punkt-zu-Mehrpunkt-Datenübertragung 124 decodierbar sein sollte, kann es von Vorteil sein, das Synchronisationsdatenpaket 126 mit einem gleichwertigen Fehlerschutzcode zu versehen wie das Nutzdatenpaket 128 der Punkt-zu-Mehrpunkt-Datenübertragung 124.

Bei Ausführungsbeispielen können das Nutzdatenpaket 128 der Punkt-zu-Mehrpunkt-Datenübertragung 124 und das Synchronisationsdatenpaket 126 den gleichen Fehlerschutzcode nutzen.

Bei Ausführungsbeispielen können das Nutzdatenpaket 128 der Punkt-zu-Mehrpunkt-Datenübertragung 124 und das Synchronisationsdatenpaket 126 Fehlerschutzcodes, die vergleichbare Leistungsfähigkeit besitzen, nutzen.

Ist das Synchronisationsdatenpaket 126 sehr kurz, so kann es sinnvoll sein, anstelle eines gängigen Fehlerschutzcodes (z.B. Faltungscode) einen einfachen Wiederholungcode zu nutzen und die volle Information in jedes einzelne Teil-Synchronisationsdatenpaket 126_1-126_k zu packen.

Bei Ausführungsbeispielen können alle Teil-Synchronisationsdatenpakete 126_1-126_k symbolidentisch sein.

### 3. Weitere Ausführungsbeispiele

Die im Folgenden beschriebenen Ausführungsbeispiele können für sich genommen oder aber auch in Kombination mit den oben beschriebenen Ausführungsbeispielen implementiert bzw. angewendet werden.

Fig. 19 zeigt ein Flussdiagramm eines Verfahrens 240 zum Betrieb eines unkoordiniert sendenden Teilnehmers eines Kommunikationssystems, gemäß einem Ausführungsbeispiel der vorliegenden Erfindung. Das Verfahren 240 umfasst einen Schritt 242 des Empfangens eines Synchronisationsdatenpakets einer Punkt-zu-Mehrpunkt-Datenübertragung einer Basisstation des Kommunikationssystems, wobei das Synchronisationsdatenpaket in einem vorgegebenen oder dem Teilnehmer bekannten Frequenzbereich des Frequenzbands des Kommunikationssystems übertragen wird. Ferner umfasst das Verfahren 240 einen Schritt 244 des Empfangens, basierend auf dem Synchronisationsdatenpaket, eines zu dem Synchronisationsdatenpaket in der Zeit und/oder Frequenz referenziertes [z.B. synchronisiertes; z.B. mit einem vorgegebenen Zeit- und/oder Frequenzabstand gesendetes] Nutzdatenpakets der Punkt-zu-Mehrpunkt-Datenübertragung.

Fig. 20 zeigt ein Flussdiagramm eines Verfahrens 250 zum Betrieb einer Basisstation eines Kommunikationssystems, gemäß einem Ausführungsbeispiel der vorliegenden Erfindung. Das Verfahren 250 umfasst einen Schritt 252 des Sendens einer Punkt-zu-Mehrpunkt-Datenübertragung zu einer Mehrzahl von unkoordiniert sendenden Teilnehmern des Kommunikationssystems, wobei die Punkt-zu-Mehrpunkt-Datenübertragung ein Synchronisationsdatenpaket und ein zu dem Synchronisationsdatenpaket in der Zeit und/oder Frequenz referenziertes [z.B. synchronisiertes; z.B. mit einem vorgegebenen Zeit- und/oder Frequenzabstand und/oder Zeitsprungmuster und/oder Frequenzsprungmuster gesendetes] Nutzdatenpaket aufweist, wobei das Synchronisationsdatenpaket in einem vorgegebenen oder den Teilnehmern bekannten Frequenzbereich des Frequenzbands des Kommunikationssystems übertragen wird.

Ausführungsbeispiele der vorliegenden Erfindung finden Anwendung in Kommunikationssystemen zur Funkübertragung von Daten von Teilnehmern (z.B. Endgeräten) zu einer Basisstation oder von einer/mehrerer Basisstationen zu Teilnehmern (z.B. Endgeräten). Beispielsweise kann es sich bei dem Kommunikationssystem um ein persönliches Netzwerk (engl. Personal Area Network, PAN) oder ein Niedrigenergie-Weitverkehrsnetzwerk (engl. Low Power Wide Area Network, LPWAN) handeln, wobei die Teilnehmer (z.B. Endgeräte) beispielsweise batteriebetriebene Sensoren (Sensorknoten) sein können.

Ausführungsbeispiele der vorliegenden Erfindung zielen auf Anwendungsfälle ab, in welchen eine Nachricht (z.B. Datenpaket) zu mehreren Teilnehmern (Multicast) in mehreren Teil-Datenpaketen mittels des sogenannten Telegrammaufteilungs-Verfahrens (engl. Telegram-Splitting-Multiple-Access, TSMA) übertragen wird.

Ausführungsbeispiele der vorliegenden Erfindung befassen sich mit einem System (Kommunikationssystem) zur digitalen Übertragung von Daten über ein Funkübertragungssystem. Die gesendeten Daten werden dabei typischerweise in mehreren Teilfrequenzkanälen der gesamten, zur Verfügung stehenden Bandbreite übertragen. Ausführungsbeispiele der vorliegenden Erfindung können in sog. nicht koordinierten Netzten (Kommunikationssystemen) eingesetzt werden, in denen die Funkteilnehmer ihre Daten unkoordiniert (ohne vorherige Zuteilung einer Funkressource) übertragen.

Ausführungsbeispiele der vorliegenden Erfindung können beispielsweise in einem Kommunikationssystem, wie es in dem ETSI TS 103 357 Standard [4] definiert ist, angewendet werden.

Ausführungsbeispiele schaffen einen Teilnehmer [z.B. Endpunkt] eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei der Teilnehmer ausgebildet ist, um Daten unkoordiniert in Bezug auf andere Teilnehmer und/oder eine Basisstation des Kommunikationssystems zu senden, wobei der Teilnehmer ausgebildet ist, um zeitlich synchronisiert zu einer gesendeten Uplink-Datenübertragung zu der Basisstation des Kommunikationssystems eine Downlink-Datenübertragung von der Basisstation zu empfangen, wobei die Downlink-Datenübertragung eine Signalisierungsinformation aufweist, wobei der Teilnehmer ausgebildet ist, um basierend auf der Signalisierungsinformation eine Punkt-zu-Mehrpunkt-Datenübertragung [z.B. Multicast-Datenübertragung] von der Basisstation zu empfangen.

Bei Ausführungsbeispielen kann die Signalisierungsinformation eine Information über einen Zeitpunkt der Punkt-zu-Mehrpunkt-Datenübertragung aufweisen.

Beispielsweise kann die Information über den Zeitpunkt ein absoluter Zeitpunkt, ein relativer Zeitpunkt [z.B. eine definierte Zeitspanne zwischen der Downlink-Datenübertragung und der Punkt-zu-Mehrpunkt-Datenübertragung] oder eine Information sein, von der der absolute oder relative Zeitpunkt abgeleitet werden kann, wie z.B. eine Anzahl von Taktzyklen eines Oszillators des Teilnehmers.

Bei Ausführungsbeispielen kann die Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Beispielsweise kann die Information über den Frequenzkanal ein absoluter Frequenzkanal oder ein relativer Frequenzkanal [z.B. ein Abstand zwischen einem Frequenzkanal der Downlink-Datenübertragung und einem Frequenzkanal der Punkt-zu-Mehrpunkt-Datenübertragung] sein.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die Signalisierungsinformation ferner eine Information über das Zeit- und oder Frequenzsprungmuster aufweist.

Beispielsweise kann die Punkt-zu-Mehrpunkt-Datenübertragung eine Telegram-Splitting-basierte Datenübertragung sein. Bei einer Telegram-Splitting-basierten Datenübertragung werden die zu übertragenen Daten [z.B. [codierte] Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Information über den Zeitpunkt der Punkt-zu-Mehrpunkt-Datenübertragung eine definierte [z.B. gewollte oder absichtliche] Ungenauigkeit aufweisen, die mindestens so groß ist, dass eine empfängerseitige Synchronisation auf die Punkt-zu-Mehrpunkt-Datenübertragung zum Empfang der Punkt-zu-Mehrpunkt-Datenübertragung erforderlich ist, wobei der Teilnehmer ausgebildet ist, um eine Synchronisation auf die Punkt-zu-Mehrpunkt-Datenübertragung durchzuführen, um die Punkt-zu-Mehrpunkt-Datenübertragung zu empfangen.

Bei Ausführungsbeispielen kann die definierte Ungenauigkeit im Bereich von 1 bis 10.000 Symboldauern liegen.

Bei Ausführungsbeispielen kann die definierte Ungenauigkeit in Abhängigkeit eines zeitlichen Abstands bis zur Punkt-zu-Mehrpunkt-Datenübertragung einer nichtlinearen Skalierung [z. B. eine logarithmische Skalierung] unterliegen, so dass die Ungenauigkeit mit steigendem Abstand bis zur Punkt-zu-Mehrpunkt-Datenübertragung größer ist.

Bei Ausführungsbeispielen kann die Downlink-Datenübertragung ferner eine Taktgeberkorrekturinformation [z. B Quarzoffset in ppm gilt für Zeitgeber und Frequenzgeber] zur Korrektur einer Taktabweichung eines Taktgebers des Teilnehmers aufweisen, wobei der Teilnehmer ausgebildet ist, um eine Taktabweichung des Taktgebers basierend auf der Taktgeberkorrekturinformation zu korrigieren.

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation einen Zeitraum oder Zeitpunkt [z.B. groben Zeitpunkt] für eine zweite Uplink-Datenübertragung [z.B. die auf die erste Uplink-Datenübertragung folgt] signalisiert, wobei der Teilnehmer ausgebildet ist, um in dem signalisierten Zeitraum die zweite Uplink-Datenübertragung zu der Basisstation zu senden und um zeitlich synchronisiert zu der zweiten Uplink-Datenübertragung eine zweite Downlink-Datenübertragung von der Basisstation zu empfangen, wobei die zweite Downlink-Datenübertragung eine zweite Signalisierungsinformation aufweist, wobei der Teilnehmer ausgebildet ist, um basierend auf der zweiten Signalisierungsinformation die Punkt-zu-Mehrpunkt-Datenübertragung [z.B. Multicast-Datenübertragung] zu Empfangen.

Bei Ausführungsbeispielen kann die zweite Signalisierungsinformation eine Information über einen Zeitpunkt der Punkt-zu-Mehrpunkt-Datenübertragung aufweisen.

Bei Ausführungsbeispielen kann die zweite Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die zweite Signalisierungsinformation ferner eine Information über das Zeit- und oder Frequenzsprungmuster aufweist.

Bei Ausführungsbeispielen kann der Teilnehmer ausgebildet sein, um, falls die zweite Downlink-Datenübertragung nicht erfolgreich empfangen werden konnte [z.B. falls die zweite Downlink-Datenübertragung nicht erfolgte oder gestört war], eine dritte Uplink-Datenübertragung zu der Basisstation zu senden und um zeitlich synchronisiert zu der dritten Uplink-Datenübertragung eine dritte Downlink-Datenübertragung von der Basisstation zu empfangen, wobei die dritte Downlink-Datenübertragung eine dritte Signalisierungsinformation aufweist, wobei der Teilnehmer ausgebildet ist, um basierend auf der dritten Signalisierungsinformation die Punkt-zu-Mehrpunkt-Datenübertragung [z.B. Multicast-Datenübertragung] zu Empfangen.

Bei Ausführungsbeispielen kann die erste Downlink-Datenübertragung oder die zweite Downlink-Datenübertragung ferner eine Taktgeberkorrekturinformation aufweisen, die eine Taktabweichung eines Taktgebers des Teilnehmers in Bezug auf einen Referenztakt beschreibt, wobei der Teilnehmer ausgebildet ist, um die Punkt-zu-Mehrpunkt-Datenübertragung unter Verwendung der Taktgeberkorrekturinformation zu empfangen [z.B. um eine Taktabweichung des Taktgebers basierend auf der Taktgeberkorrekturinformation für den Empfang der Punkt-zu-Mehrpunkt-Datenübertragung] zu korrigieren.

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation eine Information über einen groben Zeitpunkt der Punkt-zu-Mehrpunkt-Datenübertragung aufweist, [z.B. wobei die Information über den groben Zeitpunkt der Punkt-zu-Mehrpunkt-Datenübertragung für einen Empfang der Punkt-zu-Mehrpunkt-Datenübertragung zu ungenau ist], wobei der Teilnehmer ausgebildet ist, um vor dem groben Zeitpunkt der Punkt-zu-Mehrpunkt-Datenübertragung eine vierte Uplink-Datenübertragung zu der Basisstation zu senden und um zeitlich synchronisiert zu der vierten Uplink-Datenübertragung eine vierte Downlink-Datenübertragung von der Basisstation zu empfangen, wobei die vierte Downlink-Datenübertragung eine vierte Signalisierungsinformation aufweist, wobei der Teilnehmer ausgebildet ist, um basierend auf der vierten Signalisierungsinformation die Punkt-zu-Mehrpunkt-Datenübertragung [z.B. Multicast-Datenübertragung] zu Empfangen.

Bei Ausführungsbeispielen kann die vierte Signalisierungsinformation eine Information über einen Zeitpunkt der Punkt-zu-Mehrpunkt-Datenübertragung aufweisen.

Bei Ausführungsbeispielen kann die vierte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die vierte Signalisierungsinformation ferner eine Information über das Zeit- und oder Frequenzsprungmuster aufweist.

Bei Ausführungsbeispielen kann die erste Downlink-Datenübertragung oder die vierte Downlink-Datenübertragung ferner eine Taktgeberkorrekturinformation zur Korrektur einer Taktabweichung eines Taktgebers des Teilnehmers aufweisen, wobei der Teilnehmer ausgebildet ist, um eine Taktabweichung des Taktgebers basierend auf der Taktgeberkorrekturinformation zu korrigieren.

Bei Ausführungsbeispielen kann die Signalisierungsinformation eine erste Signalisierungsinformation sein, wobei die erste Signalisierungsinformation eine Information über einen Zeitpunkt eines Stützbakens aufweist, wobei der Teilnehmer ausgebildet ist, um basierend auf der ersten Signalisierungsinformation den Stützbaken zu empfangen, wobei der Stützbaken eine fünfte Signalisierungsinformation aufweist, wobei der Teilnehmer ausgebildet ist, um basierend auf der fünften Signalisierungsinformation die Punkt-zu-Mehrpunkt-Datenübertragung [z.B. Multicast-Datenübertragung] zu Empfangen.

Bei Ausführungsbeispielen kann die erste Signalisierungsinformation ferner eine Information über einen Frequenzkanal [z.B. des von dem Kommunikationssystem verwendeten Frequenzbands] oder einen Frequenzoffset des Stützbakens aufweisen.

Bei Ausführungsbeispielen kann die fünfte Signalisierungsinformation eine Information über einen Zeitpunkt der Punkt-zu-Mehrpunkt-Datenübertragung aufweisen.

Bei Ausführungsbeispielen kann die fünfte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die fünfte Signalisierungsinformation ferner eine Information über das Zeit- und oder Frequenzsprungmuster aufweist.

Bei Ausführungsbeispielen kann die Downlink-Datenübertragung oder der Stützbaken ferner eine Taktgeberkorrekturinformation zur Korrektur einer Taktabweichung eines Taktgebers des Teilnehmers aufweisen, wobei der Teilnehmer ausgebildet ist, um eine Taktabweichung des Taktgebers basierend auf der Taktgeberkorrekturinformation zu korrigieren.

Bei Ausführungsbeispielen kann der Teilnehmer ausgebildet sein, um Daten asynchron zu anderen Teilnehmern und/oder der Basisstation des Kommunikationssystems zu senden.

Beispielsweise kann der Teilnehmer ausgebildet sein, um die Uplink-Datenübertragung asynchron zu der Basisstation zu senden.

Bei Ausführungsbeispielen kann der Teilnehmer ausgebildet sein, um die Uplink-Datenübertragung zu einem zufälligen oder pseudozufälligen Zeitpunkt zu der Basisstation zu senden.

Bei Ausführungsbeispielen kann die Uplink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Uplink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Downlink-Datenübertragung eine Mehrzahl von Sub-Datenpaketen aufweisen, die in der Zeit- und oder Frequenz entsprechend eines Zeit- und/oder Frequenzsprungmusters verteilt übertragen werden.

Beispielsweise kann die Downlink-Datenübertragung eine Telegram-Splitting-basierte Datenübertragung sein. Bei einer Telegram-Splitting-basierten Datenübertragung werden die zu übertragenen Daten [z.B. (codierte) Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden].

Bei Ausführungsbeispielen kann der Teilnehmer ein Sensorknoten oder Aktorknoten sein.

Bei Ausführungsbeispielen kann der Teilnehmer batteriebetrieben sein.

Bei Ausführungsbeispielen kann der Teilnehmer ein Energy-Harvesting-Element zur elektrischen Energiegewinnung aufweisen.

Weitere Ausführungsbeispiele schaffen eine Basisstation eines Kommunikationssystems, [wobei das Kommunikationssystem in einem Frequenzband [z.B. ISM Band] drahtlos kommuniziert, welches von einer Mehrzahl von [z.B. untereinander unkoordinierten] Kommunikationssystemen genutzt wird], wobei die Basisstation ausgebildet ist, um eine Uplink-Datenübertragung von einem Teilnehmer des Kommunikationssystems zu empfangen, wobei die Uplink-Datenübertragung unkoordiniert ist, wobei die Basisstation ausgebildet ist, um zeitlich synchronisiert zu der empfangenen Uplink-Datenübertragung des Teilnehmers eine Downlink-Datenübertragung zu dem Teilnehmer zu senden, wobei die Downlink-Datenübertragung eine Signalisierungsinformation aufweist, wobei die Signalisierungsinformation eine nachfolgende Punkt-zu-Mehrpunkt-Datenübertragung oder eine der Punkt-zu-Mehrpunkt-Datenübertragung vorangehende weitere Datenübertragung signalisiert, wobei die Basisstation ausgebildet ist, um die Punkt-zu-Mehrpunkt-Datenübertragung entsprechend der Signalisierungsinformation [z.B. zu einer Mehrzahl von Teilnehmern des Kommunikationssystems, wobei der Teilnehmer Teil der Mehrzahl von Teilnehmern ist,] zu senden.

Bei Ausführungsbeispielen kann die Signalisierungsinformation eine Information über einen Zeitpunkt der Punkt-zu-Mehrpunkt-Datenübertragung aufweisen.

Beispielsweise kann die Information über den Zeitpunkt ein absoluter Zeitpunkt, ein relativer Zeitpunkt [z.B. eine definierte Zeitspanne zwischen der Downlink-Datenübertragung und der Punkt-zu-Mehrpunkt-Datenübertragung] oder eine Information sein, von der der absolute oder relative Zeitpunkt abgeleitet werden kann, wie z.B. eine Anzahl von Taktzyklen eines Oszillators des Teilnehmers.

Bei Ausführungsbeispielen kann die Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Beispielsweise kann die Information über den Frequenzkanal ein absoluter Frequenzkanal oder ein relativer Frequenzkanal [z.B. ein Abstand zwischen einem Frequenzkanal der Downlink-Datenübertragung und einem Frequenzkanal der Punkt-zu-Mehrpunkt-Datenübertragung] sein.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die Signalisierungsinformation ferner eine Information über das Zeit- und oder Frequenzsprungmuster aufweist.

Beispielsweise kann die Punkt-zu-Mehrpunkt-Datenübertragung eine Telegram-Splitting-basierte Datenübertragung sein. Bei einer Telegram-Splitting-basierten Datenübertragung werden die zu übertragenen Daten [z.B. [codierte] Nutzdaten der physikalischen Schicht] auf eine Mehrzahl von Sub-Datenpaketen aufgeteilt, so dass die Mehrzahl von Sub-Datenpaketen jeweils nur einen Teil der zu übertragenen Daten aufweisen, wobei die Mehrzahl von Sub-Datenpaketen nicht zusammenhängend, sondern in der Zeit und/oder Frequenz entsprechend eines Zeit- und/oder Frequenzsprungmusters verteilt übertragen werden.

Bei Ausführungsbeispielen kann die Information über den Zeitpunkt der Punkt-zu-Mehrpunkt-Datenübertragung eine definierte [z.B. gewollte oder absichtliche] Ungenauigkeit aufweisen, die mindestens so groß ist, dass eine empfängerseitige Synchronisation auf die Punkt-zu-Mehrpunkt-Datenübertragung zum Empfang der Punkt-zu-Mehrpunkt-Datenübertragung erforderlich ist.

Bei Ausführungsbeispielen kann die definierte Ungenauigkeit im Bereich von 1 bis 10.000 Symboldauern liegen.

Bei Ausführungsbeispielen kann die definierte Ungenauigkeit in Abhängigkeit eines zeitlichen Abstands bis zur Punkt-zu-Mehrpunkt-Datenübertragung einer nichtlinearen Skalierung unterliegen, so dass die Ungenauigkeit mit steigendem Abstand bis zur Punkt-zu-Mehrpunkt-Datenübertragung größer ist.

Bei Ausführungsbeispielen kann die Basisstation ausgebildet sein, um basierend auf der Uplink-Datenübertragung des Teilnehmers eine Taktabweichung eines Taktgebers des Teilnehmers zu ermitteln, wobei die Basisstation ausgebildet ist, um die Downlink-Datenübertragung mit einer Taktgeberkorrekturinformation zur Korrektur der Taktabweichung des Taktgebers des Teilnehmers zu versehen.

Bei Ausführungsbeispielen kann die Basisstation ausgebildet sein, um basierend auf der Uplink-Datenübertragung des Teilnehmers eine Taktabweichung eines Taktgebers des Teilnehmers zu ermitteln, wobei die Information über den Zeitpunkt der Punkt-zu-Mehrpunkt Datenübertragung, die die Signalisierungsinformation aufweist, die Taktabweichung des Taktgebers des Teilnehmers berücksichtigt [z.B. derart, dass die Taktabweichung des Taktgebers kompensiert wird], und/oder wobei die Information über den Frequenzkanal der Punkt-zu-Mehrpunkt-Datenübertragung, die die Signalisierungsinformation aufweist, die Taktabweichung des Taktgebers des Teilnehmers berücksichtigt [z.B. derart, dass die Taktabweichung des Taktgebers kompensiert wird].

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation einen Zeitraum oder Zeitpunkt [z.B. groben Zeitpunkt] für eine zweite Uplink-Datenübertragung [z.B. die auf die erste Uplink-Datenübertragung folgt] signalisiert, wobei die Basisstation ausgebildet ist, um in dem signalisierten Zeitraum die zweite Uplink-Datenübertragung von dem Teilnehmer zu empfangen und um zeitlich synchronisiert zu der zweiten Uplink-Datenübertragung eine zweite Downlink-Datenübertragung zu dem Teilnehmer zu senden, wobei die zweite Downlink-Datenübertragung eine zweite Signalisierungsinformation aufweist, wobei die zweite Signalisierungsinformation die nachfolgende Punkt-zu-Mehrpunkt-Datenübertragung signalisiert, [z.B. wobei die zweite Uplink-Datenübertragung und/oder die zweite Downlink-Datenübertragung die weitere Datenübertragung ist], wobei die Basisstation ausgebildet ist, um die Punkt-zu-Mehrpunkt-Datenübertragung entsprechend der zweiten Signalisierungsinformation [z.B. zu einer Mehrzahl von Teilnehmern des Kommunikationssystems, wobei der Teilnehmer Teil der Mehrzahl von Teilnehmern ist,] zu senden.

Bei Ausführungsbeispielen kann die zweite Signalisierungsinformation eine Information über einen Zeitpunkt der Punkt-zu-Mehrpunkt-Datenübertragung aufweisen.

Bei Ausführungsbeispielen kann die zweite Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die zweite Signalisierungsinformation ferner eine Information über das Zeit- und oder Frequenzsprungmuster aufweist.

Bei Ausführungsbeispielen kann die Basisstation ausgebildet sein, um basierend auf der zweiten Uplink-Datenübertragung des Teilnehmers eine Taktabweichung eines Taktgebers des Teilnehmers zu ermitteln, wobei die Basisstation ausgebildet ist, um die zweite Downlink-Datenübertragung mit einer Taktgeberkorrekturinformation zur Korrektur der Taktabweichung des Taktgebers des Teilnehmers zu versehen.

Bei Ausführungsbeispielen kann die Basisstation ausgebildet sein, um basierend auf der ersten oder zweiten Uplink-Datenübertragung des Teilnehmers eine Taktabweichung eines Taktgebers des Teilnehmers zu ermitteln, wobei die Information über den Zeitpunkt der Punkt-zu-Mehrpunkt Datenübertragung, die die zweite Signalisierungsinformation aufweist, die Taktabweichung des Taktgebers des Teilnehmers berücksichtigt [z.B. derart, dass die Taktabweichung des Taktgebers kompensiert wird].

Bei Ausführungsbeispielen kann die Uplink-Datenübertragung eine erste Uplink-Datenübertragung sein, wobei die Downlink-Datenübertragung eine erste Downlink-Datenübertragung ist, wobei die Signalisierungsinformation eine erste Signalisierungsinformation ist, wobei die erste Signalisierungsinformation eine Information über einen groben Zeitpunkt der Punkt-zu-Mehrpunkt-Datenübertragung aufweist, [z.B. wobei die Information über den groben Zeitpunkt der Punkt-zu-Mehrpunkt-Datenübertragung für einen Empfang der Punkt-zu-Mehrpunkt-Datenübertragung zu ungenau ist], wobei die Basisstation ausgebildet ist, um vor dem groben Zeitpunkt der Punkt-zu-Mehrpunkt-Datenübertragung eine vierte Uplink-Datenübertragung von dem Teilnehmer zu empfangen und um zeitlich synchronisiert zu der vierten Uplink-Datenübertragung eine vierte Downlink-Datenübertragung zu dem Teilnehmer zu senden, wobei die vierte Downlink-Datenübertragung eine vierte Signalisierungsinformation aufweist, wobei die vierte Signalisierungsinformation die nachfolgende Punkt-zu-Mehrpunkt-Datenübertragung signalisiert, [z.B. wobei die vierte Uplink-Datenübertragung und/oder die vierte Downlink-Datenübertragung die weitere Datenübertragung ist], wobei die Basisstation ausgebildet ist, um die Punkt-zu-Mehrpunkt-Datenübertragung entsprechend der vierten Signalisierungsinformation [z.B. zu einer Mehrzahl von Teilnehmern des Kommunikationssystems, wobei der Teilnehmer Teil der Mehrzahl von Teilnehmern ist,] zu senden,

Bei Ausführungsbeispielen kann die vierte Signalisierungsinformation eine Information über einen Zeitpunkt der Punkt-zu-Mehrpunkt-Datenübertragung aufweisen.

Bei Ausführungsbeispielen kann die vierte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die vierte Signalisierungsinformation ferner eine Information über das Zeit- und oder Frequenzsprungmuster aufweist.

Bei Ausführungsbeispielen kann die Basisstation ausgebildet sein, um basierend auf der vierten Uplink-Datenübertragung des Teilnehmers eine Taktabweichung eines Taktgebers des Teilnehmers zu ermitteln, wobei die Basisstation ausgebildet ist, um die vierte Downlink-Datenübertragung mit einer Taktgeberkorrekturinformation zur Korrektur der Taktabweichung des Taktgebers des Teilnehmers zu versehen.

Bei Ausführungsbeispielen kann die Basisstation ausgebildet sein, um basierend auf der vierten Uplink-Datenübertragung des Teilnehmers eine Taktabweichung eines Taktgebers des Teilnehmers zu ermitteln, wobei die Information über den Zeitpunkt der Punkt-zu-Mehrpunkt Datenübertragung, die die vierte Signalisierungsinformation aufweist, die Taktabweichung des Taktgebers des Teilnehmers berücksichtigt [z.B. derart, dass die Taktabweichung des Taktgebers kompensiert wird], und/oder wobei die Information über den Frequenzkanal der Punkt-zu-Mehrpunkt Datenübertragung, die die vierte Signalisierungsinformation aufweist, die Taktabweichung des Taktgebers des Teilnehmers berücksichtigt [z.B. derart, dass die Taktabweichung des Taktgebers kompensiert wird].

Bei Ausführungsbeispielen kann die Signalisierungsinformation eine erste Signalisierungsinformation sein, wobei die erste Signalisierungsinformation eine Information über einen Zeitpunkt eines Stützbakens aufweist, wobei die Basisstation ausgebildet ist, um den Stützbaken entsprechend der ersten Signalisierungsinformation [z.B. zu einer Mehrzahl von Teilnehmern des Kommunikationssystems, wobei der Teilnehmer Teil der Mehrzahl von Teilnehmern ist,] zu senden, wobei der Stützenbaken eine fünfte Signalisierungsinformation aufweist, wobei die fünfte Signalisierungsinformation die nachfolgende Punkt-zu-Mehrpunkt-Datenübertragung signalisiert, [z.B. wobei der Stützbaken die weitere Datenübertragung ist].

Bei Ausführungsbeispielen kann die erste Signalisierungsinformation ferner eine Information über einen Frequenzkanal [z.B. des von dem Kommunikationssystem verwendeten Frequenzbands] des Stützbakens aufweisen.

Bei Ausführungsbeispielen kann die fünfte Signalisierungsinformation eine Information über einen Zeitpunkt der Punkt-zu-Mehrpunkt-Datenübertragung aufweisen.

Bei Ausführungsbeispielen kann die fünfte Signalisierungsinformation ferner eine Information über einen Frequenzkanal [z.B. des von dem Kommunikationssystem verwendeten Frequenzbands] der Punkt-zu-Mehrpunkt-Datenübertragung aufweisen.

Bei Ausführungsbeispielen kann die Punkt-zu-Mehrpunkt-Datenübertragung eine Mehrzahl von Sub-Datenpaketen aufweisen, die in der Zeit- und oder Frequenz entsprechend eines Zeit- und/oder Frequenzsprungmusters verteilt übertragen werden, wobei die fünfte Signalisierungsinformation ferner eine Information über das Zeit- und oder Frequenzsprungmuster aufweist.

Bei Ausführungsbeispielen kann die Basisstation ausgebildet sein, um basierend auf der Uplink-Datenübertragung des Teilnehmers eine Taktabweichung eines Taktgebers des Teilnehmers zu ermitteln, wobei die Basisstation ausgebildet ist, um die Downlink-Datenübertragung oder den Stützbaken mit einer Taktgeberkorrekturinformation zur Korrektur der Taktabweichung des Taktgebers des Teilnehmers zu versehen.

Bei Ausführungsbeispielen kann die Basisstation ausgebildet sein, um basierend auf der Uplink-Datenübertragung des Teilnehmers eine Taktabweichung eines Taktgebers des Teilnehmers zu ermitteln, wobei die Information über den Zeitpunkt der Punkt-zu-Mehrpunkt Datenübertragung, die die fünfte Signalisierungsinformation aufweist, die Taktabweichung des Taktgebers des Teilnehmers berücksichtigt [z.B. derart, dass die Taktabweichung des Taktgebers kompensiert wird].

Weitere Ausführungsbeispiele schaffen ein Verfahren zum Betrieb eines Teilnehmers eines Kommunikationssystems. Das Verfahren umfasst einen Schritt des Sendens einer Uplink-Datenübertragung zu einer Basisstation des Kommunikationssystems, wobei die Uplink-Datenübertragung unkoordiniert ist. Ferner umfasst das Verfahren einen Schritt des Empfangens einer Downlink-Datenübertragung von der Basisstation zeitlich synchronisiert zu der Uplink-Datenübertragung, wobei die Downlink-Datenübertragung eine Signalisierungsinformation aufweist. Ferner umfasst das Verfahren einen Schritt des Empfangens einer Punkt-zu-Mehrpunkt-Datenübertragung [z.B. Multicast-Datenübertragung] von der Basisstation basierend auf der Signalisierungsinformation.

Weitere Ausführungsbeispiele schaffen ein Verfahren zum Betrieb einer Basisstation eines Kommunikationssystems. Das Verfahren umfasst einen Schritt des Empfangens einer Uplink-Datenübertragung von einem Teilnehmer des Kommunikationssystems, wobei die Uplink-Datenübertragung unkoordiniert ist. Ferner umfasst das Verfahren einen Schritt des Sendens einer Downlink-Datenübertragung zu dem Teilnehmer zeitlich synchronisiert zu der Uplink-Datenübertragung, wobei die Downlink-Datenübertragung eine Signalisierungsinformation aufweist, wobei die Signalisierungsinformation eine nachfolgende Punkt-zu-Mehrpunkt-Datenübertragung oder eine der Punkt-zu-Mehrpunkt-Datenübertragung vorangehende weitere Datenübertragung signalisiert. Ferner umfasst das Verfahren einen Schritt des Sendens der Punkt-zu-Mehrpunkt-Datenübertragung entsprechend der Signalisierungsinformation [z.B. zu einer Mehrzahl von Teilnehmern des Kommunikationssystems, wobei der Teilnehmer Teil der Mehrzahl von Teilnehmern ist].

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturverzeichnis

[1] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.
[2] DE 10 2011 082 098 B1
[3] DE 10 2017 206 236 A1
[4] ETSI TS 103 357 Standard v1.1.1
[5] G. Kilian, H. Petkov, R. Psiuk, H. Lieske, F. Beer, J. Robert, and A. Heuberger, "Improved coverage for low-power telemetry systems using telegram splitting," in Proceedings of 2013 European Conference on Smart Objects, Systems and Technologies (SmartSysTech), 2013

## Patentansprüche

1. Teilnehmer (106_1) eines Kommunikationssystems (100),
wobei der Teilnehmer (106_1) ausgebildet ist, um Daten asynchron zu einer Basisstation (104) des Kommunikationssystems (100) zu senden,
wobei der Teilnehmer (106_1) ausgebildet ist, um ein Synchronisationsdatenpaket (126) einer Multicast-Datenübertragung (124) der Basisstation (104) des Kommunikationssystems (100) zu empfangen, wobei das Synchronisationsdatenpaket (126) in einem dem Teilnehmer (106_1) bekannten Frequenzbereich (125) des Frequenzbands (103) des Kommunikationssystems (100) übertragen wird, wobei der dem Teilnehmer bekannte Frequenzbereich höchstens einer Empfangsbandbreite eines Empfängers des Teilnehmers entspricht, wobei das von dem Kommunikationssystem genutzte Frequenzband eine um zumindest den Faktor 5 größere Bandbreite aufweist als die Empfangsbandbreite des Empfängers des Teilnehmers,
wobei der Teilnehmer (106_1) ausgebildet ist, um basierend auf dem Synchronisationsdatenpaket (126) ein zu dem Synchronisationsdatenpaket (126) in der Zeit und/oder Frequenz referenziertes Nutzdatenpaket (128) der Multicast-Datenübertragung (124) zu empfangen;
wobei das Synchronisationsdatenpaket (126) der Multicast-Datenübertragung (124) aufgeteilt auf eine Mehrzahl von Teil-Synchronisationsdatenpaketen (126_1-126_k) übertragen wird, wobei die Mehrzahl von Teil-Synchronisationsdatenpaketen (126_1-126_k) jeweils einen Teil des Synchronisationsdatenpakets (126) aufweisen, und wobei die Mehrzahl von Teil-Synchronisationsdatenpaketen (126_1-126_k) entsprechend dem Teilnehmer (106_1) bekannten Zeit- und Frequenzsprungmusters in der Zeit und Frequenz verteilt übertragen werden,
wobei der Teilnehmer (106_1) ausgebildet ist, um die Mehrzahl von Teil-Synchronisationsdatenpaketen (126_1-126_k) basierend auf dem dem Teilnehmer (106_1) bekannten Zeit- und Frequenzsprungmuster zu empfangen,
wobei die Mehrzahl von Teil-Synchronisationsdatenpaketen (126_1-126_k) innerhalb des dem Teilnehmer bekannten Frequenzbereichs übertragen werden.

2. Teilnehmer (106_1) nach Anspruch 1,
wobei das Nutzdatenpaket (128) der Multicast-Datenübertragung (124) aufgeteilt auf eine Mehrzahl von Teil-Nutzdatenpaketen (128_1-128_i) übertragen wird, wobei die Mehrzahl von Teil-Nutzdatenpaketen (128_1-128_i) jeweils einen Teil des Nutzdatenpakets (128) aufweisen, und wobei die Mehrzahl von Teil-Nutzdatenpaketen (128_1-128_i) entsprechend eines Zeit- und/oder Frequenzsprungmusters in der Zeit und/oder Frequenz verteilt übertragen werden,
wobei das Synchronisationsdatenpaket (126) eine Information über das Zeit- und/oder Frequenzsprungmuster aufweist,
wobei der Teilnehmer (106_1) ausgebildet ist, um die Mehrzahl von Teil-Nutzdatenpaketen (128_1-128_i) basierend auf der Information über das Zeit- und/oder Frequenzsprungmuster zu empfangen.

3. Teilnehmer (106_1) nach einem der vorangehenden Ansprüche,
wobei der Teilnehmer (106_1) ausgebildet ist, um eine Uplink-Datenübertragung (120) zu der Basisstation (104) des Kommunikationssystems (100) zu senden und um zeitlich synchronisiert zu der gesendeten Uplink-Datenübertragung (120) eine Downlink-Datenübertragung (122) von der Basisstation (104) zu empfangen, wobei die Downlink-Datenübertragung (122) eine Signalisierungsinformation aufweist,
wobei der Teilnehmer (106_1) ausgebildet ist, um basierend auf der Signalisierungsinformation das Synchronisationsdatenpaket (126) der Multicast-Datenübertragung (124) zu empfangen.

4. Teilnehmer (106_1) nach Anspruch 3,
wobei die Signalisierungsinformation eine Information über einen Zeitpunkt der Übertragung des Synchronisationsdatenpakets (126) aufweist,
und/oder
wobei die Downlink-Datenübertragung (122) eine Information über das Zeit- und/oder Frequenzsprungmuster des Synchronisationsdatenpakets (126) aufweist.

5. Teilnehmer (106_1) nach einem der vorangehenden Ansprüche,
wobei das Synchronisationsdatenpaket (126) mehrfach ausgesendet wird, wobei eine erste Aussendung des Synchronisationsdatenpakets (126) und eine zweite Aussendung des Synchronisationsdatenpakets (126) in der Zeit und/oder Frequenz verschobene Versionen voneinander sind.

6. Teilnehmer (106_1) nach einem der vorangehenden Ansprüche,
wobei das Synchronisationsdatenpaket (126) und das Nutzdatenpaket (128) der Multicast-Datenübertragung (124) mit dem gleichen Fehlerschutzcode codiert sind,
und/oder
wobei die Teil-Synchronisationsdatenpakete (126_1-126_k) kanalcodiert sind, so dass nur eine Teilmenge der Mehrzahl von Teil-Synchronisationsdatenpaketen (126_1-126_k) zur erfolgreichen Decodierung des Synchronisationsdatenpakets (126) erforderlich ist, wobei der Teilnehmer (106_1) ausgebildet ist, um zumindest ein Teil der Mehrzahl von Teil-Synchronisationsdatenpaketen (126_1-126_k) zu empfangen und zu decodieren, um das Synchronisationsdatenpaket (126) zu erhalten.

7. Teilnehmer (106_1) nach einem der vorangehenden Ansprüche,
wobei der Teilnehmer (106_1) ein Sensorknoten oder Aktorknoten ist,
und/oder
wobei der Teilnehmer (106_1) batteriebetrieben ist,
und/oder
wobei der Teilnehmer (106_1) ein Energy-Harvesting-Element zur elektrischen Energiegewinnung aufweist.

8. Basisstation (104) eines Kommunikationssystems (100),
wobei die Basisstation (104) ausgebildet ist, um eine Multicast-Datenübertragung (124) zu asynchron sendenden Teilnehmern (106_1-106_n) des Kommunikationssystems (100) zu senden, wobei die Multicast-Datenübertragung (124) ein Synchronisationsdatenpaket (126) und ein zu dem Synchronisationsdatenpaket (126) in der Zeit und/oder Frequenz referenziertes Nutzdatenpaket (128) aufweist, wobei das Synchronisationsdatenpaket (126) in einem den Teilnehmern (106_1-106_n) bekannten Frequenzbereich (125) des Frequenzbands (103) des Kommunikationssystems (100) übertragen wird,
wobei die Basisstation (104) ausgebildet ist, um das Synchronisationsdatenpaket (126) der Multicast-Datenübertragung (124) aufgeteilt auf eine Mehrzahl von Teil-Synchronisationsdatenpaketen (126_1-126_k) zu übertragen, wobei die Mehrzahl von Teil-Synchronisationsdatenpaketen (126_1-126_k) jeweils einen Teil des Synchronisationsdatenpakets (126) aufweisen, und wobei die Mehrzahl von Teil-Synchronisationsdatenpaketen (126_1-126_k) entsprechend eines dem Teilnehmer (106_1) bekannten Zeit- und Frequenzsprungmusters in der Zeit und Frequenz verteilt übertragen werden,
wobei die Mehrzahl von Teil-Synchronisationsdatenpaketen (126_1-126_k) entsprechend des Zeit- und Frequenzsprungmusters des Synchronisationsdatenpakets (126) innerhalb des den Teilnehmern (106_1-106_n) bekannten Frequenzbereichs (125) übertragen werden,
wobei der den Teilnehmern (106_1-106_n) bekannte Frequenzbereich (125) höchstens einer Empfangsbandbreite der Empfänger der Teilnehmer (106_1-106_n) entspricht,
wobei das von dem Kommunikationssystem genutzte Frequenzband eine um zumindest den Faktor 5 größere Bandbreite aufweist als die Empfangsbandbreite der Empfänger der Teilnehmer.

9. Basisstation (104) nach Anspruch 8,
wobei die Basisstation (104) ausgebildet ist, um das Nutzdatenpaket (128) der Multicast-Datenübertragung (124) aufgeteilt auf eine Mehrzahl von Teil-Nutzdatenpaketen (128_1-128_i) zu übertragen, wobei die Mehrzahl von Teil-Nutzdatenpaketen (128_1-128_i) jeweils einen Teil des Nutzdatenpakets (128) aufweisen, und wobei die Mehrzahl von Teil-Nutzdatenpaketen (128_1-128_i) entsprechend eines Zeit- und/oder Frequenzsprungmusters in der Zeit und/oder Frequenz verteilt übertragen werden,
wobei die Basisstation (104) ausgebildet ist, um das Synchronisationsdatenpaket (126) mit einer Information über das Zeit- und/oder Frequenzsprungmuster zu versehen.

10. Basisstation (104) nach einem der vorangehenden Ansprüche,
wobei die Basisstation (104) ausgebildet ist, um eine Uplink-Datenübertragung (120) von einem der Teilnehmer (106_1) zu empfangen und um zeitlich synchronisiert zu der Uplink-Datenübertragung (120) eine Downlink-Datenübertragung (122) zu dem Teilnehmer (106_1) zu senden, wobei die Downlink-Datenübertragung (122) eine Signalisierungsinformation aufweist, wobei die Signalisierungsinformation das Synchronisationsdatenpaket (126) signalisiert.

11. Basisstation (104) nach einem der vorangehenden Ansprüche,
wobei die Basisstation (104) ausgebildet ist, um das Synchronisationsdatenpaket (126) mehrfach auszusenden,
wobei eine erste Aussendung des Synchronisationsdatenpakets (126) und eine zweite Aussendung des Synchronisationsdatenpakets (126) in der Zeit und/oder Frequenz verschobene Versionen voneinander sind.

12. Basisstation (104) nach einem der vorangehenden Ansprüche,
wobei das Synchronisationsdatenpaket (126) und das Nutzdatenpaket (128) der Multicast-Datenübertragung (124) mit dem gleichen Fehlerschutzcode codiert sind,
und/oder
wobei die Basisstation (104) ausgebildet ist, um die Teil-Synchronisationsdatenpakete (126_1-126_k) kanalzucodieren, so dass nur eine Teilmenge der Mehrzahl von Teil-Synchronisationsdatenpaketen (126_1-126_k) zur erfolgreichen Decodierung des Synchronisationsdatenpakets (126) erforderlich ist.

13. Verfahren zum Betrieb eines asynchron sendenden Teilnehmers (106_1) eines Kommunikationssystems (100), wobei das Verfahren aufweist:
Empfangen eines Synchronisationsdatenpakets (126) einer Multicast-Datenübertragung (124) der Basisstation (104) des Kommunikationssystems (100), wobei das Synchronisationsdatenpaket (126) in einem dem Teilnehmer (106_1) bekannten Frequenzbereich (125) des Frequenzbands (103) des Kommunikationssystems (100) übertragen wird,
Empfangen, basierend auf dem Synchronisationsdatenpaket, eines zu dem Synchronisationsdatenpaket (126) in der Zeit und/oder Frequenz referenzierten Nutzdatenpakets (128) der Multicast-Datenübertragung (124),
wobei das Synchronisationsdatenpaket (126) der Multicast-Datenübertragung (124) aufgeteilt auf eine Mehrzahl von Teil-Synchronisationsdatenpaketen (126_1-126_k) übertragen wird, wobei die Mehrzahl von Teil-Synchronisationsdatenpaketen (126_1-126_k) jeweils einen Teil des Synchronisationsdatenpakets (126) aufweisen, und wobei die Mehrzahl von Teil-Synchronisationsdatenpaketen (126_1-126_k) entsprechend dem Teilnehmer (106_1) bekannten Zeit- und Frequenzsprungmusters in der Zeit und Frequenz verteilt übertragen werden,
wobei die Mehrzahl von Teil-Synchronisationsdatenpaketen (126_1-126_k) basierend auf dem dem Teilnehmer (106_1) bekannten Zeit- und Frequenzsprungmuster empfangen werden,
wobei die Mehrzahl von Teil-Synchronisationsdatenpaketen (126_1-126_k) innerhalb des dem Teilnehmer bekannten Frequenzbereichs übertragen werden,
wobei der dem Teilnehmer bekannte Frequenzbereich höchstens einer Empfangsbandbreite eines Empfänger des Teilnehmer entspricht,
wobei das von dem Kommunikationssystem genutzte Frequenzband eine um zumindest den Faktor 5 größere Bandbreite aufweist als die Empfangsbandbreite des Empfängers des Teilnehmers.

14. Verfahren zum Betrieb einer Basisstation (104) eines Kommunikationssystems (100), wobei das Verfahren aufweist:
Senden einer Multicast-Datenübertragung (124) zu einer Mehrzahl von asynchron sendenden Teilnehmern (106_1-106_n) des Kommunikationssystems (100), wobei die Multicast-Datenübertragung (124) ein Synchronisationsdatenpaket (126) und ein zu dem Synchronisationsdatenpaket (126) in der Zeit und/oder Frequenz referenziertes Nutzdatenpaket (128) aufweist, wobei das Synchronisationsdatenpaket (126) in einem den Teilnehmern (106_1-106_n) bekannten Frequenzbereich (125) des Frequenzbands (103) des Kommunikationssystems (100) übertragen wird,
wobei das Synchronisationsdatenpaket (126) der Multicast-Datenübertragung (124) aufgeteilt auf eine Mehrzahl von Teil-Synchronisationsdatenpaketen (126_1-126_k) übertragen wird, wobei die Mehrzahl von Teil-Synchronisationsdatenpaketen (126_1-126_k) jeweils einen Teil des Synchronisationsdatenpakets (126) aufweisen, und wobei die Mehrzahl von Teil-Synchronisationsdatenpaketen (126_1-126_k) entsprechend eines dem Teilnehmer (106_1) bekannten Zeit- und Frequenzsprungmusters in der Zeit und Frequenz verteilt übertragen werden,
wobei die Mehrzahl von Teil-Synchronisationsdatenpaketen (126_1-126_k) entsprechend des Zeit- und Frequenzsprungmusters des Synchronisationsdatenpakets (126) innerhalb des den Teilnehmern (106_1-106_n) bekannten Frequenzbereichs (125) übertragen werden,
wobei der den Teilnehmern (106_1-106_n) bekannte Frequenzbereich (125) höchstens einer Empfangsbandbreite der Empfänger der Teilnehmer (106_1-106_n) entspricht,
wobei das von dem Kommunikationssystem genutzte Frequenzband eine um zumindest den Faktor 5 größere Bandbreite aufweist als die Empfangsbandbreite der Empfänger der Teilnehmer.

15. Computerprogramm zur Durchführung des Verfahrens gemäß einem der Ansprüche 13 und 14, wenn das Computerprogramm auf einem Computer, Mikroprozessor oder Software Defined Radio abläuft.

## Claims

1. A participant (106_1) of a communication system (100),
wherein the participant (106_1) is configured to transmit data asynchronously to a base station (104) of the communication system (100),
wherein the participant (106_1) is configured to receive a synchronization data packet (126) of a multicast data transfer (124) of the base station (104) of the communication system (100), wherein the synchronization data packet (126) is transferred in a frequency range (125) of the frequency band (103) of the communication system (100) that is known to the participant (106_1), wherein the frequency range known to the participant at most corresponds to a reception bandwidth of a receiver of the participant, wherein the frequency band used by the communication system comprises a bandwidth that is larger than the reception bandwidth of the receiver of the participant at least by the factor 5,
wherein the participant (106_1) is configured to receive, on the basis of the synchronization data packet (126), a payload data packet (128) of the multicast data transfer (124) that is referenced in time and/or frequency to the synchronization data packet (126),
wherein the synchronization data packet (126) of the multicast data transfer (124) is transferred divided onto a plurality of partial synchronization data packets (126_1-126_k), wherein the plurality of partial synchronization data packets (126_1-126_k) each comprise a part of the synchronization data packet (126), and wherein the plurality of partial synchronization data packets (126_1-126_k) are transferred distributed in time and frequency according to a time and frequency hopping pattern known to the participant (106_1),
wherein the participant (106_1) is configured to receive the plurality of partial synchronization data packets (126_1-126_k) on the basis of the time and frequency hopping pattern known to the participant (106_1),
wherein the plurality of partial synchronization data packets (126_1-126_k) are transferred within the frequency range known to the participant.

2. The participant (106_1) according to claim 1,
wherein the payload data packet (128) of the multicast data transfer (124) is transferred divided onto a plurality of partial payload data packets (128_1-128_i), wherein the plurality of partial payload data packets (128_1-128 i) each comprise a part of the payload data packet (128), and wherein the plurality of partial payload data packets (128_1-128 i) are transferred distributed in time and/or frequency according to a time and/or frequency hopping pattern,
wherein the synchronization data packet (126) comprises information about the time and/or frequency hopping pattern,
wherein the participant (106_1) is configured to receive the plurality of partial payload data packets (128_1-128_i) on the basis of the information about the time and/or frequency hopping pattern.

3. The participant (106_1) according to any of the preceding claims,
wherein the participant (106_1) is configured to transmit an uplink data transfer (120) to the base station (104) of the communication system (100) and to receive, temporally synchronized to the transmitted uplink data transfer (120), a downlink data transfer (122) from the base station (104), wherein the downlink data transfer (122) comprises signaling information,
wherein the participant (106_1) is configured to receive the synchronization data packet (126) of the multicast data transfer (124) on the basis of the signaling information.

4. The participant (106_1) according to claim 3,
wherein the signaling information comprises information about a point in time of the transfer of the synchronization data packet (126),
and/or
wherein the downlink data transfer (122) comprises information about the time and/or frequency hopping pattern of the synchronization data packet (126).

5. The participant (106_1) according to any of the preceding claims,
wherein the synchronization data packet (126) is emitted multiple times, wherein a first emission of the synchronization data packet (126) and a second emission of the synchronization data packet (126) are versions of each other that are shifted in time and/or frequency.

6. The participant (106_1) according to any of the preceding claims,
wherein the synchronization data packet (126) and the payload data packet (128) of the multicast data transfer (124) are encoded with the same error protection code,
and/or
wherein the partial synchronization data packets (126_1-126_k) are channel-encoded so that only a subset of the plurality of partial synchronization data packets (126_1-126_k) is required to successfully decode the synchronization data packet (126), wherein the participant (106_1) is configured to receive and decode at least a part of the plurality of partial synchronization data packets (126_1-126_k) in order to obtain the synchronization data packet (126).

7. The participant (106_1) according to any of the preceding claims,
wherein the participant (106_1) is a sensor node or actuator node,
and/or
wherein the participant (106_1) is battery-operated,
and/or
wherein the participant (106_1) comprises an energy harvesting element for generating electric energy.

8. A base station (104) of a communication system (100),
wherein the base station (104) is configured to transmit a multicast data transfer (124) to asynchronously transmitting participants (106_1-106_n) of the communication system (100), wherein the multicast data transfer (124) comprises a synchronization data packet (126) and a payload data packet (128) referenced in time and/or frequency to the synchronization data packet (126), wherein the synchronization data packet (126) is transferred in a frequency range (125) of the frequency band (103) of the communication system (100) that is known to the participants (106_1-106_n),
wherein the base station (104) is configured to is transfer the synchronization data packet (126) of the multicast data transfer (124) divided onto a plurality of partial synchronization data packets (126_1-126_k), wherein the plurality of partial synchronization data packets (126_1-126_k) each comprise a part of the synchronization data packet (126), and wherein the plurality of partial synchronization data packets (126_1-126_k) are transferred distributed in time and frequency according to a time and frequency hopping pattern known to a participant (106_1),
wherein the plurality of partial synchronization data packets (126_1-126_k) are transferred according to the time and frequency hopping pattern of the synchronization data packet (126) within the frequency range (125) known to the participants (106_1-106 n),
wherein the frequency range (125) known to the participants (106_1-106_n) at most corresponds to a reception bandwidth of a receiver of the participants (106_1-106_n),
wherein the frequency band used by the communication system comprises a bandwidth that is larger than the reception bandwidth of the receivers of the participants at least by the factor 5.

9. The base station (104) according to claim 8,
wherein the base station (104) is configured to transfer the payload data packet (128) of the multicast data transfer (124) divided onto a plurality of partial payload data packets (128_1-128_i), wherein the plurality of partial payload data packets (128_1-128_i) each comprise a part of the payload data packet (128), and wherein the plurality of partial payload data packets (128_1-128_i) are transferred distributed in time and/or frequency according to a time and/or frequency hopping pattern,
wherein the base station (104) is configured to provide the synchronization data packet (126) with information about the time and/or frequency hopping pattern.

10. The base station (104) according to any of the preceding claims,
wherein the base station (104) is configured to receive an uplink data transfer (120) from one of the participants (106_1) and to transmit, temporally synchronized to the uplink data transfer (120), a downlink data transfer (122) to the participant (106_1), wherein the downlink data transfer (122) comprises signaling information, wherein the signaling information signals the synchronization data packet (126).

11. The base station (104) according to any of the preceding claims,
wherein the base station (104) is configured to emit the synchronization data packet (126) multiple times,
wherein a first emission of the synchronization data packet (126) and a second emission of the synchronization data packet (126) are versions of each other that are shifted in time and/or frequency.

12. The base station (104) according to any of the preceding claims,
wherein the synchronization data packets (126) and the payload data packet (128) of the multicast data transfer (124) are encoded with the same error protection code,
and/or
wherein the base station (1049 is configured to channel-encode the partial synchronization data packets (126_1-126_k) so that only a subset of the plurality of partial synchronization data packets (126_1-126_k) is required to successfully decode the synchronization data packet (126).

13. A method for operating an asynchronously transmitting participant (106_1) of a communication system (100), the method comprising:
receiving a synchronization data packet (126) of a multicast data transfer (124) of the base station (104) of the communication system (100), wherein the synchronization data packet (126) is transferred in a frequency range (125) of the frequency band (103) of the communication system (100) that is known to the participant (106_1),
receiving, on the basis of the synchronization data packet, a payload data packet (128) of the multicast data transfer (124) that is referenced in time and/or frequency to the synchronization data packet (126),
wherein the synchronization data packet (126) of the multicast data transfer (124) is transferred divided onto a plurality of partial synchronization data packets (126_1-126_k), wherein the plurality of partial synchronization data packets (126_1-126 _k) each comprise a part of the synchronization data packet (126), and wherein the plurality of partial synchronization data packets (126_1-126_k) are transferred distributed in time and frequency according to a time and frequency hopping pattern known to the participant (106_1),
wherein the plurality of partial synchronization data packets (126_1-126_k) are received on the basis of the time and frequency hopping pattern known to the participant (106_1),
wherein the plurality of partial synchronization data packets (126_1-126_k) are transferred within the frequency range known to the participant,
wherein the frequency range known to the participant at most corresponds to a reception bandwidth of a receiver of the participant,
wherein the frequency band used by the communication system comprises a bandwidth that is larger than the reception bandwidth of the receiver of the participant at least by the factor 5.

14. A method for operating a base station (104) of a communication system (100), the method comprising:
transmitting a multicast data transfer (124) to a plurality of asynchronously transmitting participants (106_1-106_n) of the communication system (100), wherein the multicast data transfer (124) comprises a synchronization data packet (126) and a payload data packet (128) referenced in time and/or frequency to the synchronization data packet (126), wherein the synchronization data packet (126) is transferred in a frequency range (125) of the frequency band (103) of the communication system (100) that is known to the participants (106_1-106_n),
wherein the synchronization data packet (126) of the multicast data transfer (124) is transferred divided onto a plurality of partial synchronization data packets (126_1-126_k), wherein the plurality of partial synchronization data packets (126_1-126_k) each comprise a part of the synchronization data packet (126), and wherein the plurality of partial synchronization data packets (126_1-126_k) are transferred distributed in time and frequency according to a time and frequency hopping pattern known to the participant (106_1),
wherein the plurality of partial synchronization data packets (126_1-126_k) are transferred according to the time and frequency hopping pattern of the synchronization data packet (126) within the frequency range (125) known to the participants (106_1-106_n),
wherein the frequency range (125) known to the participants (106_1-106_n) at most corresponds to a reception bandwidth of a receiver of the participants (106_1-106_n),
wherein the frequency band used by the communication system comprises a bandwidth that is larger than the reception bandwidth of the receivers of the participants at least by the factor 5.

15. A computer program for performing the method according to any of claims 13 and 14 if the computer program runs on a computer, a microprocessor, or a software defined radio.

## Revendications

1. Abonné (106_1) d'un système de communication (100),
dans lequel l'abonné (106_1) est conçu pour envoyer des données de manière asynchrone à une station de base (104) du système de communication (100),
dans lequel l'abonné (106_1) est conçu pour recevoir un paquet de données de synchronisation (126) d'une transmission de données de type multidiffusion (124) de la station de base (104) du système de communication (100), dans lequel le paquet de données de synchronisation (126) est transmis dans une plage de fréquences (125), connue de l'abonné (106_1), de la bande de fréquences (103) du système de communication (100), dans lequel la plage de fréquences connue de l'abonné correspond tout au plus à une largeur de bande de réception d'un récepteur de l'abonné, dans lequel la bande de fréquences utilisée par le système de communication présente une largeur de bande supérieure d'au moins un facteur de 5 à la largeur de bande de réception du récepteur de l'abonné,
dans lequel l'abonné (106_1) est conçu pour recevoir, sur base du paquet de données de synchronisation (126), un paquet de données utiles (128) référencé dans le temps et/ou en fréquence par rapport au paquet de données de synchronisation (126) de la transmission de données de type multidiffusion (124);
dans lequel le paquet de données de synchronisation (126) de la transmission de données de type multidiffusion (124) est transmis de manière répartie en une pluralité de paquets partiels de données de synchronisation (126_1 à 126_k), dans lequel la pluralité de paquets partiels de données de synchronisation (126_1 à 126_k) présentent, chacun, une partie du paquet de données de synchronisation (126), et dans lequel la pluralité de paquets partiels de données de synchronisation (126_1 à 126_k) sont transmis de manière répartie dans le temps et en fréquence selon un modèle de saut dans le temps et en fréquence connu de l'abonné (106_1),
dans lequel l'abonné (106_1) est conçu pour recevoir la pluralité de paquets partiels de données de synchronisation (126_1 à 126_k) sur base du modèle de saut dans le temps et en fréquence connu de l'abonné (106_1),
dans lequel la pluralité de paquets partiels de données de synchronisation (126_1 à 126_k) sont transmis dans la plage de fréquences connue de l'abonné.

2. Abonné (106_1) selon la revendication 1,
dans lequel le paquet de données utiles (128) de la transmission de données de type multidiffusion (124) est transmis de manière répartie en une pluralité de paquets partiels de données utiles (128_1 à 128_i), dans lequel la pluralité de paquets partiels de données utiles (128_1 à 128_i) présentent, chacun, une partie du paquet de données utiles (128), et dans lequel la pluralité de paquets partiels de données utiles (128_1 à 128_i) sont transmis de manière répartie dans le temps et/ou en fréquence selon un modèle de saut dans le temps et/ou en fréquence,
dans lequel le paquet de données de synchronisation (126) présente une information sur le modèle de saut dans le temps et/ou en fréquence,
dans lequel l'abonné (106_1) est conçu pour recevoir la pluralité de paquets partiels de données utiles (128_1 à 128_i) sur base de l'information relative au modèle de saut dans le temps et/ou en fréquence.

3. Abonné (106_1) selon l'une des revendications précédentes,
dans lequel l'abonné (106_1) est conçu pour envoyer une transmission de données en liaison montante (120) à la station de base (104) du système de communication (100) et pour recevoir de la station de base (104), de manière synchronisée dans le temps avec la transmission de données en liaison montante (120) envoyée, une transmission de données en liaison descendante (122), dans lequel la transmission de données en liaison descendante (122) présente une information de signalisation,
dans lequel l'abonné (106_1) est conçu pour recevoir le paquet de données de synchronisation (126) de la transmission de données de type multidiffusion (124) sur base de l'information de signalisation.

4. Abonné (106_1) selon la revendication 3,
dans lequel l'information de signalisation présente une information relative à un moment de transmission du paquet de données de synchronisation (126),
et/ou
dans lequel la transmission de données en liaison descendante (122) présente une information relative au modèle de saut dans le temps et/ou en fréquence du paquet de données de synchronisation (126).

5. Abonné (106_1) selon l'une des revendications précédentes,
dans lequel le paquet de données de synchronisation (126) est envoyé plusieurs fois, dans lequel une première transmission du paquet de données de synchronisation (126) et une deuxième transmission du paquet de données de synchronisation (126) sont des versions décalées l'une de l'autre dans le temps et/ou en fréquence.

6. Abonné (106_1) selon l'une des revendications précédentes,
dans lequel le paquet de données de synchronisation (126) et le paquet de données utiles (128) de la transmission de données de type multidiffusion (124) sont codés à l'aide du même code de protection contre les erreurs,
et/ou
dans lequel les paquets partiels de données de synchronisation (126_1 à 126_k) sont codés par canal, de sorte que seule une quantité partielle de la pluralité de paquets partiels de données de synchronisation (126_1 à 126_k) soit requise pour un décodage fructueux du paquet de données de synchronisation (126), dans lequel l'abonné (106_1) est conçu pour recevoir et décoder au moins une partie de la pluralité de paquets partiels de données de synchronisation (126_1 à 126_k) pour obtenir le paquet de données de synchronisation (126).

7. Abonné (106_1) selon l'une des revendications précédentes,
dans lequel l'abonné (106_1) est un noeud de capteur ou un noeud d'actionneur,
et/ou
dans lequel l'abonné (106_1) fonctionne sur batterie,
et/ou
dans lequel l'abonné (106_1) présente un élément de captage d'énergie destiné à la production d'énergie électrique.

8. Station de base (104) d'un système de communication (100),
dans laquelle la station de base (104) est conçue pour envoyer une transmission de données de type multidiffusion (124) à des abonnés (106_1 à 106_n) du système de communication (100) envoyant de manière asynchrone, dans laquelle la transmission de données de type multidiffusion (124) présente un paquet de données de synchronisation (126) et un paquet de données utiles (128) référencé dans le temps et/ou en fréquence par rapport au paquet de données de synchronisation (126), dans laquelle le paquet de données de synchronisation (126) est transmis dans une plage de fréquences (125), connue des abonnés (106_1 à 106_n), de la bande de fréquences (103) du système de communication (100),
dans laquelle la station de base (104) est conçue pour transmettre le paquet de données de synchronisation (126) de la transmission de données de type multidiffusion (124) de manière répartie en une pluralité de paquets partiels de données de synchronisation (126_1 à 126_k), dans laquelle la pluralité de paquets partiels de données de synchronisation (126_1 à 126_k) présentent, chacun, une partie du paquet de données de synchronisation (126), et dans laquelle la pluralité de paquets partiels de données de synchronisation (126_1 à 126_k) sont transmis de manière répartie dans le temps et en fréquence selon un modèle de saut dans le temps et en fréquence,
dans lequel la pluralité de paquets partiels de données de synchronisation (126_1 à 126_k) sont transmis selon le modèle de saut dans le temps et en fréquence du paquet de données de synchronisation (126) dans la plage de fréquences (125) connue des abonnés (106_1 à 106_n),
dans laquelle la plage de fréquences (125) connue des abonnés (106_1 à 106_n) correspond tout au plus à une largeur de bande de réception des récepteurs des abonnés (106_1 à 106_n),
dans laquelle la bande de fréquences utilisée par le système de communication présente une largeur de bande supérieure d'au moins un facteur de 5 à la largeur de bande de réception des récepteurs des abonnés.

9. Station de base (104) selon la revendication 8,
dans laquelle la station de base (104) est conçue pour transmettre le paquet de données utiles (128) de la transmission de données de type multidiffusion (124) de manière répartie en une pluralité de paquets partiels de données utiles (128_1 à 128_i), dans laquelle la pluralité de paquets partiels de données utiles (128_1 à 128_i) présentent, chacun, une partie du paquet de données utiles (128), et dans laquelle la pluralité de paquets partiels de données utiles (128_1 à 128_i) sont transmis de manière répartie dans le temps et/ou en fréquence selon un modèle de saut dans le temps et/ou en fréquence,
dans laquelle la station de base (104) est conçue pour pourvoir le paquet de données de synchronisation (126) d'une information relative au modèle de saut dans le temps et/ou en fréquence.

10. Station de base (104) selon l'une des revendications précédentes,
dans laquelle la station de base (104) est conçue pour recevoir une transmission de données en liaison montante (120) de l'un des abonnés (106_1) et pour envoyer, de manière synchronisée dans le temps avec la transmission de données en liaison montante (120), une transmission de données en liaison descendante (122) à l'abonné (106_1), dans laquelle la transmission de données en liaison descendante (122) présente une information de signalisation, dans laquelle l'information de signalisation signale le paquet de données de synchronisation (126).

11. Station de base (104) selon l'une des revendications précédentes,
dans laquelle la station de base (104) est conçue pour envoyer le paquet de données de synchronisation (126) plusieurs fois,
dans laquelle une première transmission du paquet de données de synchronisation (126) et une deuxième transmission du paquet de données de synchronisation (126) sont des versions décalées l'une de l'autre dans le temps et/ou en fréquence.

12. Station de base (104) selon l'une des revendications précédentes,
dans laquelle le paquet de données de synchronisation (126) et le paquet de données utiles (128) de la transmission de données de type multidiffusion (124) sont codés à l'aide du même code de protection contre les erreurs,
et/ou
dans laquelle la station de base (104) est conçue pour coder par canal les paquets partiels de données de synchronisation (126_1 à 126_k), de sorte que seule une quantité partielle de la pluralité de paquets partiels de données de synchronisation (126_1 à 126_k) soit requise pour un décodage fructueux du paquet de données de synchronisation (126).

13. Procédé permettant de faire fonctionner un abonné (106_1) envoyant de manière asynchrone d'un système de communication (100), dans lequel le procédé présente le fait de:
recevoir un paquet de données de synchronisation (126) d'une transmission de données de type multidiffusion (124) de la station de base (104) du système de communication (100), dans lequel le paquet de données de synchronisation (126) est transmis dans une plage de fréquences (125), connue de l'abonné (106_1), de la bande de fréquences (103) du système de communication (100),
recevoir, sur base du paquet de données de synchronisation, un paquet de données utiles (128) de la transmission de données de type multidiffusion (124) référencé dans le temps et/ou en fréquence par rapport au paquet de données de synchronisation (126),
dans lequel le paquet de données de synchronisation (126) de la transmission de données de type multidiffusion (124) est transmis de manière répartie en une pluralité de paquets partiels de données de synchronisation (126_1 à 126_k), dans lequel la pluralité de paquets partiels de données de synchronisation (126_1 à 126_k) présentent, chacun, une partie du paquet de données de synchronisation (126), et dans lequel la pluralité de paquets partiels de données de synchronisation (126_1 à 126_k) sont transmis de manière répartie dans le temps et en fréquence selon le modèle de saut dans le temps et en fréquence connu de l'abonné (106_1),
dans lequel la pluralité de paquets partiels de données de synchronisation (126_1 à 126_k) sont reçus sur base du modèle de saut dans le temps et en fréquence connu de l'abonné (106_1),
dans lequel la pluralité de paquets partiels de données de synchronisation (126_1 à 126_k) sont transmis dans la plage de fréquences connue de l'abonné,
dans lequel la plage de fréquences connue de l'abonné correspond tout au plus à une largeur de bande de réception d'un récepteur de l'abonné,
dans lequel la bande de fréquence utilisée par le système de communication présente une largeur de bande supérieure d'au moins le facteur de 5 à la largeur de bande de réception du récepteur de l'abonné.

14. Procédé permettant de faire fonctionner une station de base (104) d'un système de communication (100), dans lequel le procédé présente le fait de:
envoyer une transmission de données de type multidiffusion (124) à une pluralité d'abonnés envoyant de manière asynchrone (106_1 à 106_n) du système de communication (100), dans lequel la transmission de données de type multidiffusion (124) présente un paquet de données de synchronisation (126) et un paquet de données utiles (128) référencé dans le temps et/ou en fréquence (128) par rapport au paquet de données de synchronisation (126), dans lequel le paquet de données de synchronisation (126) est transmis dans une plage de fréquences (125) connue des abonnés (106_1 à 106_n) de la bande de fréquences (103) du système de communication (100),
dans lequel le paquet de données de synchronisation (126) de la transmission de données de type multidiffusion (124) est transmis de manière répartie en une pluralité de paquets partiels de données de synchronisation (126_1 à 126_k), dans lequel la pluralité de paquets partiels de données de synchronisation (126_1 à 126_k) présentent, chacun, une partie du paquet de données de synchronisation (126), et dans lequel la pluralité de paquets partiels de données de synchronisation (126_1 à 126_k) sont transmis de manière répartie dans le temps et en fréquence selon un modèle de saut dans le temps et en fréquence connu de l'abonné (106_1),
dans lequel la pluralité de paquets partiels de données de synchronisation (126_1 à 126_k) sont transmis selon le modèle de saut dans le temps et en fréquence du paquet de données de synchronisation (126) dans la plage de fréquences (125) connue des abonnés (106_1 à 106_n),
dans lequel la plage de fréquences (125) connue des abonnés (106_1 à 106_n) correspond tout au plus à une largeur de bande de réception des récepteurs des abonnés (106_1 à 106_n),
dans lequel la bande de fréquence utilisée par le système de communication présente une largeur de bande supérieure d'au moins un facteur de 5 à la largeur de bande de réception des récepteurs des abonnés.

15. Programme informatique pour mettre en oeuvre le procédé selon l'une des revendications 13 et 14 lorsque le programme informatique est exécuté sur un ordinateur, un microprocesseur ou une Radio Définie par Logiciel.
